(19) **Europäisches Patentamt / European Patent Office / Office européen des brevets**

(11) **EP 2 640 086 B1**

(12) **EUROPEAN PATENT SPECIFICATION**

(45) Date of publication and mention
of the grant of the patent:
**06.04.2016 Bulletin 2016/14**

(21) Application number: **11872892.2**

(22) Date of filing: **30.12.2011**

(51) Int Cl.:
*H04Q 11/00* (2006.01)　　*H04L 5/00* (2006.01)
*H04J 14/02* (2006.01)

(86) International application number:
**PCT/CN2011/085054**

(87) International publication number:
**WO 2013/097191 (04.07.2013 Gazette 2013/27)**

(54) **METHOD AND NODE DEVICE FOR ESTABLISHING OPTICAL CROSS CONNECTION**

VERFAHREN UND KNOTENVORRICHTUNG ZUR HERSTELLUNG EINER OPTISCHEN QUERVERBINDUNG

PROCÉDÉ ET DISPOSITIF DE NOEUD POUR ÉTABLIR UNE INTERCONNEXION OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.09.2013 Bulletin 2013/38**

(73) Proprietor: **Huawei Technologies Co., Ltd.
Longgang District
Shenzhen, Guangdong 518129 (CN)**

(72) Inventors:
• **ZI, Xiaobing
Shenzhen, Guangdong 518129 (CN)**
• **ZHANG, Fatai
Shenzhen, Guangdong 518129 (CN)**

(74) Representative: **Maiwald Patentanwalts GmbH
Elisenhof
Elisenstrasse 3
80335 München (DE)**

(56) References cited:
**CN-A- 101 610 431　　CN-A- 101 715 151
US-A1- 2009 060 512**

• **FATAI ZHANG HUAWEI OSCAR GONZALEZ DE DIOS TELEFONICA D CECCARELLI ERICSSON: "RSVP-TE Signaling Extensions in support of Flexible Grid; draft-zhang-ccamp-flexible-grid-rsvp-te-ext-00.txt", RSVP-TE SIGNALING EXTENSIONS IN SUPPORT OF FLEXIBLE GRID; DRAFT-ZHANG-CCAMP-FLEXIBLE-GRID-RSVP-TE-EX T-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 October 2011 (2011-10-17), pages 1-12, XP015078530, [retrieved on 2011-10-17]**
• **FATAI ZHANG XIAOBING ZI HUAWEI O GONZALEZ DE DIOS TELEFONICA RAMON CASELLAS CTTC: "Requirements for GMPLS Control of Flexible Grids; draft-zhang-ccamp-flexible-grid-requiremen ts-01.txt", REQUIREMENTS FOR GMPLS CONTROL OF FLEXIBLE GRIDS; DRAFT-ZHANG-CCAMP-FLEXIBLE-GRID-REQUI REMEN TS-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 27 October 2011 (2011-10-27), pages 1-16, XP015078952, [retrieved on 2011-10-27]**

**(Cont. next page)**

- IFTEKHAR HUSSAIN ABINDER DHILLON ZHONG PAN MARCO SOSA INFINERA BERT BASCH STEVE LIU ANDREW G MALIS: "Generalized Label for Super-Channel Assignment on Flexible Grid; draft-hussain-ccamp-super-channel-label-02 .txt ", GENERALIZED LABEL FOR SUPER-CHANNEL ASSIGNMENT ON FLEXIBLE GRID; DRAFT-HUSSAIN-CCAMP-SUPER-CHANNEL-LABEL-02 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 31 October 2011 (2011-10-31), pages 1-15, XP015079104, [retrieved on 2011-10-31]
- KING (EDITOR) A FARREL OLD DOG CONSULTING Y LI (EDITOR) F ZHANG ZTE R CASELLAS CTTC D: "Generalized Labels for the Flexi-Grid in Lambda-Switch-Capable (LSC) Label Switching Routers; draft-farrkingel-ccamp-flexigrid-lambda-label-01.txt", GENERALIZED LABELS FOR THE FLEXI-GRID IN LAMBDA-SWITCH-CAPABLE (LSC) LABEL SWITCHING ROUTERS; DRAFT-FARRKINGEL-CCAMP-FLEXIGRID-LAMBDA-LA BEL-01.TXT, INTERNET ENGINEERING TASK FORCE, IETF; STANDARDWORKINGDRAFT, INTERNET SOCIETY (ISOC) 4, RUE DES FALAIS, no. 1, 17 October 2011 (2011-10-17), pages 1-9, XP015078510, [retrieved on 2011-10-17]
- XIAO, SHANGDE: 'Research on Topology Aggregation Algorithm and Resource Reservation Strategy in Multi-Domain ASON' CHINESE MASTER'S THESES FULL-TEXT DATABASE 15 October 2009,
- WANG, YANG ET AL.: 'A Study of the Routing and Spectrum Allocation in Spectrum-sliced Elastic Optical Path Networks.' INFOCOM, 2011 PROCEEDINGS IEEE. 15 April 2011, pages L503 - 1511

**Description**

**FIELD OF THE INVENTION**

The present invention relates to network communication technologies, and in particular, to a method and system for establishing an optical cross-connection, and a node device.

**BACKGROUND OF THE INVENTION**

Connections in a wavelength division multiplexing network are borne by fiber links, and each connection needs to occupy certain fiber spectrum resources. Generally, available spectrum resources in a fiber are divided into fixed spectrum intervals. Each spectrum interval serves as a channel for bearing a connection. The connections borne in the same fiber have the same bandwidth. Consequently, when services with different bandwidth requirements are transmitted through a connection in a mixed way, the spectrum resources of the fiber need to be divided into channels according to the service that requires the highest bandwidth, but other services that only require a low bandwidth do not require the channel with such a high bandwidth, which wastes the fiber spectrum resources and reduces the utilization of the fiber spectrum resources.

To improve the utilization of the spectrum resources of the wavelength division multiplexing network, the spectrum resources may be divided into spectrum intervals flexibly according to the service requirement. That is, the connections borne in the same fiber may occupy different spectrum bandwidths. In practical applications, multiple subcarriers may form a connection according to the multi-carrier technology, and the spectrum bandwidth may be adjusted by changing the number of subcarriers and a modulation scheme.

Currently, it is needed to manually configure a node by a network management system to establish a multi-carrier optical cross-connection of a variable spectrum bandwidth, which leads to complicated implementation and low reliability.

FATAI ZHANG (HUAWEI) OSCAR GONZALEZ DE DIOS (TELEFONICA) D. CECCARELLI (ERICSSON): "RSVP-TE Signaling Extensions in support of Flexible Grid; draft-zhang-ccamp-flexible-grid-rsvp-te-ext-00.txt", 17 October 2011 (2011-10-17), XP015078530, disclosed the signaling extensions of GMPLS control of flexible grid network.

FATAI ZHANG XIAOBING ZI (HUAWEI) O. GONZALEZ DE DIOS (TELEFONICA) RAMON CASELLAS (CTTC): "Requirements for GMPLS Control of Flexible Grids; draft-zhang-ccamp-flexible-grid-requirements-01.txt", 27 October 2011 (2011-10-27), XP015078952, disclosed the requirements of GMPLS control of flexible grid DWDM networks.

IFTEKHAR HUSSAIN ABINDER DHILLON ZHONG PAN MARCO SOSA (INFINERA) BERT BASCH STEVE LIU ANDREW G. MALIS (VERIZON): "Generalized Label for Super-Channel Assignment on Flexible Grid; draft-hussain-ccamp-super-channel-label-02.txt", 31 October 2011 (2011-10-31), XP015079104, disclosed a super-channel label as a Super-Channel Identifier and an associated list of 12.5 GHz slices representing the optical spectrum of the super-channel. The label information can be encoded using a fixed length or variable length format. This label format can be used in GMPLS signaling and routing protocol to establish super-channel based optical label switched paths (LSPs).

D. KING A. FARREL (OLD DOG CONSULTING) Y. LI F. ZHANG (ZTE) R. CASELLAS (CTTC): "Generalized Labels for the Flexi-Grid in Lambda-Switch-Capable (LSC) Label Switching Routers; draft-farrkingel-ccamp-flexigrid-lambda-label-01.txt", 17 October 2011 (2011-10-17), XP015078510, disclosed that a new flexible wavelength grid ("flexi-grid") is being developed within the ITU-T Study Group 15 to allow selection and switching of individual lambdas chosen flexibly from a detailed, fine granularity grid of available wavelengths. This document updates the definition of GMPLS lambda labels to support the flexi-grid.

**SUMMARY OF THE INVENTION**

Embodiments of the present invention provide a method and system for establishing an optical cross-connection, and a node device to overcome problems of complicated implementation and low reliability of the prior art.

The embodiments of the present invention adopt the following technical solutions:

In one aspect, a method is provided for establishing a multi-carrier optical cross-connection, including:

determining, by a first node, the number of subcarriers, spectrum bandwidth of a single subcarrier, and non-overlap of spectrum resources between neighboring subcarriers of a connection;

obtaining, by the first node, a first set of available center frequencies of a first link according to the spectrum bandwidth of a single subcarrier, where the first link is a link between the first node and a neighboring node in a direction from the first node to a second node;

sending, by the first node, a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers; and

receiving, by the first node, a response message, extracting information on a set of center frequencies of subcarriers out of the response message, and obtaining the set of center frequencies of subcarriers of the connection; and establishing an optical cross-connection based on a spectrum range determined according to the non-overlap of spectrum resources between neighboring subcarriers, the set of center frequencies of the subcarriers, and the spectrum bandwidth of a single subcarrier, where

the set of center frequencies of the subcarriers is composed of available center frequencies with a non-overlap frequency range which are selected by the second node from a second set of available center frequencies; and the second set of available center frequencies is an intersection of sets of available center frequencies of all links traversed by the connection, where the sets of available center frequencies are obtained according to the spectrum bandwidth of a single subcarrier.

In another aspect, a method is provided for establishing a multi-carrier optical cross-connection, including:

receiving, by a second node, a request message, and extracting the number of subcarriers, information on spectrum bandwidth of a single subcarrier, subcarrier overlap attribute information, and information on a second set of available center frequencies out of the request message, where the subcarrier overlap attribute information indicates non-overlap of spectrum resources between neighboring subcarrier which is determined by a first node, the second set of available center frequencies is an intersection of sets of available center frequencies of all links traversed by a connection, and the sets of available center frequencies are obtained according to the spectrum bandwidth of a single subcarrier; and

selecting, by the second node, available center frequencies with a non-overlap frequency range from the second set of available center frequencies to form a set of center frequencies of subcarriers of the connection; and establishing an optical cross-connection based on a spectrum range determined according to the non-overlap of spectrum resources between neighboring subcarriers, the set of center frequencies of the subcarriers, and the spectrum bandwidth of a single subcarrier.

In still another aspect, a method is provided for establishing multi-carrier optical cross-connection, including:

receiving, by a third node, a request message, and extracting the number of subcarriers, information on spectrum bandwidth of a single subcarrier, subcarrier overlap attribute information, and information on a third set of available center frequencies out of the request message, where the subcarrier overlap attribute information indicates non-overlap of spectrum resources between neighboring subcarriers which is determined by a first node, the third set of available center frequencies is an intersection of sets of available center frequencies of all links traversed by a connection between the first node and the third node, and the sets of available center frequencies are obtained according to the spectrum bandwidth of a single subcarrier;

obtaining, by the third node, a set of available center frequencies of a second link according to the spectrum bandwidth of a single subcarrier, and calculating an intersection of the set of available center frequencies of the second link and the third set of available center frequencies to serve as a fourth set of available center frequencies, where the second link is a link between the third node and a neighboring node in a direction from the first node to a second node;

sending, by the third node, a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies; and

receiving, by the third node, a response message, extracting information on a set of center frequencies of subcarriers out of the response message, and obtaining the set of center frequencies of subcarriers of the connection; and establishing an optical cross-connection based on a spectrum range determined according to the non-overlap of spectrum resources between neighboring subcarriers, the set of center frequencies of the subcarriers, and the spectrum bandwidth of a single subcarrier, where

the set of center frequencies of the subcarriers is composed of available center frequencies with a non-overlap frequency range which are selected by the second node from a second set of available center frequencies; and the second set of available center frequencies is an intersection of sets of available center frequencies of all links traversed by the connection, where the sets of available center frequencies are obtained according to the spectrum bandwidth of a single subcarrier.

In still another aspect, a method is provided for establishing multi-carrier optical cross-connection, including:

determining, by a first node, the number of subcarriers, spectrum bandwidth of a single subcarrier, and an overlap range of spectrum resources between neighboring subcarriers of a connection; and determining a continuous spectrum bandwidth occupied by all subcarriers according to the number of subcarriers, the spectrum bandwidth of a single subcarrier, and the overlap range of spectrum resources between neighboring subcarriers;

obtaining, by the first node, a first set of available center frequencies of a first link according to the continuous spectrum bandwidth occupied by all subcarriers, where the first link is a link between the first node and a neighboring node in a direction from the first node to a second node;

sending, by the first node, a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and

receiving, by the first node, a response message, extracting information on a continuous center frequency of subcarriers out of the response message, and obtaining the continuous center frequency of the subcarriers; and establishing an optical cross-connection based on a spectrum range determined according to the overlap range of spectrum resources between neighboring subcarriers, the number of subcarriers, the spectrum bandwidth of a single subcarrier, and the continuous center frequency of the subcarriers, where

the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

In still another aspect, a method is provided for establishing a multi-carrier optical cross-connection, including:

receiving, by a second node, a request message, and extracting the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers; and

selecting, by the second node, an available center frequency from the second set of available center frequencies to serve as a continuous center frequency of subcarriers of the connection; and establishing an optical cross-connection based on a spectrum range determined according to the overlap range of spectrum resources between neighboring subcarriers, the number of subcarriers, the spectrum bandwidth of a single subcarrier, and the continuous center frequency of the subcarriers.

In still another aspect, a method is provided for establishing a multi-carrier optical cross-connection, including:

receiving, by a third node, a request message, and extracting the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers;

determining, by the third node, the continuous spectrum bandwidth occupied by all subcarriers according to the number of subcarriers, the spectrum bandwidth of a single subcarrier, and the overlap range of spectrum resources between neighboring subcarriers;

obtaining, by the third node, a set of available center frequencies of a second link according to the continuous spectrum bandwidth occupied by all subcarriers, and calculating an intersection of the set of available center frequencies of the second link and the third set of available center frequencies to serve as a fourth set of available center frequencies, where the second link is a link between the third node and a neighboring node in a direction from the first node to a second node;

sending, by the third node, a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies; and

receiving, by the third node, a response message, extracting information on a continuous center frequency of subcarriers out of the response message, and obtaining the continuous center frequency of the subcarriers; and establishing an optical cross-connection based on a spectrum range determined according to the overlap range of spectrum resources between neighboring subcarriers, the number of subcarriers, the spectrum bandwidth of a single subcarrier, and the continuous center frequency of the subcarriers, where

the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

In an example aspect, a method is provided for establishing an optical cross-connection, including:

determining, by a first node, the number of subcarriers, spectrum bandwidth of a single subcarrier, and an overlap range of spectrum resources between neighboring subcarriers of a connection; and determining a continuous spectrum bandwidth occupied by all subcarriers according to the number of subcarriers, the spectrum bandwidth of a single subcarrier, and the overlap range;

obtaining, by the first node, a first set of available center frequencies of a first link according to the continuous spectrum bandwidth occupied by all subcarriers, where the first link is a link between the first node and a neighboring node in a direction from the first node to a second node;

sending, by the first node, a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and

receiving, by the first node, a response message, extracting information on a minimum center frequency of subcarriers out of the response message, and obtaining the minimum center frequency of the subcarriers; and establishing an optical cross-connection based on a spectrum range determined according to the overlap range of spectrum resources between neighboring subcarriers, the number of subcarriers, the spectrum bandwidth of a single subcarrier, and the minimum center frequency of the subcarriers, where

the minimum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

In still another example aspect, a method is provided for establishing an optical cross-connection, including:

receiving, by a second node, a request message, and extracting the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers; and

selecting, by the second node, an available center frequency from the second set of available center frequencies to serve as a continuous center frequency of subcarriers of the connection, and obtaining a minimum center frequency of subcarriers according to the continuous center frequency of the subcarriers, the number of subcarriers, the spectrum bandwidth of a single subcarrier, and the overlap range of spectrum resources between neighboring subcarriers; and establishing an optical cross-connection based on a spectrum range determined according to the overlap range of spectrum resources between neighboring subcarriers, the number of subcarriers, the spectrum bandwidth of a single subcarriers, and the minimum center frequency of the subcarriers.

In still another example aspect, a method is provided for establishing an optical cross-connection, including:

receiving, by a third node, a request message, and extracting the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers;

determining, by the third node, the continuous spectrum bandwidth occupied by all subcarriers according to the number of subcarriers, the spectrum bandwidth of a single subcarrier, and the overlap range of spectrum resources between neighboring subcarriers;

obtaining, by the third node, a set of available center frequencies of a second link according to the continuous spectrum bandwidth occupied by all subcarriers, and calculating an intersection of the set of available center frequencies of the second link and the third set of available center frequencies to serve as a fourth set of available center frequencies, where the second link is a link between the third node and a neighboring node in a direction from the first node to a second node;

sending, by the third node, a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies; and

receiving, by the third node, a response message, extracting information on a minimum center frequency of subcarriers out of the response message, and obtaining the minimum center frequency of the subcarriers; and establishing an optical cross-connection based on a spectrum range determined according to the overlap range of spectrum resources between neighboring subcarriers, the number of subcarriers, the spectrum bandwidth of a single subcarrier, and the minimum center frequency of the subcarriers, where

the minimum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

In still another example aspect, a method is provided for establishing an optical cross-connection, including:

determining, by a first node, the number of subcarriers, spectrum bandwidth of a single subcarrier, and an overlap range of spectrum resources between neighboring subcarriers of a connection; and determining a continuous spectrum bandwidth occupied by all subcarriers according to the number of subcarriers, the spectrum bandwidth of a single subcarrier, and the overlap range;

obtaining, by the first node, a first set of available center frequencies of a first link according to the continuous spectrum bandwidth occupied by all subcarriers, where the first link is a link between the first node and a neighboring node in a direction from the first node to a second node;

sending, by the first node, a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and

receiving, by the first node, a response message, extracting information on a maximum center frequency of subcarriers out of the response message, and obtaining the maximum center frequency of the subcarriers; and establishing an optical cross-connection based on a spectrum range determined according to the overlap range of spectrum resources between neighboring subcarriers, the number of subcarriers, the spectrum bandwidth of a single subcarrier, and the maximum center frequency of the subcarriers, where

the maximum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

In still another example aspect, a method is provided for establishing an optical cross-connection, including:

receiving, by a second node, a request message, and extracting the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers; and

selecting, by the second node, an available center frequency from the second set of available center frequencies to serve as a continuous center frequency of subcarriers of the connection, and obtaining a maximum center frequency of subcarriers according to the continuous center frequency of the subcarriers, the number of subcarriers, the spectrum bandwidth of a single subcarrier, and the overlap range of spectrum resources between neighboring subcarriers; and establishing an optical cross-connection based on a spectrum range determined according to the overlap range of spectrum resources between neighboring subcarriers, the number of subcarriers, the spectrum bandwidth of a single subcarrier, and the maximum center frequency of the subcarriers.

In still another example aspect, a method is provided for establishing an optical cross-connection, including:

receiving, by a third node, a request message, and extracting the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers;

determining, by the third node, the continuous spectrum bandwidth occupied by all subcarriers according to the number of subcarriers, the spectrum bandwidth of a single subcarrier, and the overlap range of spectrum resources between neighboring subcarriers;

obtaining, by the third node, a set of available center frequencies of a second link according to the continuous spectrum bandwidth occupied by all subcarriers, and calculating an intersection of the set of available center frequencies of the second link and the third set of available center frequencies to serve as a fourth set of available center frequencies, where the second link is a link between the third node and a neighboring node in a direction from the first node to a second node;

sending, by the third node, a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies;

receiving, by the third node, a response message, extracting information on a maximum center frequency of subcarriers out of the response message, and obtaining the maximum center frequency of the subcarriers; and establishing an optical cross-connection based on a spectrum range determined according to the overlap range of spectrum resources between neighboring subcarriers, the number of subcarriers, the spectrum bandwidth of a single subcarrier, and the maximum center frequency of the subcarriers, where

the maximum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

In one aspect, a node device is provided, including a first determining unit, a first processing unit, a first sending unit, a first receiving unit, and a first cross-connection establishing unit, where:

the first determining unit is configured to determine the number of subcarriers, spectrum bandwidth of a single subcarrier, and non-overlap of spectrum resources between neighboring subcarriers of a connection;

the first processing unit is configured to obtain a first set of available center frequencies of a first link according to the spectrum bandwidth of a single subcarrier, where the first link is a link between the node device and a neighboring node device in a direction from the node device to a second node device;

the first sending unit is configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers;

the first receiving unit is configured to receive a response message, extract information on a set of center frequencies of subcarriers out of the response message, and obtain a set of center frequencies of the subcarriers of the connection, where the set of center frequencies of the subcarriers is composed of available center frequencies with a non-overlap frequency range which are selected by the second node device from a second set of available center frequencies; and the second set of available center frequencies is an intersection of sets of available center frequencies of all links traversed by the connection, where the sets of available center frequencies are obtained according to the spectrum bandwidth of a single subcarrier; and

the first cross-connection establishing unit is configured to establish an optical cross-connection based on a spectrum range determined according to the non-overlap of spectrum resources between neighboring subcarriers, the set of center frequencies of the subcarriers, and the spectrum bandwidth of a single subcarrier.

In another aspect, a node device is provided, including a second receiving unit, a second processing unit, and a second cross-connection establishing unit, where:

the second receiving unit is configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates non-overlap of spectrum resources between neighboring subcarriers which is determined by a first node device, the second set of available center frequencies is an intersection of sets of available center frequencies of all links traversed by a connection, and the sets of available center frequencies are obtained according to the spectrum bandwidth of a single subcarrier;

the second processing unit is configured to select available center frequencies with a non-overlap frequency range from the second set of available center frequencies to form a set of center frequencies of subcarriers of the connection; and

the second cross-connection establishing unit is configured to establish an optical cross-connection based on a spectrum range determined according to the non-overlap of spectrum resources between neighboring subcarriers, the set of center frequencies of the subcarriers, and the spectrum bandwidth of a single subcarrier.

In still another aspect, a node device is provided, including a third receiving unit, a third processing unit, a third sending unit, and a third cross-connection establishing unit, where:

the third receiving unit is configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates non-overlap of spectrum resources between neighboring subcarriers which is determined by a first node device, the third set of available center frequencies is an intersection of sets of available center frequencies of all links traversed by a connection between the first node device and the node device, and the sets of available center frequencies are obtained according to the spectrum bandwidth of a single subcarrier; and further configured to receive a response message, extract information on a set of center frequencies of subcarriers out of the response message, and obtain a set of center frequencies of the subcarriers of the connection, where the set of center frequencies of the subcarriers is composed of available center frequencies with a non-overlap frequency range which are selected by a second node device from a second set of available center frequencies, the second set of available center frequencies is an intersection of sets of available center frequencies of all links traversed by the connection, and the sets of available center frequencies are obtained according to the spectrum bandwidth of a single subcarrier;

the third processing unit is configured to obtain a set of available center frequencies of a second link according to the spectrum bandwidth of a single subcarrier, and calculate an intersection of the set of available center frequencies of the second link and the third set of available center frequencies to serve as a fourth set of available center frequencies, where the second link is a link between the node device and a neighboring node device in a direction from the first node device to the second node device;

the third sending unit is configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

the third cross-connection establishing unit is configured to establish an optical cross-connection based on a spectrum range determined according to the non-overlap of spectrum resources between neighboring subcarriers, the set of center frequencies of the subcarriers, and the spectrum bandwidth of a single subcarrier.

In still another aspect, a node device is provided, including a first determining unit, a first processing unit, a first sending unit, a first receiving unit, and a first cross-connection establishing unit, where:

the first determining unit is configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

the first processing unit is configured to obtain a first set of available center frequencies of a first link according to the continuous spectrum bandwidth occupied by all subcarriers, where the first link is a link between the node device and a neighboring node device in a direction from the node device to a second node device;

the first sending unit is configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

the first receiving unit is configured to receive a response message, extract information on a continuous center frequency of fhe subcarriers out of the response message, and obtain the continuous center frequency of the subcarriers, where the continuous center frequency of the subcarriers is an available center frequency selected by the second node device from a second set of available center frequencies, the second set of available center frequencies is an intersection of sets of available center frequencies of all links traversed by the connection, and the sets of available center frequencies are obtained according to the continuous spectrum bandwidth occupied by all subcarriers; and

the first cross-connection establishing unit is configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

In still another aspect, a node device is provided, including a second receiving unit, a second processing unit, and a second cross-connection establishing unit, where:

the second receiving unit is configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;

the second processing unit is configured to select an available center frequency from the second set of available center frequencies to serve as a continuous center frequency of subcarriers of the connection; and

the second cross-connection establishing unit is configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

In still another aspect, a node device is provided, including a third receiving unit, a third determining unit, a third processing unit, a third sending unit, and a third cross-connection establishing unit, where:

the third receiving unit is configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a continuous center frequency of the subcarriers out of the response message, and obtain the continuous center frequency of the subcarriers, where the continuous center frequency of the subcarriers is an available center frequency selected by a second node device from a second set of available center frequencies, the second set of available center frequencies is an intersection of sets of available center frequencies of all links traversed by the connection, and the sets of available center frequencies are obtained according to the continuous spectrum bandwidth occupied by all subcarriers;

the third determining unit is configured to determine the continuous spectrum bandwidth occupied by all subcarriers according to the number of subcarriers, the spectrum bandwidth of a single subcarrier, and the overlap range of spectrum resources between neighboring subcarriers;

the third processing unit is configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, where the second link is a link between the node device and a neighboring node device in a direction from the first node device to the second node device;

the third sending unit is configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

the third cross-connection establishing unit is configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

In still another example aspect, a node device is provided, including a first determining unit, a first processing unit, a first sending unit, a first receiving unit, and a first cross-connection establishing unit, where:

the first determining unit is configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

the first processing unit is configured to obtain a first set of available center frequencies of a first link according to the continuous spectrum bandwidth occupied by all subcarriers, where the first link is a link between the node device and a neighboring node device in a direction from the node device to a second node device;

the first sending unit is configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

the first receiving unit is configured to receive a response message, extract information on a minimum center frequency of the subcarriers out of the response message, and obtain the minimum center frequency of the subcarriers, where the minimum center frequency of the subcarriers is obtained by the second node device according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; and the second set of available center frequencies is an intersection of sets of available center frequencies of all links traversed by the connection, and the sets of available center frequencies are obtained according to the continuous spectrum bandwidth occupied by all subcarriers; and

the first cross-connection establishing unit is configured to establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

In still another example aspect, a node device is provided, including a second receiving unit, a second processing unit, and a second cross-connection establishing unit, where:

the second receiving unit is configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;

the second processing unit is configured to select an available center frequency from the second set of available center frequencies to serve as a continuous center frequency of subcarriers of the connection; and obtain a minimum center frequency of subcarriers according to the continuous center frequency of the subcarriers, the number of subcarriers, the spectrum bandwidth of a single subcarrier, and the overlap range of spectrum resources between neighboring subcarriers; and

the second cross-connection establishing unit is configured to establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

In still another example aspect, a node device is provided, including a third receiving unit, a third determining unit, a third processing unit, a third sending unit, and a third cross-connection establishing unit, where:

the third receiving unit is configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a minimum center frequency of the subcarriers out of the response message, and obtain the minimum center frequency of the subcarriers, where the minimum center frequency of the subcarriers is obtained by a second node device according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; the second set of available center frequencies is an intersection of sets of available center frequencies of all links traversed by the connection, and the sets of available center frequencies are obtained according to the continuous spectrum bandwidth occupied by all subcarriers;

the third determining unit is configured to determine the continuous spectrum bandwidth occupied by all subcarriers according to the number of subcarriers, the spectrum bandwidth of a single subcarrier, and the overlap range of spectrum resources between neighboring subcarriers;

the third processing unit is configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, where the second link is a link between the node device and a neighboring node device in a direction from the first node device to the second node device;

the third sending unit is configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

the third cross-connection establishing unit is configured to establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

In still another example aspect, a node device is provided, including a first determining unit, a first processing unit, a first sending unit, a first receiving unit, and a first cross-connection establishing unit, where:

the first determining unit is configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

the first processing unit is configured to obtain a first set of available center frequencies of a first link according to the continuous spectrum bandwidth occupied by all subcarriers, where the first link is a link between the node device and a neighboring node device in a direction from the node device to a second node device;

the first sending unit is configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

the first receiving unit is configured to receive a response message, extract information on a maximum center frequency of the subcarriers out of the response message, and obtain the maximum center frequency of the subcarriers, where the maximum center frequency of the subcarriers is obtained by the second node device according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; and the second set of available center frequencies is an intersection of sets of available center frequencies of all links traversed by the connection, and the sets of available center frequencies are obtained according to the continuous spectrum bandwidth occupied by all subcarriers; and

the first cross-connection establishing unit is configured to establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

In still another example aspect, a node device is provided, including a second receiving unit, a second processing unit, and a second cross-connection establishing unit, where:

the second receiving unit is configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;

the second processing unit is configured to select an available center frequency from the second set of available center frequencies to serve as a continuous center frequency of subcarriers of the connection; and obtain a maximum center frequency of subcarriers according to the continuous center frequency of the subcarriers, the number of subcarriers, the spectrum bandwidth of a single subcarrier, and the overlap range of spectrum resources between neighboring subcarriers; and

the second cross-connection establishing unit is configured to establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

In still another example aspect, a node device is provided, including a third receiving unit, a third determining unit, a third processing unit, a third sending unit, and a third cross-connection establishing unit, where:

the third receiving unit is configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a maximum center frequency of the subcarriers out of the response message, and obtain the maximum center frequency of the subcarriers, where the maximum center frequency of the subcarriers is obtained by a second node device according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; the second set of available center frequencies is an intersection of sets of available center frequencies of all links traversed by the connection, and the sets of available center frequencies are obtained according to the continuous spectrum bandwidth occupied by all subcarriers;

the third determining unit is configured to determine the continuous spectrum bandwidth occupied by all subcarriers according to the number of subcaniers, the spectrum bandwidth of a single subcarrier, and the overlap range of spectrum resources between neighboring subcarriers;

the third processing unit is configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, where the second link is a link between the node device and a neighboring node device in a direction from the first node device to the second node device;

the third sending unit is configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

the third cross-connection establishing unit is configured to establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

An example provides a system for establishing an optical cross-connection, where the system includes at least a first node device and a second node device, where:

the first node device is configured to determine the number of subcarriers, spectrum bandwidth of a single subcarrier, and non-overlap of spectrum resources between neighboring subcarriers of a connection, and obtain a first set of available center frequencies of a first link according to the spectrum bandwidth of a single subcarrier, where the first link is a link between the first node device and a neighboring node device in a direction from the first node device to the second node device; and further configured to send a request message to the neighboring node device in the direction from the first node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers; and further configured to receive a response message, extract information on a set of center frequencies of subcarriers out of the response message, obtain a set of center frequencies of subcarriers of the connection, and establish an optical cross-connection based on a spectrum range determined according to the non-overlap of spectrum resources between neighboring subcarriers, the set of center frequencies of the subcarriers, and the spectrum bandwidth of a single subcarrier; and

the second node device is configured to receive a request message, and extract the number of subcarriers, the information on the spectrum bandwidth of a single subcarrier, the subcarrier overlap attribute information, and information on a second set of available center frequencies out of the request message, where the subcarrier overlap attribute information indicates the non-overlap of spectrum resources between neighboring subcarriers which is determined by the first node device, the second set of available center frequencies is an intersection of sets of available center frequencies of all links traversed by the connection, and the sets of available center frequencies are obtained according to the spectrum bandwidth of a single subcarrier; and further configured to select available center frequencies with a non-overlap frequency range from the second set of available center frequencies to form a set of center frequencies of subcarriers of the connection, and establish an optical cross-connection based on a spectrum range determined according to the non-overlap of spectrum resources between neighboring subcarriers, the set of center frequencies of the subcarriers, and the spectrum bandwidth of a single subcarrier; and further configured to send a response message to a neighboring node device in a direction from the second node device to the first node device, where the response message carries at least the information on the set of center frequencies of the subcarriers.

In still another example aspect, a system for establishing an optical cross-connection is provided, where the system includes at least a first node device and a second node device, where:

the first node device is configured to determine the number of subcarriers, spectrum bandwidth of a single subcarrier, and an overlap range of spectrum resources between neighboring subcarriers of a connection, determine a continuous spectrum bandwidth occupied by all subcarriers according to the number of subcarriers, the spectrum bandwidth of a single subcarrier, and the overlap range of spectrum resources between neighboring subcarriers, and obtain a first set of available center frequencies of a first link according to the continuous spectrum bandwidth occupied by all subcarriers, where the first link is a link between the first node device and a neighboring node device in a direction from the first node device to the second node device; and further configured to send a request message to the neighboring node device in the direction from the first node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and further configured to receive a response message, extract information on a continuous center frequency of the subcarriers out of the response message, obtain the continuous center frequency of the subcarriers, and establish an optical cross-connection based on a spectrum range determined according to the overlap range of spectrum resources between neighboring subcarriers, the number of subcarriers, the spectrum bandwidth of a single subcarrier, and the continuous center frequency of the subcarriers; and
the second node device is configured to receive a request message, and extract the number of subcarriers, the information on the spectrum bandwidth of a single subcarrier, the subcarrier overlap attribute information, and information on a second set of available center frequencies out of the request message, where the subcarrier overlap attribute information indicates the overlap range of spectrum resources between neighboring subcarriers which is determined by the first node device, the second set of available center frequencies is an intersection of sets of available center frequencies of all links traversed by the connection, the sets of available center frequencies are obtained according to the continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers; and further configured to select an available center frequency from the second set of available center frequencies to serve as a continuous center frequency of the subcarriers of the connection, and establish an optical cross-connection based on a spectrum range determined according to the overlap range of spectrum resources between neighboring subcarriers, the number of subcarriers, the spectrum bandwidth of a single subcarrier, and the continuous center frequency of the subcarriers; and further configured to send a response message to a neighboring node device in a direction from the second node device to the first node device, where the response message carries at least the information on the continuous center frequency of the subcarriers.

In still another example aspect, a system for establishing an optical cross-connection is provided, where the system includes at least a first node device and a second node device, where:

the first node device is configured to determine the number of subcarriers, spectrum bandwidth of a single subcarrier, and an overlap range of spectrum resources between neighboring subcarriers of a connection, determine a continuous spectrum bandwidth occupied by all subcarriers according to the number of subcarriers, the spectrum bandwidth of a single subcarrier, and the overlap range of spectrum resources between neighboring subcarriers, and obtain a first set of available center frequencies of a first link according to the continuous spectrum bandwidth occupied by all subcarriers, where the first link is a link between the first node device and a neighboring node device in a direction from the first node device to the second node device; and further configured to send a request message to the neighboring node device in the direction from the first node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and further configured to receive a response message, extract information on a minimum center frequency of the subcarriers out of the response message, obtain the minimum center frequency of the subcarriers, and establish an optical cross-connection based on a spectrum range determined according to the overlap range of spectrum resources between neighboring subcarriers, the number of subcarriers, the spectrum bandwidth of a single subcarrier, and the minimum center frequency of the subcarriers; and

the second node device is configured to receive a request message, and extract the number of subcarriers, the information on the spectrum bandwidth of a single subcarrier, the subcarrier overlap attribute information, and information on a second set of available center frequencies out of the request message, where the subcarrier overlap attribute information indicates the overlap range of spectrum resources between neighboring subcarriers which is determined by the first node device, the second set of available center frequencies is an intersection of sets of available center frequencies of all links traversed by the connection, the sets of available center frequencies are obtained according to the continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers; and further configured to select an available center frequency from the second set of available center frequencies to serve as a continuous center frequency of the subcarriers of the connection, obtain the minimum center frequency of the subcarriers according to the continuous center frequency of the subcarriers, the number of subcarriers, the spectrum bandwidth of a single subcarrier, and the overlap range of spectrum resources between neighboring subcarriers, and establish an optical cross-connection based on a spectrum range determined according to the overlap range of spectrum resources between neighboring subcarriers, the number of subcarriers, the spectrum bandwidth of a single subcarrier, and the minimum center frequency of the subcarriers; and further configured to send a response message to a neighboring node device in a direction from the second node device to the first node device, where the response message carries at least the information on the minimum center frequency of the subcarriers.

In still another example aspect, a system for establishing an optical cross-connection is provided, where the system includes at least a first node device and a second node device, where:

the first node device is configured to determine the number of subcarriers, spectrum bandwidth of a single subcarrier, and an overlap range of spectrum resources between neighboring subcarriers of a connection, determine a continuous spectrum bandwidth occupied by all subcarriers according to the number of subcarriers, the spectrum bandwidth of a single subcarrier, and the overlap range of spectrum resources between neighboring subcarriers, and obtain a first set of available center frequencies of a first link according to the continuous spectrum bandwidth occupied by all subcarriers, where the first link is a link between the first node device and a neighboring node device in a direction from the first node device to the second node device; and further configured to send a request message to the neighboring node device in the direction from the first node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and further configured to receive a response message, extract information on a maximum center frequency of the subcarriers out of the response message, obtain the maximum center frequency of the subcarriers, and establish an optical cross-connection based on a spectrum range determined according to the overlap range of spectrum resources between neighboring subcarriers, the number of subcarriers, the spectrum bandwidth of a single subcarrier, and the maximum center frequency of the subcarriers; and

the second node device is configured to receive a request message, and extract the number of subcarriers, the information on the spectrum bandwidth of a single subcarrier, the subcarrier overlap attribute information, and information on a second set of available center frequencies out of the request message, where the subcarrier overlap attribute information indicates the overlap range of spectrum resources between neighboring subcarriers which is determined by the first node device, the second set of available center frequencies is an intersection of sets of available center frequencies of all links traversed by the connection, the sets of available center frequencies are obtained according to the continuous spectrum bandwidth occupied by all subcarriers, and the continuous spectrum bandwidth occupied by all subcarriers is determined according to the number of subcaniers, the spectrum bandwidth of a single subcarrier, and the overlap range of spectrum resources between neighboring subcarriers; and further configured to select an available center frequency from the second set of available center frequencies to serve as a continuous center frequency of the subcarriers of the connection, obtain the maximum center frequency of the subcarriers according to the continuous center frequency of the subcarriers, the number of subcarriers, the spectrum bandwidth of a single subcarrier, and the overlap range of spectrum resources between neighboring subcarriers, and establish an optical cross-connection based on a spectrum range determined according to the overlap range of spectrum resources between neighboring subcarriers, the number of subcarriers, the spectrum bandwidth of a single subcarrier, and the maximum center frequency of the subcarriers; and further configured to send a response message to a neighboring node device in a direction from the second node device to the first node device, where the response message carries at least the information on the maximum center frequency of the subcarriers.

The method and node device for establishing an optical cross-connection in the embodiments of the present invention can automatically establish a multi-carrier optical cross-connection with a variable spectrum bandwidth on the node, and are easy to implement and highly reliable.

## BRIEF DESCRIPTION OF THE DRAWINGS

To illustrate the technical solutions in the embodiments of the present invention, the following briefly describes the accompanying drawings required for describing the embodiments. Apparently, the accompanying drawings in the following description merely show some embodiments of the present invention.

FIG. 1a is a flowchart of a method for establishing an optical cross-connection according to an embodiment of the present invention;

FIG. 1b is a flowchart of a method for establishing an optical cross-connection according to another embodiment of the present invention;

FIG. 1c is a flowchart of a method for establishing an optical cross-connection according to still another embodiment of the present invention;

FIG. 1d is a flowchart of a method for establishing an optical cross-connection according to still another embodiment of the present invention;

FIG. 1e is a flowchart of a method for establishing an optical cross-connection according to still another embodiment of the present invention;

FIG. 1f is a flowchart of a method for establishing an optical cross-connection according to still another embodiment of the present invention;

FIG. 1g is a flowchart of a method for establishing an optical cross-connection according to an example useful for understanding the present invention;

FIG. 1h is a flowchart of a method for establishing an optical cross-connection according to still another example useful for understanding the present invention;

FIG. 1i is a flowchart of a method for establishing an optical cross-connection according to still another example useful for understanding the present invention;

FIG. 1j is a flowchart of a method for establishing an optical cross-connection according to still another example useful for understanding the present invention;

FIG. 1k is a flowchart of a method for establishing an optical cross-connection according to still another example useful for understanding the present invention;

FIG. 1l is a flowchart of a method for establishing an optical cross-connection according to still another example useful for understanding the present invention;

FIG. 2 is a schematic diagram of spectrum resources of a fiber link according to an embodiment of the present invention;

FIG. 3 is a schematic diagram of a wavelength division multiplexing network topology according to an embodiment of the present invention;

FIG. 4a is a schematic diagram of fiber spectrum resources of link A-B in a wavelength division multiplexing network according to an embodiment of the present invention;

FIG. 4b is a schematic diagram of fiber spectrum resources of link B-C in a wavelength division multiplexing network according to an embodiment of the present invention;

FIG. 5a is a schematic diagram of fiber spectrum resources of link A-B in a wavelength division multiplexing network according to another embodiment of the present invention;

FIG. 5b is a schematic diagram of fiber spectrum resources of link B-C in a wavelength division multiplexing network according to another embodiment of the present invention;

FIG. 6a shows an encapsulation format of a payload of a traffic parameter object according to an embodiment of the present invention;

FIG. 6b shows an encapsulation format of a label in a generalized label object according to an embodiment of the present invention;

FIG. 7 is a structural block diagram of a node device according to an embodiment of the present invention;

FIG. 8 is a structural block diagram of another node device according to an embodiment of the present invention;

FIG. 9 is a structural block diagram of still another node device according to an embodiment of the present invention;

FIG. 10 is a structural block diagram of still another node device according to an embodiment of the present invention;

FIG. 11 is a structural block diagram of still another node device according to an embodiment of the present invention;

FIG. 12 is a structural block diagram of still another node device according to an embodiment of the present invention; and

FIG. 13 is a schematic diagram of a system for establishing an optical cross-connection according to an example useful for understanding the present invention.

## DETAILED DESCRIPTION OF THE EMBODIMENTS

Embodiments of the present invention provide a method, a system, and a node device for establishing an optical cross-connection. In order to make the technical solutions of the present invention more comprehensible, the following describes the embodiments of the present invention in detail with reference to accompanying drawings.

It should be definite that the described embodiments are only a part of the embodiments of the present invention rather than all the embodiments. All other embodiments obtained by persons of ordinary skill in the art based on the embodiments of the present invention shall fall within the protection scope of the present invention, as defined by the appended claims.

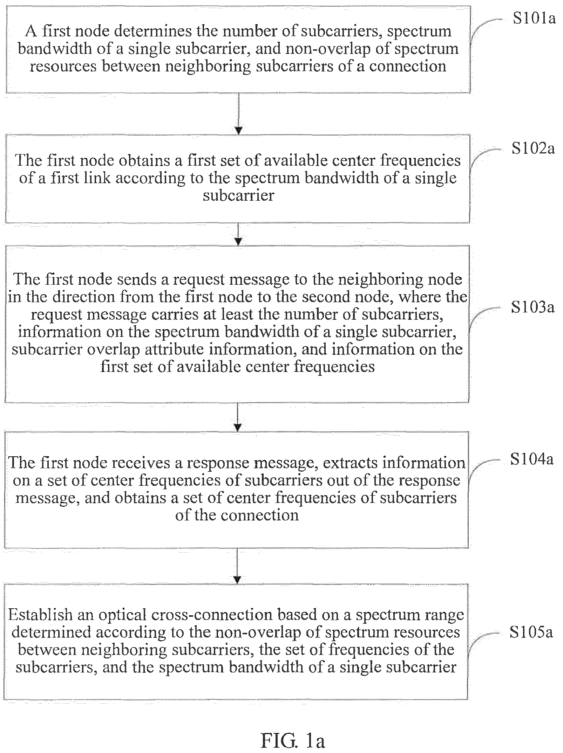

FIG. 1a shows a procedure of a method for establishing an optical cross-connection according to an embodiment of the present invention. The method includes the following steps:

Step S101a: A first node determines the number of subcarriers, spectrum bandwidth of a single subcarrier, and non-overlap of spectrum resources between neighboring subcarriers of a connection.

Step S102a: The first node obtains a first set of available center frequencies of a first link according to the spectrum bandwidth of a single subcarrier, where the first link is a link between the first node and a neighboring node in a direction from the first node to a second node.

Step S103a: The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers.

Step S104a: The first node receives a response message, extracts information on a set of center frequencies of subcarriers out of the response message, and obtains a set of center frequencies of subcarriers of the connection.

Step S105a: Establish an optical cross-connection based on a spectrum range determined according to the non-overlap of spectrum resources between neighboring subcarriers, the set of center frequencies of the subcarriers, and the spectrum bandwidth of a single subcarrier.

The set of center frequencies of the subcarriers is composed of available center frequencies with a non-overlap frequency range which are selected by the second node from a second set of available center frequencies; and the second set of available center frequencies is an intersection of sets of available center frequencies of all links traversed by the connection, where the sets of available center frequencies are obtained according to the spectrum bandwidth of a single subcarrier.

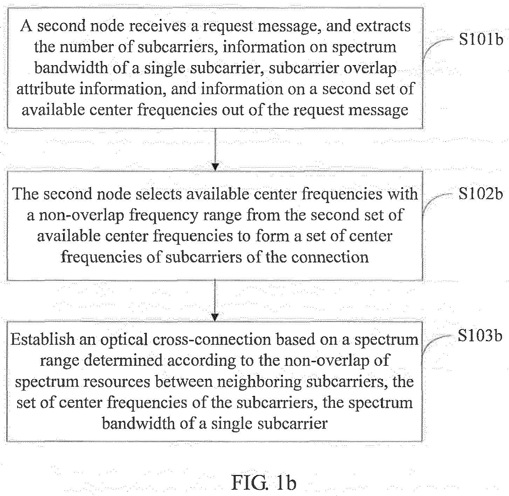

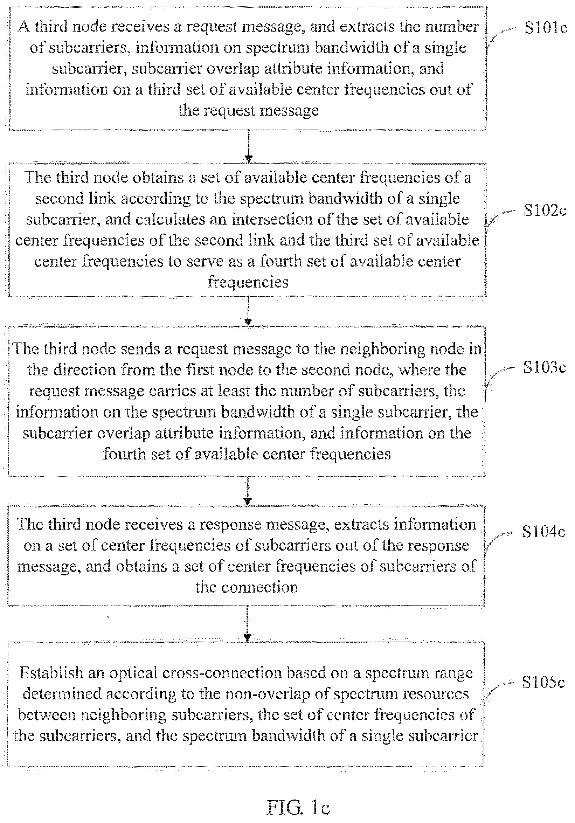

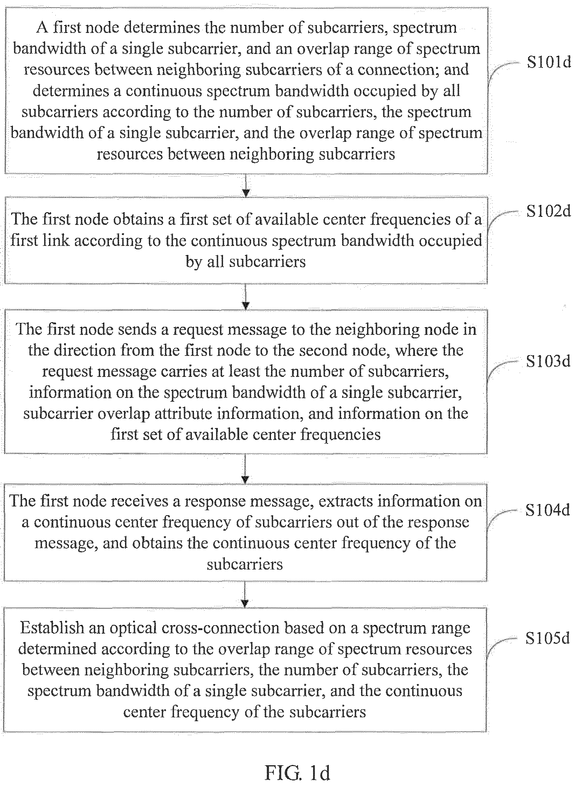

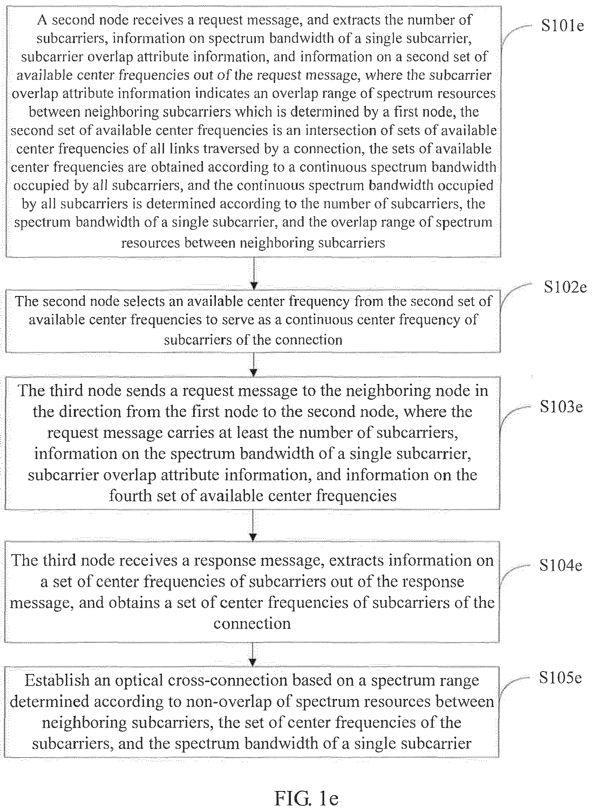

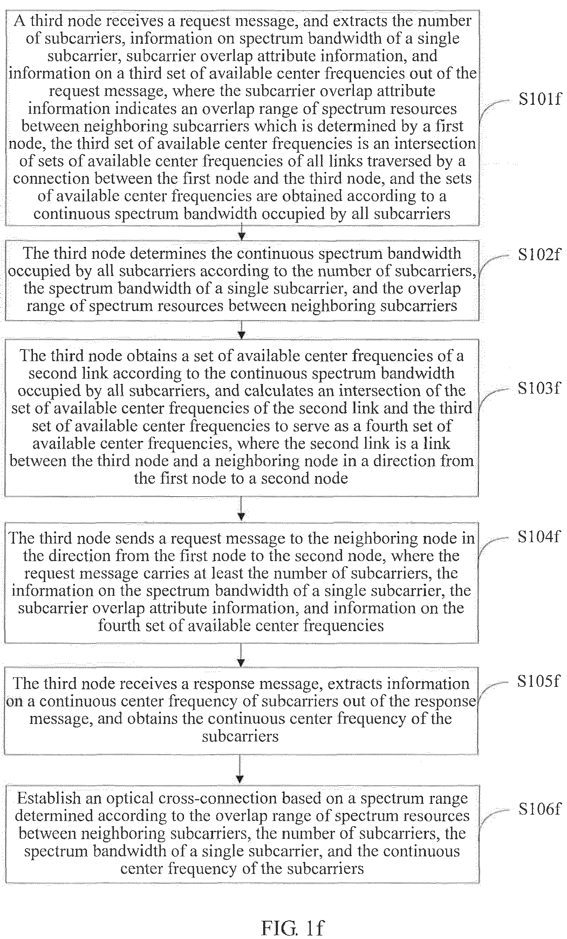

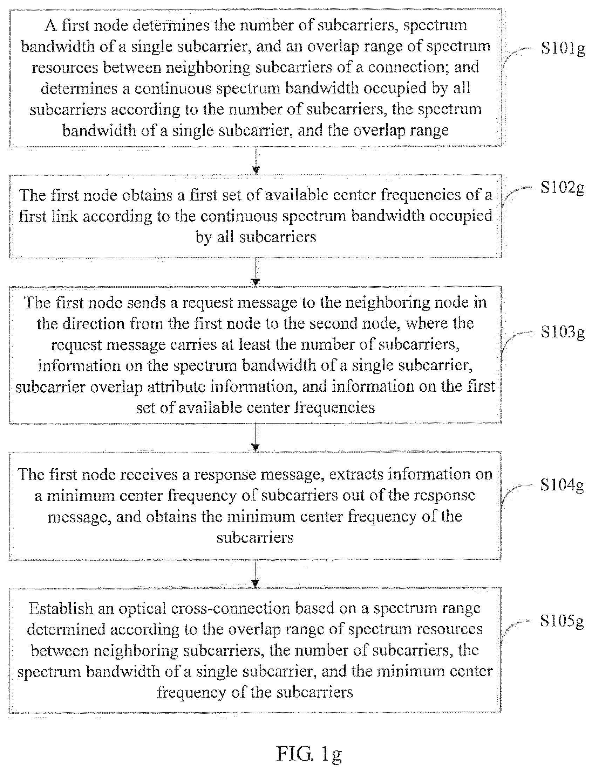

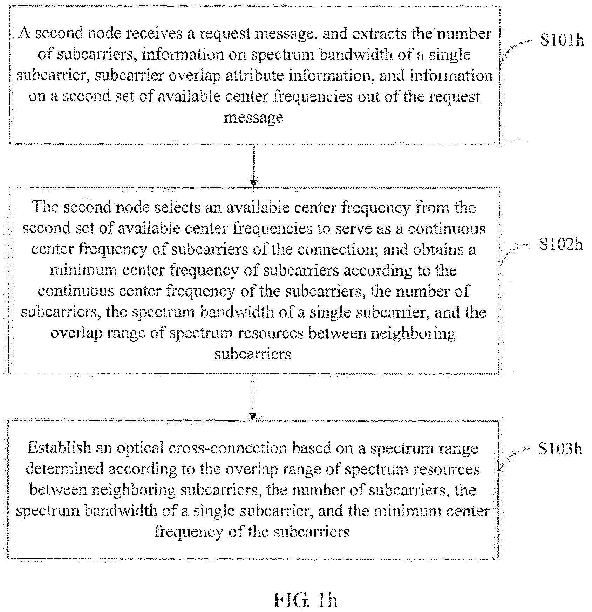

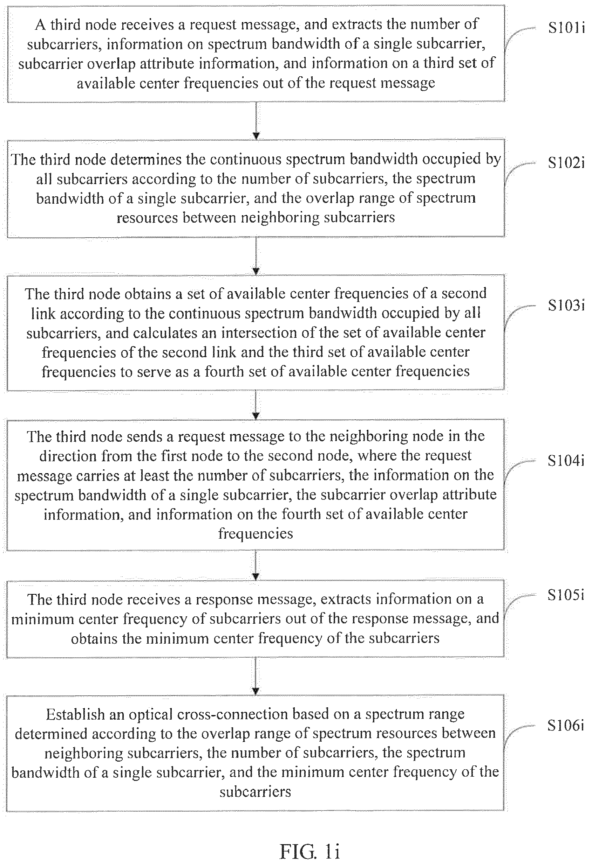

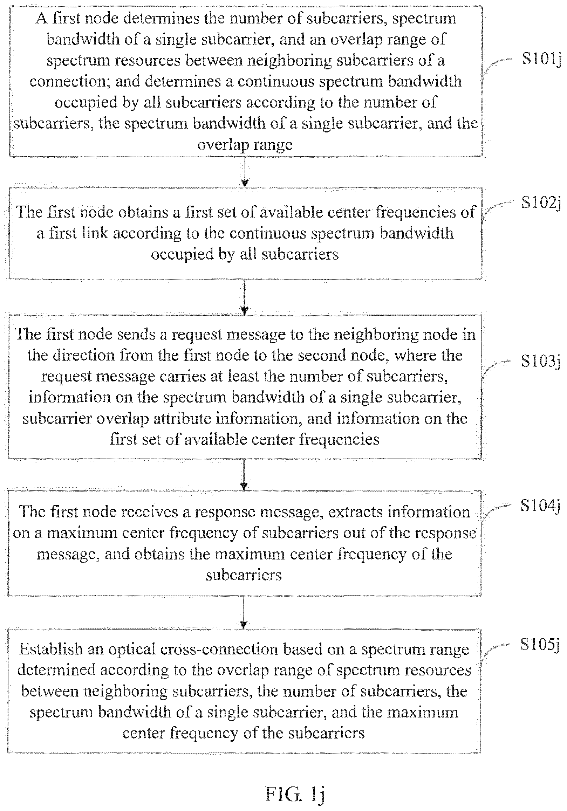

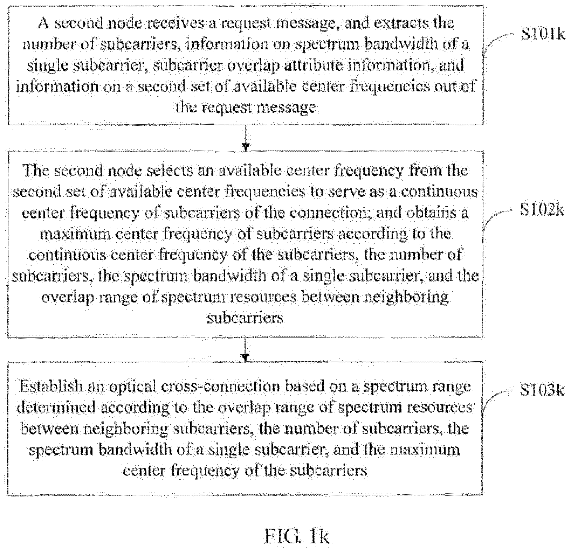

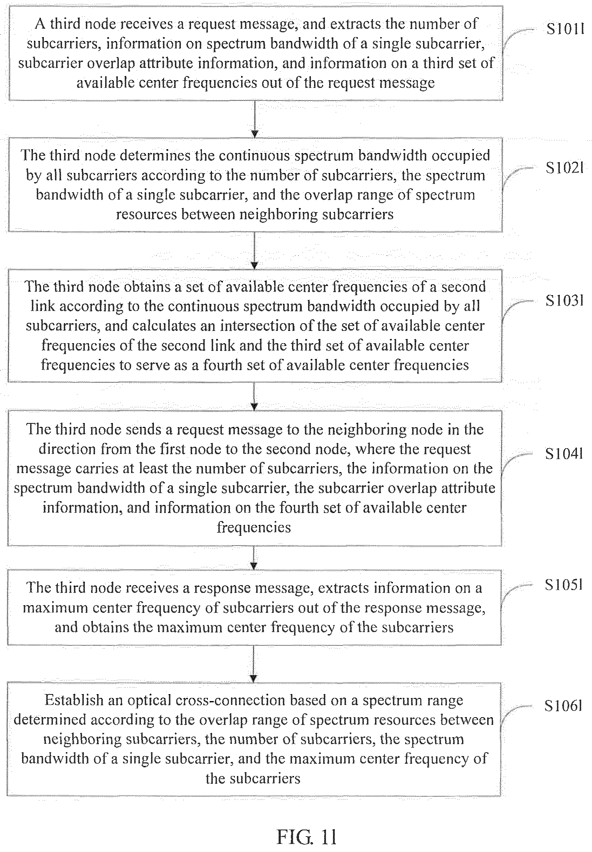

FIG. 1 b shows a procedure of a method for establishing an optical cross-connection according to another embodiment of the present invention. The method includes the following steps:

Step S101b: A second node receives a request message, and extracts the number of subcarriers, information on spectrum bandwidth of a single subcarrier, subcarrier overlap attribute information, and information on a second set of available center frequencies out of the request message, where the subcarrier overlap attribute information indicates non-overlap of spectrum resources between neighboring subcarriers which is determined by a first node, the second set of available center frequencies is an intersection of sets of available center frequencies of all links traversed by a connection, and the sets of available center frequencies are obtained according to the spectrum bandwidth of a single subcarrier.

Step S102b: The second node selects available center frequencies with a non-overlap frequency range from the second set of available center frequencies to form a set of center frequencies of subcarriers of the connection.

Step S103b: Establish an optical cross-connection based on a spectrum range determined according to the non-overlap of spectrum resources between neighboring subcarriers, the set of center frequencies of the subcarriers, and the spectrum bandwidth of a single subcarrier.

FIG. 1c shows a procedure of a method for establishing an optical cross-connection according to still another embodiment of the present invention. The method includes the following steps:

Step S101c: A third node receives a request message, and extracts the number of subcarriers, information on spectrum bandwidth of a single subcarrier, subcarrier overlap attribute information, and information on a third set of available center frequencies out of the request message, where the subcarrier overlap attribute information indicates non-overlap of spectrum resources between neighboring subcarriers which is determined by a first node, the third set of available center frequencies is an intersection of sets of available center frequencies of all links traversed by a connection between the first node and the third node, and the sets of available center frequencies are obtained according to the spectrum bandwidth of a single subcarrier.

Step S102c: The third node obtains a set of available center frequencies of a second link according to the spectrum bandwidth of a single subcarrier, and calculates an intersection of the set of available center frequencies of the second link and the third set of available center frequencies to serve as a fourth set of available center frequencies, where the second link is a link between the third node and a neighboring node in a direction from the first node to a second node.

Step S103c: The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies.

Step S104c: The third node receives a response message, extracts information on a set of center frequencies of subcarriers out of the response message, and obtains a set of center frequencies of subcarriers of the connection.

Step S105c: Establish an optical cross-connection based on a spectrum range determined according to the non-overlap of spectrum resources between neighboring subcarriers, the set of center frequencies of the subcarriers, and the spectrum bandwidth of a single subcarrier.

The set of center frequencies of the subcarriers is composed of available center frequencies with a non-overlap frequency range which are selected by the second node from a second set of available center frequencies; and the second set of available center frequencies is an intersection of sets of available center frequencies of all links traversed by the connection, where the sets of available center frequencies are obtained according to the spectrum bandwidth of a single subcarrier.

FIG. 1d shows a procedure of a method for establishing an optical cross-connection according to still another embodiment of the present invention. The method includes the following steps:

Step S101d: A first node determines the number of subcarriers, spectrum bandwidth of a single subcarrier, and an overlap range of spectrum resources between neighboring subcarriers of a connection; and determines a continuous spectrum bandwidth occupied by all subcarriers according to the number of subcarriers, the spectrum bandwidth of a single subcarrier, and the overlap range of spectrum resources between neighboring subcarriers.

Step S102d: The first node obtains a first set of available center frequencies of a first link according to the continuous spectrum bandwidth occupied by all subcarriers, where the first link is a link between the first node and a neighboring node in a direction from the first node to a second node.

Step S103d: The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers.

Step S104d: The first node receives a response message, extracts information on a continuous center frequency of subcarriers out of the response message, and obtains the continuous center frequency of the subcarriers.

Step S105d: Establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

The continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

FIG. 1e shows a procedure of a method for establishing an optical cross-connection according to still another embodiment of the present invention. The method includes the following steps:

Step S101e: A second node receives a request message, and extracts the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers.

Step S102e: The second node selects an available center frequency from the second set of available center frequencies to serve as a continuous center frequency of subcarriers of the connection.

Step S103e: Establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

FIG. 1f shows a procedure of a method for establishing an optical cross-connection according to still another embodiment of the present invention. The method includes the following steps:

Step S101f: A third node receives a request message, and extracts the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers.

Step S102f: The third node determines the continuous spectrum bandwidth occupied by all subcarriers according to the number of subcarriers, the spectrum bandwidth of a single subcarrier, and the overlap range of spectrum resources between neighboring subcarriers.

Step S103f: The third node obtains a set of available center frequencies of a second link according to the continuous spectrum bandwidth occupied by all subcarriers, and calculates an intersection of the set of available center frequencies of the second link and the third set of available center frequencies to serve as a fourth set of available center frequencies, where the second link is a link between the third node and a neighboring node in a direction from the first node to a second node.

Step S104f: The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies.

Step S105f: The third node receives a response message, extracts information on a continuous center frequency of subcarriers out of the response message, and obtains the continuous center frequency of the subcarriers.

Step S106f: Establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

The continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

FIG. 1g shows a procedure of a method for establishing an optical cross-connection according to an example useful for understanding the present invention. The method includes the following steps:

Step S101g: A first node determines the number of subcarriers, spectrum bandwidth of a single subcarrier, and an overlap range of spectrum resources between neighboring subcarriers of a connection; and determines a continuous spectrum bandwidth occupied by all subcarriers according to the number of subcarriers, the spectrum bandwidth of a single subcarrier, and the overlap range.

Step S102g: The first node obtains a first set of available center frequencies of a first link according to the continuous spectrum bandwidth occupied by all subcarriers, where the first link is a link between the first node and a neighboring node in a direction from the first node to a second node.

Step S103g: The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers.

Step S104g: The first node receives a response message, extracts information on a minimum center frequency of subcarriers out of the response message, and obtains the minimum center frequency of the subcarriers.

Step S105g: Establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

The minimum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

FIG. 1h shows a procedure of a method for establishing an optical cross-connection according to still another example useful for understanding the present invention. The method includes the following steps:

Step S101h: A second node receives a request message, and extracts the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers.

Step S102h: The second node selects an available center frequency from the second set of available center frequencies to serve as a continuous center frequency of subcarriers of the connection; and obtains a minimum center frequency of subcarriers according to the continuous center frequency of the subcarriers, the number of subcarriers, the spectrum bandwidth of a single subcarrier, and the overlap range of spectrum resources between neighboring subcarriers.

Step S103h: Establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

FIG. 1i shows a procedure of a method for establishing an optical cross-connection according to still another example useful for understanding the present invention. The method includes the following steps:

Step S101i: A third node receives a request message, and extracts the number of subcaniers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers.

Step S102i: The third node determines the continuous spectrum bandwidth occupied by all subcarriers according to the number of subcarriers, the spectrum bandwidth of a single subcarrier, and the overlap range of spectrum resources between neighboring subcarriers.

Step S103i: The third node obtains a set of available center frequencies of a second link according to the continuous spectrum bandwidth occupied by all subcarriers, and calculates an intersection of the set of available center frequencies of the second link and the third set of available center frequencies to serve as a fourth set of available center frequencies, where the second link is a link between the third node and a neighboring node in a direction from the first node to a second node.

Step S104i: The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies.

Step S105i: The third node receives a response message, extracts information on a minimum center frequency of subcarriers out of the response message, and obtains the minimum center frequency of the subcarriers.

Step S106i: Establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

The minimum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

FIG. 1j shows a procedure of a method for establishing an optical cross-connection according to still another example useful for understanding the present invention. The method includes the following steps:

Step S101j: A first node determines the number of subcarriers, spectrum bandwidth of a single subcarrier, and an overlap range of spectrum resources between neighboring subcarriers of a connection; and determines a continuous spectrum bandwidth occupied by all subcarriers according to the number of subcarriers, the spectrum bandwidth of a single subcarrier, and the overlap range.

Step S102j: The first node obtains a first set of available center frequencies of a first link according to the continuous spectrum bandwidth occupied by all subcarriers, where the first link is a link between the first node and a neighboring node in a direction from the first node to a second node.

Step S103j: The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies, and the subcarrier overlap attribute information indicates an overlap range of spectrum resources between neighboring subcarriers.

Step S104j: The first node receives a response message, extracts information on a maximum center frequency of subcarriers out of the response message, and obtains the maximum center frequency of the subcarriers.

Step S105j: Establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

The maximum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

FIG. 1k shows a procedure of a method for establishing an optical cross-connection according to still another example useful for understanding the present invention. The method includes the following steps:

Step S101k: A second node receives a request message, and extracts the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers.

Step S102k: The second node selects an available center frequency from the second set of available center frequencies to serve as a continuous center frequency of subcarriers of the connection; and obtains a maximum center frequency of subcarriers according to the continuous center frequency of the subcarriers, the number of subcarriers, the spectrum bandwidth of a single subcarrier, and the overlap range of spectrum resources between neighboring subcarriers.

Step S103k: Establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

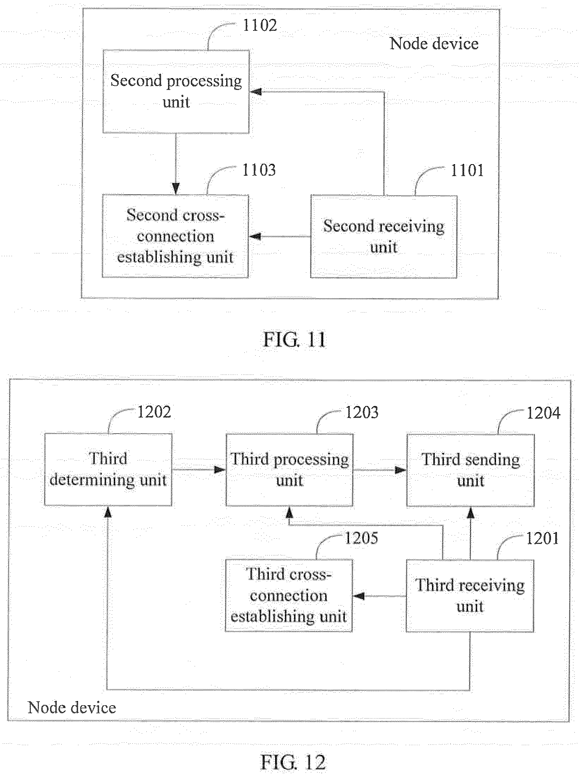

FIG. 11 shows a procedure of a method for establishing an optical cross-connection according to still another example useful for understanding the present invention. The method includes the following steps:

Step S101l: A third node receives a request message, and extracts the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers.

Step S1021: The third node determines the continuous spectrum bandwidth occupied by all subcarriers according to the number of subcarriers, the spectrum bandwidth of a single subcarrier, and the overlap range of spectrum resources between neighboring subcarriers.

Step S1031: The third node obtains a set of available center frequencies of a second link according to the continuous spectrum bandwidth occupied by all subcarriers, and calculates an intersection of the set of available center frequencies of the second link and the third set of available center frequencies to serve as a fourth set of available center frequencies, where the second link is a link between the third node and a neighboring node in a direction from the first node to a second node.

Step S1041: The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies.

Step S1051: The third node receives a response message, extracts information on a maximum center frequency of subcarriers out of the response message, and obtains the maximum center frequency of the subcarriers.

Step S1061: Establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

The maximum center frequency of the subcarriers is obtained by the second node according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node from a second set of available center frequencies; and the second set of available center frequencies is an intersection of sets of available center frequencies of all links traversed by the connection, where the sets of available center frequencies are obtained according to the continuous spectrum bandwidth occupied by all subcarriers.

The following describes the method, system, and node device for establishing an optical cross-connection disclosed herein with reference to accompanying drawings.

It should be definite that the described embodiments are only a part of the embodiments of the present invention rather than all the embodiments. All other embodiments obtained by persons of ordinary skill in the art based on the embodiments of the present invention shall fall within the protection scope of the present invention as defined by the appended claims.

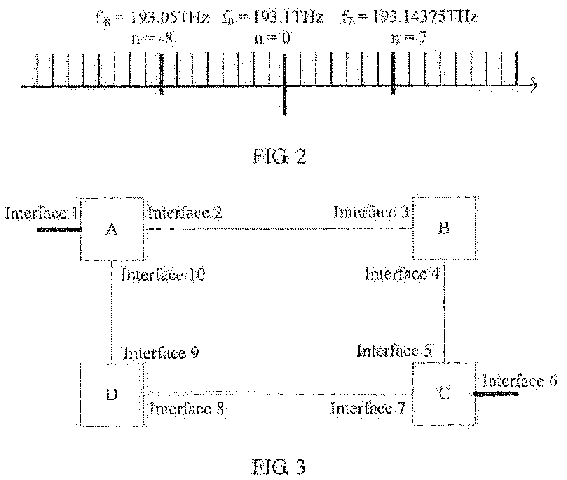

In the following embodiments, the center frequency of spectrum resources of a fiber link starts from 194.1 THz and extends toward both sides at a unit step length of 6.25 GHz. Therefore, the spectrum resources in the fiber link may be divided according to FIG. 2, and the center frequency may be calculated through the following formula (1):

$$f_n = 193.1 + (n \times 6.25/1000)(\text{THz}) \qquad\qquad (1)$$

In the formula above, n is an integer. For example, when n = 0, the center frequency f0 is 193.1 THz; when n = 7, the center frequency $f_7$ is 193.14375 THz; when n = -8, the center frequency $f_{-8}$ is 193.05 THz.

In the multi-carrier technology, multiple subcarriers make up a connection. Each subcarrier of the connection occupies spectrum bandwidth in the fiber link, and the spectrum bandwidth required by each subcarrier depends on a modulation scheme of the add/drop optical interface of the subcarrier. For example, when the modulation scheme of the add/drop optical interfaces is OFDM (Orthogonal Frequency Division Multiplexing, orthogonal frequency division multiplexing), a half of the spectrum resources between neighboring subcarriers have overlapping spectrum bandwidths; when the modulation scheme of the add/drop optical interfaces is Nyquist (Nyquist), the spectrum resources between neighboring subcarriers do not overlap.

Before the connection is established, it is necessary to determine the number of subcarriers of the connection, spectrum bandwidth of a subcarrier, and the overlap range of spectrum resources between neighboring subcarriers or the modulation scheme that are required by the connection. The modulation scheme decides the overlap range of spectrum resources between neighboring subcarriers, and the spectrum resources between neighboring subcarriers may have no overlap or have a particular overlap range. For example, the overlap range of spectrum resources between neighboring subcarriers is 1/2 of the spectrum bandwidths or 1/3 of the spectrum bandwidths, and so on. The foregoing information is generally specified by the network management system or the head node of the connection according to the modulation scheme.

On every link traversed by a connection, the connection occupies the same spectrum resources; the spectrum resources occupied by different connections on the same link never overlap.

For ease of understanding the following embodiments, meanings of symbols used in the embodiments are outlined below:

> $f_y$ represents the center frequency of subcarrier y, where y is a positive integer;
> $f_{con}$ represents the continuous center frequency of the subcarriers;
> $f_{con-min}$ represents the minimum frequency in the frequency range of the continuous center frequency of the subcarriers;
> $f_{min}$ represents the minimum center frequency of the subcarriers;
> $f_{max}$ represents the maximum center frequency of the subcarriers;
> $B_s$ represents the spectrum bandwidth of a single subcarrier;
> $B_{all}$ represents the continuous spectrum bandwidth occupied by all subcarriers;
> k represents the number of subcarriers; and
> r represents the overlap range of spectrum resources between neighboring subcarriers.

**Embodiment 1**

This embodiment of the present invention provides a method for establishing an optical cross-connection. In the wavelength division multiplexing network shown in FIG. 3, the line between nodes A, B, C, and D represents a fiber link. Interface 1 is an add/drop optical interface of node A, and interface 6 is an add/drop optical interface of node C.

In the add/drop optical interfaces, "add" refers to a transmitter side, and is generally one or more lasers; and "drop" refers to a receiver side, and is generally one or more receivers.

The network management system or the client instructs node A to establish a connection between interface 1 of node A and interface 6 of node C in FIG. 3, which requires two subcarriers whose spectrum bandwidth is 50 GHz. The spectrum resources between neighboring subcarriers do not overlap. Node A calculates, or obtains through the network management system, the route of the connection as (A, B, C), namely, (interface 1, interface 2, interface 3, interface 4, interface 5, interface 6), and therefore, node A is a source node, node B is an intermediate node, and node C is a sink node. The method includes the following detailed steps:

Step S201: Node A determines the number of subcarriers of the connection, spectrum bandwidth of a single subcarrier, and non-overlap of spectrum resources between neighboring subcarriers; obtains a set of available center frequencies of link A-B according to the spectrum bandwidth of a single subcarrier; and sends a request message to node B, where the request message carries the number of subcarriers, information on the spectrum bandwidth of a single subcarrier, subcarrier overlap attribute infonnation, and information on the set of available center frequencies.

Node A determines that: The number of subcarriers of the connection is 2, the spectrum bandwidth of a single subcarrier is 50 GHz, and the spectrum resources between neighboring subcarriers do not overlap.

The link between node A and the downstream (namely, in the direction from source node A to sink node C) neighboring node B is link A-B. Node A obtains the set of available center frequencies of link A-B according to the spectrum bandwidth of a single subcarriers 50 GHz.

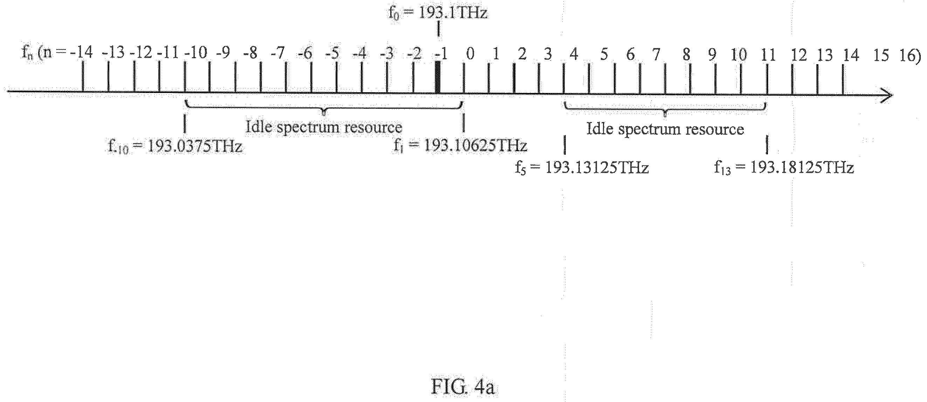

As shown in FIG. 4a, the free spectrum resources of link A-B are 193.0375 to 193.10625 THz and 193.13125 to 193.18125 THz; and the set of free center frequencies is $\{f_{-10}, f_{-9}, f_{-8}, f_{-7}, f_{-6}, f_{-5}, f_{-4}, f_{-3}, f_{-2}, f_{-1}, f0, f_1, f_5, f_6, f_7, f_8, f_9, f_{10}, f_{11}, f_{12}, f_{13}\}$.

According to the spectrum bandwidth of a single subcarrier 50 GHz, determine the frequency range of each center frequency in the set of free center frequencies:

> lowest frequency = center frequency - spectrum bandwidth/2; and
> highest frequency = center frequency + spectrum bandwidth/2.

If all spectrum resources in the frequency range of a free center frequency are free spectrum resources, determine the free center frequency as an available center frequency.

For example, the frequency range of the center frequency $f_{-7}$ = 193.05625 THz is 193.03125 to 193.08125 THz, in which 193.03125 to 193.0375 THz are not free spectrum resources, and therefore, the center frequency $f_{-7}$ is not an available center frequency; the frequency range of the center frequency $f_{-3}$ = 193.08125 THz is 193.05625 to 193.10625 THz, which are all free frequency resources, and therefore, the center frequency $f_{-3}$ is an available center frequency. By analogy, node A obtains $\{f_{-6}, f_{-5}, f_{-4}, f_{-3}, f_9\}$ as the set of available center frequencies of link A-B.

Node A sends a request message to the downstream (namely, in the direction from source node A to sink node C) neighboring node B, where the request message carries the number of subcarriers 2, the information on the spectrum bandwidth of a single subcarrier indicating that the spectrum bandwidth of a single subcarrier is 50 GHz, subcarrier overlap attribute information indicating that the spectrum resources between neighboring subcarrier do not overlap, and information on the set of available center frequencies indicating that the set of available center frequencies of link A-B is $\{f_{-6}, f_{-5}, f_{-4}, f_{-3}, f_9\}$. Additionally, the request message may carry explicit route information (interface 3, interface 4, interface 5, interface 6).

Generally, the available center frequency of the add/drop optical interface is not restricted. In the case that the available center frequency of the add/drop optical interface is restricted, the information on the available center frequency may be obtained through configuration of the network management system. In this embodiment, if the available center frequency of the add/drop optical interface (interface 1) of node A is restricted, optionally, node A obtains a set of available center frequencies $f_n$ (n = -100 to 100) that ensures a 50 GHz spectrum bandwidth. The set of available center frequencies of link A-B is $\{f_{-6}, f_{-5}, f_{-4}, f_{-3}, f_9\}$, which intersects the set of available center frequencies of interface 1, namely, $f_n$ (n = -100 to 100), to generate an intersection $\{f_{-6}, f_{-5}, f_{-4}, f_{-3}, f_9\}$ as a new set of available center frequencies. The request message sent by node A carries information on the new set of available center frequencies.

Step S202: Node B receives the request message, and extracts the number of subcarriers, the information on the spectrum bandwidth of a single subcarrier, the subcarrier overlap attribute information, and the information on the set of available center frequencies out of the request message; obtains the sets of available center frequencies of all links traversed by the connection between node A and node B; obtains the set of available center frequencies of link B-C according to the spectrum bandwidth of a single subcarrier, and calculates an intersection of the set of available center frequencies of link B-C and the sets of available center frequencies of all links traversed by the connection between node A and node B to obtain a new set of available center frequencies; sends a request message to node C, where the request message carries the number of subcarriers, the information on the spectrum bandwidth of a single subcarrier, the subcarrier overlap attribute information, and information on the new set of available center frequencies.

Node B receives the request message sent by node A, and extracts the number of subcarriers, the information on the spectrum bandwidth of a single subcarrier, the subcarrier overlap attribute information, and the information on the set of available center frequencies out of the request message; and obtains that: The number of subcarriers of the connection is 2, the spectrum bandwidth of a single subcarrier is 50 GHz, the set of available center frequencies of link A-B is $\{f_{-6}, f_{-5}, f_{-4}, f_{-3}, f_9\}$, and the spectrum resources between neighboring subcarriers of the connection do not overlap.

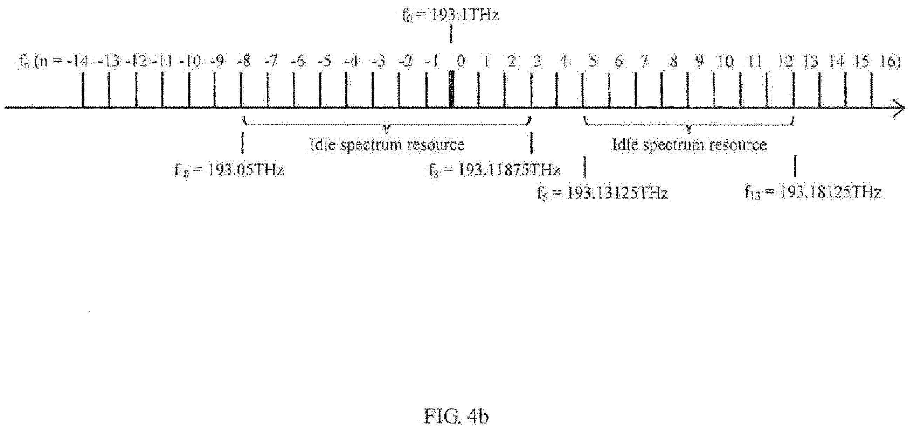

The link between node B and downstream (in the direction from source node A to sink node C) neighboring node C is link B-C. As shown in FIG. 4b, the free spectrum resources of link B-C are 193.05 to 193.11875 THz and 193.13125 to 193.18125 THz, and the set of free center frequencies is $\{f_{-8}, f_{-7}, f_{-6}, f_{-5}, f_{-4}, f_{-3}, f_{-2}, f_{-1}, f0, f_1, f_2, f_3, f_5, f_6, f_7, f_8, f_9, f_{10}, f_{11}, f_{12}, f_{13}\}$.

Node B obtains $\{f_{-4}, f_{-3}, f_{-2}, f_{-1}, f_9\}$ as a set of available center frequencies of link B-C according to the spectrum bandwidth of a single subcarrier 50 GHz in a way similar to step S201 in this embodiment.

The set of available center frequencies of link B-C intersects the sets of available center frequencies of all links traversed by the connection between node A and node B, and the intersection forms a new set of available center frequencies. In this embodiment, the set of available center frequencies of link B-C is $\{f_{-4}, f_{-3}, f_{-2}, f_{-1}, f_9\}$, which intersects the set of available center frequencies of link A-B, namely, $\{f_{-6}, f_{-5}, f_{-4}, f_{-3}, f_9\}$, to generate an intersection $\{f_{-4}, f_{-3}, f_9\}$ as a new set of available center frequencies.

Node B sends a request message to downstream (namely, in the direction from source node A to sink node C) neighboring node C, where the request message carries the number of subcarriers 2, information on the spectrum bandwidth of a single subcarrier indicating that the spectrum bandwidth of a single subcarrier is 50 GHz, the subcarrier overlap attribute information, indicating that the spectrum resources between neighboring subcarriers do not overlap, and information on the new set of available center frequencies indicating that the new set is $\{f_{-4}, f_{-3}, f_9\}$. Additionally, the request message may carry explicit route information (interface 5, interface 6).

Step S203: Node C receives the request message, and extracts the number of subcarriers, the information on the spectrum bandwidth of a single subcarrier, the subcarrier overlap attribute information, and the information on the set of available center frequencies out of the request message; obtains an intersection of the sets of available center frequencies of all links traversed by the connection; selects available center frequencies with a non-overlap frequency range from the intersection of the sets of available center frequencies of all links to form a set of center frequencies of subcarriers of the connection; establishes an optical cross-connection based on a spectrum range determined according to the set of center frequencies of subcarriers and the spectrum bandwidth of a single subcarrier; and sends a response message to node B, where the response message carries the information on the set of center frequencies of the subcarriers.

Node C receives the request message sent by node B, extracts the number of subcarriers, the information on the spectrum bandwidth of a single subcarriers, the subcarrier overlap attribute information, and the information on the set of available center frequencies out of the request message; and obtains that: The number of subcarriers of the connection is 2, the spectrum bandwidth of a single subcarrier is 50 GHz, the intersection of the sets of available center frequencies of all links (including link A-B and link B-C) traversed by the connection is $\{f_{-4}, f_{-3}, f_9\}$, and the spectrum resources between neighboring subcarriers of the connection do not overlap.

Node C selects the available center frequencies with a non-overlap frequency range from the intersection of the sets of available center frequencies of all links to form a set of center frequencies of subcarriers of the connection:

Select available center frequencies sequentially in the set of available center frequencies to form a set of center frequencies of subcarriers of the connection, where the frequency ranges of the multiple selected available center frequencies do not overlap. This embodiment does not restrict the order of selecting, and the order may be, for example, an ascending order or a descending order.

First, in this embodiment, in the set of available center frequencies {$f_{-4}$, $f_{-3}$, $f_9$}, node C selects $f_{-4}$ as a first center frequency of the subcarriers of the connection.

In the remaining available center frequencies, node C selects the available center frequency $f_{-3}$ sequentially; according to the spectrum bandwidth of a single subcarrier 50 GHz, calculates the frequency range of the available center frequency $f_{-3}$ as 193.05625 to 193.10625 THz; compares the frequency range with the frequency range of the first center frequency $f_{-4}$ of the subcarriers (193.05 to 193.1 THz) and finds that the frequency range of the available center frequency $f_{-3}$ overlaps the frequency range of the first center frequency $f_{-4}$, and determines that the available center frequency $f_{-3}$ cannot be used as a center frequency of the subcarriers.

In the remaining available center frequencies, node C selects the available center frequency $f_9$ sequentially; according to the spectrum bandwidth of a single subcarrier 50 GHz, calculates the frequency range of the available center frequency $f_9$ as 193.13125 to 193.18125 THz; compares the frequency range with the frequency range of the first center frequency $f_{-4}$ of the subcarriers (193.05 to 193.1THz) and finds that the frequency range of the available center frequency $f_9$ does not overlap the frequency range of the first center frequency $f_{-4}$, and selects the available center frequency $f_9$ as a second center frequency of the subcarriers.

The obtained set of center frequencies of the subcarriers of the connection is {$f_{-4}$, $f_9$}.

As described above, in the intersection of the sets of available center frequencies of all links, node C allocates center frequencies to the subcarriers sequentially one by one. Alternatively, the center frequencies in the intersection of the sets of available center frequencies of all links may be allocated to multiple subcarriers in other ways, for example, through an algorithm, which are not limited in this embodiment.

According to the set of center frequencies of subcarriers {$f_{-4}$, $f_9$}, node C sets the center frequencies of subcarriers of interface 6: $f_{-4}$ = 193.1 + (-4 x 6.25/1000) = 193.075 THz, and $f_9$ = 193.1 + (9 x 6.25/1000) = 193.15625 THz. Based on the non-overlap of spectrum resources between neighboring subcarriers, according to the set of center frequencies of the subcarriers of the connection {$f_{-4}$, $f_9$} and the spectrum bandwidth of a single subcarrier 50 GHz, node C determines that the spectrum ranges occupied by the two subcarriers of the connection are 193.05 to 193.1 THz and 193.13125 to 193.18125 THz, and establishes an optical cross-connection for the foregoing spectrum ranges of interface 5 and interface 6.

Node C sends a response message to upstream (namely, in the direction from sink node C to source node A) neighboring node B, where the response message carries the information on the set of center frequencies of subcarriers {$f_{-4}$, $f_9$}.

Generally, the available center frequency of the add/drop optical interface is not restricted. In the case that the available center frequency of the add/drop optical interface is restricted, the information on the available center frequency may be obtained through configuration of the network management system. In this embodiment, if the available center frequency of the add/drop optical interface (interface 6) of node C is restricted, optionally, node C obtains a set of available center frequencies $f_n$ (n = -100 to 100) that ensures a 50 GHz spectrum bandwidth. The intersection of the sets of available center frequencies of all links is {$f_{-4}$, $f_{-3}$, $f_9$}, which intersects the set of available center frequencies of interface 6, namely, $f_n$ (n = -100 to 100), to generate an intersection {$f_{-4}$, $f_{-3}$, $f_9$} as a new set of available center frequencies. Node C determines two center frequencies of the subcarriers in the new set.

Step S204: Node B receives the response message, extracts the information on the set of center frequencies of subcarriers out of the response message, obtains the set of center frequencies of subcarriers of the connection, and establishes an optical cross-connection according to the set of center frequencies of the subcarriers and the spectrum bandwidth of a single subcarrier; and sends a response message to node A, where the response message carries the information on the set of center frequencies of subcarriers.

Node B receives the response message sent by node C, extracts the information on the set of center frequencies of subcarriers out of the response message, and obtains the set of center frequencies of subcarriers of the connection, namely, {$f_{-4}$, $f_9$}. Based on the non-overlap of spectrum resources between neighboring subcarriers of the connection, according to the set of center frequencies of the subcarriers {$f_{-4}$, $f_9$} and the spectrum bandwidth of a single subcarrier 50 GHz, node B determines that the spectrum ranges occupied by the two subcarriers of the connection are 193.05 to 193.1 THz and 193.13125 to 193.18125 THz, and establishes an optical cross-connection for the foregoing spectrum ranges of interface 3 and interface 4.

Node B sends a response message to upstream (namely, in the direction from sink node C to source node A) neighboring node A, where the response message carries the information on the set of center frequencies of subcarriers {$f_{-4}$, $f_9$}.

Step S205: Node A receives the response message, extracts the information on the set of center frequencies of subcarriers out of the response message, and obtains the set of center frequencies of subcarriers of the connection; and establishes an optical cross-connection based on a spectrum range determined according to the set of center frequencies of the subcarriers and the spectrum bandwidth of a single subcarrier.

Node A receives the response message sent by node B, extracts the information on the set of center frequencies of subcarriers out of the response message, and obtains the set of center frequencies of subcarriers of the connection, namely, $\{f_{-4}, f_9\}$.

According to the set of center frequencies of subcarriers $\{f_{-4}, f_9\}$, node A sets the center frequencies of subcarriers of interface 1: $f_{-4} = 193.1 + (-4 \times 6.25/1000) = 193.075$ THz, and $f_9 = 193.1 + (9 \times 6.25/1000) = 193.15625$ THz. Based on the non-overlap of spectrum resources between neighboring subcarriers of the connection, according to the set of center frequencies of the subcarriers $\{f_{-4}, f_9\}$ and the spectrum bandwidth of a single subcarrier 50 GHz, node A determines that the spectrum ranges occupied by the two subcarrier of the connection are 193.05 to 193.1 THz and 193.13125 to 193.18125 THz, and establishes an optical cross-connection for the foregoing spectrum ranges of interface 1 and interface 2.

**Embodiment 2**

This embodiment of the present invention provides a method for establishing an optical cross-connection. In the wavelength division multiplexing network shown in FIG. 3, the line between nodes A, B, C, and D represents a fiber link. Interface 1 is an add/drop optical interface of node A, and interface 6 is an add/drop optical interface of node C.

The network management system or the client instructs node A to establish a connection between interface 1 of node A and interface 6 of node C in FIG. 3, which requires two subcarriers whose spectrum bandwidth is 50 GHz. A half of the spectrum resources between neighboring subcarriers have overlapping spectrum bandwidths.

Node A calculates, or obtains through the network management system, the route of the connection as (A, B, C), namely, (interface 1, interface 2, interface 3, interface 4, interface 5, interface 6), and therefore, node A is a source node, node B is an intermediate node, and node C is a sink node. The method includes the following detailed steps:

Step S301: Node A determines the number of subcarriers of the connection, spectrum bandwidth of a single subcarrier, and overlap range of spectrum resources between neighboring subcarriers; determines continuous spectrum bandwidth occupied by all subcarriers; obtains a set of available center frequencies of link A-B according to the continuous spectrum bandwidth occupied by all subcarriers; and sends a request message to node B, where the request message carries the number of subcarriers, information on the spectrum bandwidth of a single subcarrier, subcarrier overlap attribute information, and information on the set of available center frequencies.

Node A determines that: The number of subcarriers of the connection is 2, the spectrum bandwidth of a single subcarrier is 50 GHz, and the overlap range of spectrum resources between neighboring subcarriers is 1/2 of the spectrum bandwidths.

The continuous spectrum bandwidth occupied by all subcarriers of the connection may be calculated through the following formula (2):

$$B_{all} = B_s + (k - 1) \times B_s \times (1 - r) \qquad (2)$$

According to the number of subcarriers, which is 2, the spectrum bandwidth of a single subcarrier, which is 50 GHz, and the overlap range of spectrum resources between neighboring subcarriers, which is 1/2 of the spectrum bandwidths, node A determines that the continuous spectrum bandwidth occupied by all subcarriers of the connection is 75 GHz.

The link between node A and the downstream (namely, in the direction from source node A to sink node C) neighboring node B is link A-B. Node A obtains the set of available center frequencies of link A-B according to the continuous spectrum bandwidth 75 GHz occupied by all subcarriers.

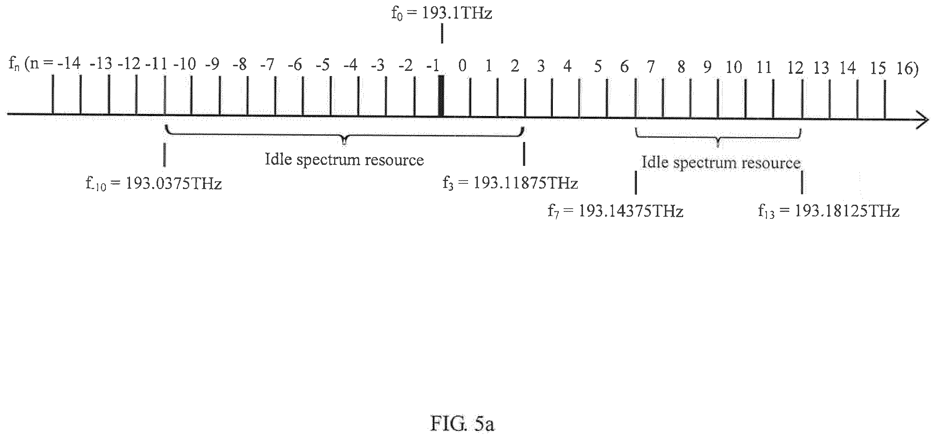

As shown in FIG. 5a, the free spectrum resources of link A-B are 193.0375 to 193.11875 THz and 193.14375 to 193.18125 THz; and the set of free center frequencies is $\{f_{-10}, f_{-9}, f_{-8}, f_{-7}, f_{-6}, f_{-5}, f_{-4}, f_{-3}, f_{-2}, f_{-1}, f0, f_1, f_2, f_3, f_7, f_8, f_9, f_{10}, f_{11}, f_{12}, f_{13}\}$.

According to the continuous spectrum bandwidth 75 GHz occupied by all subcarriers, determine the frequency range of each center frequency in the set of free center frequencies:

lowest frequency = center frequency - spectrum bandwidth/2; and
highest frequency = center frequency + spectrum bandwidth/2.

If all spectrum resources in the frequency range of a free center frequency are free spectrum resources, determine the free center frequency as an available center frequency.

For example, the frequency range of the center frequency $f_{-7}$ = 193.05625 THz is 193.01875 to 193.09375 THz, in which 193.01875 to 193.0375 THz are not free spectrum resources, and therefore, the center frequency $f_{-7}$ is not an available center frequency; the frequency range of the center frequency $f_{-3}$ = 193.08125 THz is 193.04375 to 193.11875 GHz, which are all free frequency resources, and therefore, the center frequency $f_{-3}$ is an available center frequency. By analogy, node A obtains $\{f_{-4}, f_{-3}\}$ as the set of available center frequencies of link A-B.

Node A sends a request message to the downstream (namely, in the direction from source node A to sink node C) neighboring node B, where the request message carries the number of subcarriers 2, information on the spectrum bandwidth of a single subcarrier indicating that the spectrum bandwidth of a single subcarrier is 50 GHz, subcarrier overlap attribute information indicating that the overlap range of spectrum resources between neighboring subcarriers is 1/2 of the spectrum bandwidths, and information on the set of available center frequencies indicating that the set is $\{f_{-4}, f_{-3}\}$. Additionally, the request message may carry explicit route information (interface 3, interface 4, interface 5, interface 6).

Generally, the available center frequency of the add/drop optical interface is not restricted. In the case that the available center frequency of the add/drop optical interface is restricted, the information on the available center frequency may be obtained through configuration of the network management system. In this embodiment, if the available center frequency of the add/drop optical interface (interface 1) of node A is restricted, optionally, node A obtains a set of available center frequencies $f_n$ (n = -100 to 100) that ensures a 75 GHz spectrum bandwidth. The set of available center frequencies of link A-B is $\{f_{-4}, f_{-3}\}$, which intersects the set of available center frequencies of interface 1, namely, $f_n$ (n = -100 to 100), to generate an intersection $\{f_{-4}, f_{-3}\}$ as a new set of available center frequencies. The request message sent by node A carries information on the new set of available center frequencies.

Step S302: Node B receives the request message, and extracts the number of subcarriers, the information on the spectrum bandwidth of a single subcarrier, the subcarrier overlap attribute information, and the informations on the set of available center frequencies out of the request message; obtains the sets of available center frequencies of all links traversed by the connection between node A and node B; obtains the set of available center frequencies of link B-C according to the continuous spectrum bandwidth occupied by all subcarriers, and calculates an intersection of the set of available center frequencies of link B-C and the sets of available center frequencies of all links traversed by the connection between node A and node B to obtain a new set of available center frequencies; sends a request message to node C, where the request message carries the number of subcarriers, the information on the spectrum bandwidth of a single subcarrier, the subcarrier overlap attribute information, and information on the new set of available center frequencies.

Node B receives the request message sent by node A, and extracts the number of subcarriers, the information on the spectrum bandwidth of a single subcarrier, the subcarrier overlap attribute information, and the information on the set of available center frequencies out of the request message; obtains that: The number of subcarriers of the connection is 2, the spectrum bandwidth of a single subcarrier is 50 GHz, the overlap range of spectrum resources between neighboring subcarriers is 1/2 of the spectrum bandwidths, and the set of available center frequencies of link A-B is $\{f_{-4}, f_{-3}\}$.

According to the number of subcarriers, which is 2, the spectrum bandwidth of a single subcarrier, which is 50 GHz, and the overlap range of spectrum resources between neighboring subcarriers, which is 1/2 of the spectrum bandwidths, node B determines the continuous spectrum bandwidth occupied by all subcarriers. According to the method of calculating the continuous spectrum bandwidth occupied by all subcarriers of the connection in step S301 in this embodiment, node B determines that the continuous spectrum bandwidth occupied by two subcarriers of the connection is 75 GHz.

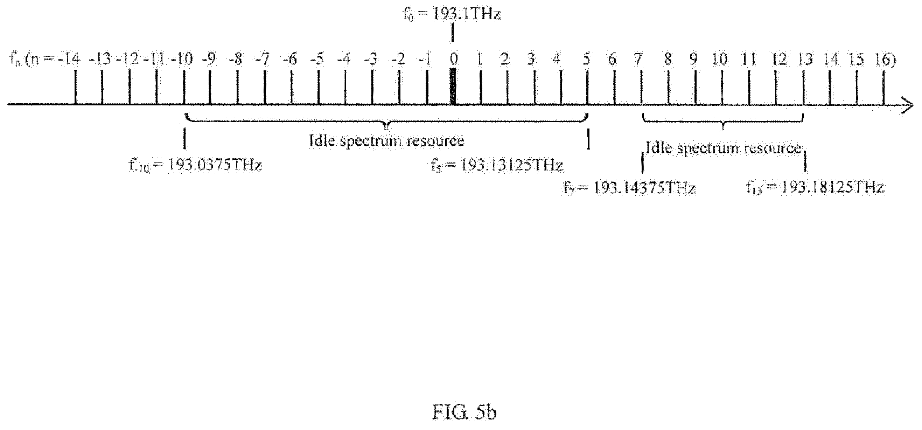

The link between node B and downstream (in the direction from source node A to sink node C) neighboring node C is link B-C. As shown in FIG. 5b, the free spectrum resources of link B-C are 193.0375 to 193.13125 THz and 193.14375 to 193.18125 THz, and the set of free center frequencies is $\{f_{-10}, f_{-9}, f_{-8}, f_{-7}, f_{-6}, f_{-5}, f_{-4}, f_{-3}, f_{-2}, f_{-1}, f0, f_1, f_2, f_3, f_4, f_5, f_7, f_8, f_9, f_{10}, f_{11}, f_{12}, f_{13}\}$.

Node B obtains $\{f_{-4}, f_{-3}, f_{-2}, f_{-1}\}$ as a set of available center frequencies of link B-C according to the continuous spectrum bandwidth 75 GHz occupied by all subcarriers in a way similar to step S301 in this embodiment.

The set of available center frequencies of link B-C is $\{f_{-4}, f_{-3}, f_{-2}, f_{-1}\}$, which intersects the set of available center frequencies of all links traversed by the connection between node A and node B, namely, $\{f_{-4}, f_{-3}\}$, to generate an intersection $\{f_{-4}, f_{-3}\}$ as a new set of available center frequencies.

Node B sends a request message to downstream (namely, in the direction from source node A to sink node C) neighboring node C, where the request message carries the number of subcarriers 2, the information on the spectrum bandwidth of a single subcarrier indicating that the spectrum bandwidth of a single subcarrier is 50 GHz, the subcarrier overlap attribute information indicating that the overlap range of spectrum resources between neighboring subcarriers is 1/2 of the spectrum bandwidths, and information on the new set of available center frequencies indicating that the new set is {$f_{-4}$, $f_{-3}$}. Additionally, the request message may carry explicit route information (interface 5, interface 6).

Step S303: Node C receives the request message, and extracts the number of subcarriers, the information on the spectrum bandwidth of a single subcarrier, the subcarrier overlap attribute information, and the information on the set of available center frequencies out of the request message; obtains an intersection of the sets of available center frequencies of all links traversed by the connection; in the intersection of the sets of available center frequencies of all links, selects an available center frequency as the continuous center frequency of subcarriers of the connection; establishes an optical cross-connection based on a spectrum range determined according to the overlap range of spectrum resources between neighboring subcarriers, the number of subcarriers, the spectrum bandwidth of a single subcarrier, and the continuous center frequency of the subcarriers; and sends a response message to node B, where the response message carries the information on the continuous center frequency of the subcarriers.

Node C receives the request message sent by node B, and extracts the number of subcarriers, the information on the spectrum bandwidth of a single subcarrier, the subcarrier overlap attribute information, and the information on the set of available center frequencies out of the request message; and obtains that: The number of subcarriers of the connection is 2, the spectrum bandwidth of a single subcarrier is 50 GHz, the overlap range of spectrum resources between neighboring subcarriers is 1/2 of the spectrum bandwidths, and the intersection of the sets of available center frequencies of all links (including link A-B and link B-C) traversed by the connection is {$f_{-4}$, $f_{-3}$}.

In the intersection {$f_{-4}$, $f_{-3}$} of the sets of available center frequencies of all links, node C selects an available center frequency as the continuous center frequency of the subcarriers of the connection. This embodiment does not restrict the policy of selecting. For example, a random center frequency, a minimum center frequency, or a maximum center frequency may be selected.

In this embodiment, in the intersection {$f_{-4}$, $f_{-3}$} of the sets of available center frequencies of all links, node C selects an available center frequency $f_{-3}$ as the continuous center frequency of the subcarriers of the connection.

Based on the overlap range of spectrum resources between neighboring subcarriers, the number of subcarriers, the spectrum bandwidth of a single subcarrier, and the continuous center frequency of the subcarriers, the center frequency of the subcarriers of the connection can be calculated through the following formula (3):

$$f_y = f_{con\text{-}min} + y \times B_s \times (1 - r) = f_{con} - B_{all}/2 + y \times B_s \times (1 - r)$$
$$= f_{con} - (B_s + (k - 1) \times B_s \times (1 - r))/2 + y \times B_s \times (1 - r) \tag{3}$$

Based on the overlap range of spectrum resources between neighboring subcarriers of the connection which is 1/2 of the spectrum bandwidths, the number of subcarriers 2, the spectrum bandwidth of a single subcarrier 50 GHz, and the continuous center frequency of the subcarriers $f_{-3}$, node C calculates the center frequency of two subcarriers as 193.06875 THz ($f_{-5}$) and 193.09375 THz ($f_{-1}$), and obtains {$f_{-5}$, $f_{-1}$} as the set of center frequencies of the subcarriers of the connection. According to the set of center frequencies of subcarriers {$f_{-5}$, $f_{-1}$}, node C sets the center frequencies of subcarriers of interface 6: f-5 = 193.1 + (-5 x 6.25/1000) = 193.06875 THz, and $f_{-1}$ = 193.1 + (-1 x 6.25/1000) = 193.09375 THz.

Node C obtains the continuous center frequency $f_{-3}$ of the subcarriers of the connection, the minimum center frequency $f_{-5}$ of the subcarriers, and the maximum center frequency $f_{-1}$ of the subcarriers.

Based on the overlap range of spectrum resources between neighboring subcarriers which is 1/2 of the spectrum bandwidths, the number of subcarriers 2, the spectrum bandwidth of a single subcarrier 50 GHz, and the continuous center frequency of the subcarriers $f_{-3}$, node C determines the spectrum range occupied by two subcarriers of the connection through the following formula (4):

$$\text{minimum frequency} = f_{con} - B_{all}/2 = f_{con} - (B_s + (k - 1) \times B_s \times (1 - r))/2;$$
$$\text{maximum frequency} = f_{con} + B_{all}/2 = f_{con} + (B_s + (k - 1) \times B_s \times (1 - r))/2. \tag{4}$$

Node C determines that the frequency range occupied by two subcarriers of the connection is 193.04375 to 193.11875 THz, and establishes an optical cross-connection for the foregoing spectrum range of interface 5 and interface 6.

Node C sends a response message to upstream (namely, in the direction from sink node C to source node A) neighboring node B, where the response message carries the information on the continuous center frequency of subcarriers $f_{-3}$.

Generally, the available center frequency of the add/drop optical interface is not restricted. In the case that the available center frequency of the add/drop optical interface is restricted, the information on the available center frequency may be obtained through configuration of the network management system. In this embodiment, if the available center frequency of the add/drop optical interface (interface 6) of node A is restricted, optionally, node A obtains a set of available center frequencies $f_n$ (n = -100 to 100) that ensures a 75 GHz spectrum bandwidth. The intersection of the sets of available center frequencies of all links is $\{f_{-4}, f_{-3}\}$, which intersects the set of available center frequencies of interface 6, namely, $f_n$ (n = -100 to 100), to generate an intersection $\{f_{-4}, f_{-3}\}$ as a new set of available center frequencies. Node C determines a continuous center frequency of the subcarriers in the new set.

Step S304: Node B receives the response message, extracts the information on the continuous center frequency of subcarriers out of the response message, and obtains the continuous center frequency of the subcarriers; establishes an optical cross-connection based on a spectrum range determined according to the overlap range of spectrum resources between neighboring subcarriers, the number of subcarriers, the spectrum bandwidth of a single subcarrier, and the continuous center frequency of the subcarriers; and sends a response message to node A, where the response message carries the information on the continuous center frequency of the subcarriers.

Node B receives the response message sent by node C, extracts the information on the continuous center frequency of subcarriers out of the response message, and obtains the continuous center frequency of the subcarriers $f_{-3}$.

In a way similar to step S303 in this embodiment, based on the overlap range of spectrum resources between neighboring subcarriers which is 1/2 of the spectrum bandwidths, the number of subcarriers 2, the spectrum bandwidth of a single subcarrier 50 GHz, and the continuous center frequency of the subcarriers $f_{-3}$, node B determines 193.04375 to 193.11875 THz as the spectrum range occupied by two subcarriers of the connection through formula (4), and establishes an optical cross-connection for the foregoing spectrum range of interface 3 and interface 4.

Node B sends a response message to upstream (namely, in the direction from sink node C to source node A) neighboring node A, where the response message carries the information on the continuous center frequency of subcarriers $f_{-3}$.

Step S305: Node A receives the response message, extracts the information on the continuous center frequency of subcarriers out of the response message, and obtains the continuous center frequency of the subcarriers; and establishes an optical cross-connection based on a spectrum range determined according to the overlap range of spectrum resources between neighboring subcarriers, the number of subcarriers, the spectrum bandwidth of a single subcarrier, and the continuous center frequency of the subcarriers.

Node A receives the response message sent by node B, extracts the information on the continuous center frequency of subcarriers out of the response message, and obtains the continuous center frequency of the subcarriers $f_{-3}$.

In a way similar to step S303 in this embodiment, based on the overlap range of spectrum resources between neighboring subcarriers which is 1/2 of the spectrum bandwidths, the number of subcarriers 2, the spectrum bandwidth of a single subcarrier 50 GHz, and the continuous center frequency of the subcarriers $f_{-3}$, node A determines 193.04375 to 193.11875 THz as the spectrum range occupied by the two subcarriers of the connection through formula (4), and establishes an optical cross-connection for the foregoing spectrum range of interface 1 and interface 2.

In a way similar to step S303 in this embodiment, based on the overlap range of spectrum resources between neighboring subcarriers of the connection which is 1/2 of the spectrum bandwidths, the number of subcarriers 2, the spectrum bandwidth of a single subcarrier 50 GHz, and the continuous center frequency of the subcarriers $f_{-3}$, node A calculates the center frequencies of the two subcarriers of the connection as 193.06875 THz ($f_{-5}$) and 193.09375 THz ($f_{-1}$) through formula (3), and obtains $\{f_{-5}, f_{-1}\}$ as the set of center frequencies of the subcarriers of the connection. According to the set of center frequencies of subcarriers $\{f_{-5}, f_{-1}\}$, node A sets the center frequencies of subcarriers of interface 1: f-5 = 193.1 + (-5 x 6.25/1000) = 193.06875 THz, and $f_{-1}$ = 193.1 + (-1 x 6.25/1000) = 193.09375 THz.

In steps S303, S304, and S305 of this embodiment, node C determines $f_{-3}$ as the continuous center frequency of the subcarriers of the connection, and sends a response message that carries the information on the continuous center frequency of the subcarriers $f_{-3}$ to node B and node A; node C, node B, and node A establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

Alternatively, node C may determine $f_{-3}$ as the continuous center frequency of the subcarriers of the connection, obtain $f_{-5}$ as the minimum center frequency of the subcarriers according to the continuous center frequency of the subcarriers, the number of subcarriers, the spectrum bandwidth of a single subcarrier, and the overlap range of spectrum resources between neighboring subcarriers, and send a response message that carries the information on the minimum center frequency of the subcarriers $f_{-5}$ to node B and node A; node C, node B, and node A establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

As an example method, steps S301 and S302 remain unchanged, and steps S303', S304', and S305' replace steps S303, S304, and S305:

Step S303': Node C receives the request message, and extracts the number of subcarriers, the information on the spectrum bandwidth of a single subcarrier, the subcarrier overlap attribute information, and the information on the set of available center frequencies out of the request message; obtains an intersection of the sets of available center frequencies of all links traversed by the connection; in the intersection of the sets of available center frequencies of all links, selects an available center frequency as the continuous center frequency of subcarriers of the connection, and obtains a minimum center frequency of the subcarriers according to the continuous center frequency of the subcarriers, the number of subcarriers, the spectrum bandwidth of a single subcarrier, and the overlap range of spectrum resources between neighboring subcarriers; establishes an optical cross-connection based on a spectrum range determined according to the overlap range of spectrum resources between neighboring subcarriers, the number of subcarriers, the spectrum bandwidth of a single subcarrier, and the minimum center frequency of the subcarriers; and sends a response message to node B, where the response message carries the information on the minimum center frequency of the subcarrier.

Node C receives the request message sent by node B, and extracts the number of subcarriers, the information on the spectrum bandwidth of a single subcarrier, the subcarrier overlap attribute information, and the information on the set of available center frequencies out of the request message; and obtains that: The number of subcarriers of the connection is 2, the spectrum bandwidth of a single subcarrier is 50 GHz, the overlap range of spectrum resources between neighboring subcarriers is 1/2 of the spectrum bandwidths, and the intersection of the sets of available center frequencies of all links (including link A-B and link B-C) traversed by the connection is $\{f_{-4}, f_{-3}\}$.

In the intersection $\{f_{-4}, f_{-3}\}$ of the sets of available center frequencies of all links, node C selects an available center frequency as the continuous center frequency of the subcarriers of the connection. This embodiment does not restrict the policy of selecting. For example, a random center frequency, a minimum center frequency, or a maximum center frequency may be selected.

In this embodiment, in the intersection $\{f_{-4}, f_{-3}\}$ of the sets of available center frequencies of all links, node C selects an available center frequency $f_{-3}$ as the continuous center frequency of the subcarriers of the connection.

Based on the overlap range of spectrum resources between neighboring subcarriers, the number of subcarriers, the spectrum bandwidth of a single subcarrier, and the continuous center frequency of the subcarriers, the center frequency of the subcarriers of the connection can be calculated through the following formula (3):

$$f_y = f_{con-min} + y \times B_s \times (1-r) = f_{con} - B_{all}/2 + y \times B_s \times (1-r)$$

$$= f_{con} - (B_s + (k-1) \times B_s \times (1-r))/2 + y \times B_s \times (1-r) \qquad (3)$$

Based on the overlap range of spectrum resources between neighboring subcarriers of the connection which is 1/2 of the spectrum bandwidths, the number of subcarriers 2, the spectrum bandwidth of a single subcarrier 50 GHz, and the continuous center frequency of the subcarriers $f_{-3}$, node C calculates the center frequency of two subcarriers as 193.06875 THz ($f_{-5}$) and 193.09375 THz ($f_{-1}$), and obtains $\{f_{-5}, f_{-1}\}$ as the set of center frequencies of the subcarriers, of the connection. According to the set of center frequencies of subcarriers $\{f_{-5}, f_{-1}\}$, node C sets the center frequencies of subcarriers of interface 6: f-5 = 193.1 + (-5 × 6.25/1000) = 193.06875 THz, and $f_{-1}$ = 193.1 + (-1 × 6.25/1000) = 193.09375 THz.

Node C obtains the continuous center frequency $f_{-3}$ of the subcarriers of the connection, the minimum center frequency $f_{-5}$ of the subcarriers, and the maximum center frequency $f_{-1}$ of the subcarriers.

Based on the overlap range of spectrum resources between neighboring subcarriers which is 1/2 of the spectrum bandwidths, the number of subcarriers 2, the spectrum bandwidth of a single subcarrier 50 GHz, and the minimum center frequency of the subcarriers $f_{-5}$, node C determines the spectrum range occupied by two subcarriers of the connection through the following formula (5):

$$\text{minimum frequency} = f_{min} - B_s/2;$$

$$\text{maximum frequency} = f_{min} - B_s/2 + B_{all} = f_{min} - B_s/2 + B_s + (k-1) \times B_s \times (1-r) \quad (5)$$

Node C determines that the frequency range occupied by two subcarriers of the connection is 193.04375 to 193.11875 THz, and establishes an optical cross-connection for the foregoing spectrum range of interface 5 and interface 6.

Node C sends a response message to upstream (namely, in the direction from sink node C to source node A) neighboring node B, where the response message carries the information on the minimum center frequency of subcarriers $f_{-5}$.

Step S304': Node B receives the response message, extracts the information on the minimum center frequency of the subcarriers out of the response message, and obtains the minimum center frequency of the subcarriers; establishes an optical cross-connection based on a spectrum range determined according to the overlap range of spectrum resources between neighboring subcarriers, the number of subcarriers, the spectrum bandwidth of a single subcarrier, and the minimum center frequency of the subcarriers; and sends a response message to node A, where the response message carries information on the minimum center frequency of the subcarriers.

Node B receives the response message sent by node C, extracts the information on the minimum center frequency of the subcarriers out of the response message, and obtains the minimum center frequency of the subcarriers f-5.

In a way similar to step S303' in this example based on the overlap range of spectrum resources between neighboring subcarriers which is 1/2 of the spectrum bandwidths, the number of subcarriers 2, the spectrum bandwidth of a single subcarrier 50 GHz, and the minimum center frequency of the subcarriers $f_{-5}$, node B determines 193.04375 to 193.11875 THz as the spectrum range occupied by the two subcarriers of the connection through formula (5), and establishes an optical cross-connection for the foregoing spectrum range of interface 3 and interface 4.

Node B sends a response message to upstream (namely, in the direction from sink node C to source node A) neighboring node A, where the response message carries the information on the minimum center frequency of the subcarriers $f_{-5}$.

Step S305': Node A receives the response message, extracts the information on the minimum center frequency of subcarriers out of the response message, and obtains the minimum center frequency of the subcarriers; and establishes an optical cross-connection based on a spectrum range determined according to the overlap range of spectrum resources between neighboring subcarriers, the number of subcarriers, the spectrum bandwidth of a single subcarrier, and the minimum center frequency of the subcarriers.

Node A receives the response message sent by node B, extracts the information on the minimum center frequency of the subcarriers out of the response message, and obtains the minimum center frequency of the subcarriers f-5.

In a way similar to step S303' in this embodiment, based on the overlap range of spectrum resources between neighboring subcarriers which is 1/2 of the spectrum bandwidths, the number of subcarriers 2, the spectrum bandwidth of a single subcarrier 50 GHz, and the minimum center frequency of the subcarriers $f_{-5}$, node A determines 193.04375 to 193.11875 THz as the spectrum range occupied by the two subcarriers of the connection through formula (5), and establishes an optical cross-connection for the foregoing spectrum range of interface 1 and interface 2.

Based on the overlap range of spectrum resources between neighboring subcarriers of the connection, the number of subcarriers, the spectrum bandwidth of a single subcarrier, and the minimum center frequency of the subcarriers, the center frequency of the subcarriers of the connection can be calculated through formula (6):

$$f_y = f_{min} + (y - 1) \times B_s \times (1 - r) \qquad (6)$$

Based on the overlap range of spectrum resources between neighboring subcarriers of the connection which is 1/2 of the spectrum bandwidths, the number of subcarriers 2, the spectrum bandwidth of a single subcarrier 50 GHz, and the minimum center frequency of the subcarriers $f_{-5}$, node A calculates the center frequencies of the two subcarriers of the connection as 193.06875 THz ($f_{-5}$) and 193.09375 THz ($f_{-1}$), and obtains $\{f_{-5}, f_{-1}\}$ as the set of center frequencies of the subcarriers of the connection. According to the set of center frequencies of subcarriers $\{f_{-5}, f_{-1}\}$, node A sets the center frequencies of subcarriers of interface 1: f-5 = 193.1 + (-5 x 6.25/1000) = 193.06875 THz, and $f_{-1}$ = 193.1 + (-1 x 6.25/1000) = 193.09375 THz.

Alternatively, node C may determine $f_{-3}$ as the continuous center frequency of the subcarriers of the connection, obtain $f_{-1}$ as the maximum center frequency of the subcarriers according to the continuous center frequency of the subcarriers, the number of subcarriers, the spectrum bandwidth of a single subcarrier, and the overlap range of spectrum resources between neighboring subcarriers, and send a response message that carries the information on the maximum center frequency of the subcarriers $f_{-1}$ to node B and node A; node C, node B, and node A establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

As an example method, steps S301 and S302 remain unchanged, and steps S303", S304", and S305" replace steps S303, S304, and S305:

Step S303": Node C receives the request message, and extracts the number of subcarriers, the information on the spectrum bandwidth of a single subcarrier, the subcarrier overlap attribute information, and the set information of available center frequencies out of the request message; obtains an intersection of the sets of available center frequencies of all links traversed by the connection; in the intersection of the sets of available center frequencies of all links, selects an available center frequency as the continuous center frequency of subcarriers of the connection, and obtains a maximum center frequency of the subcarriers according to the continuous center frequency of the subcarriers, the number of subcarriers, the spectrum bandwidth of a single subcarrier, and the overlap range of spectrum resources between neighboring subcarriers; establishes an optical cross-connection based on a spectrum range determined according to the overlap range of spectrum resources between neighboring subcarriers, the number of subcarriers, the spectrum bandwidth of a single subcarrier, and the maximum center frequency of the subcarriers; and sends a response message to node B, where the response message carries the information on the maximum center frequency of the subcarriers.

Node C receives the request message sent by node B, and extracts the number of subcarriers, the information on the spectrum bandwidth of a single subcarrier, the subcarrier overlap attribute information, and the information on the set of available center frequencies out of the request message; and obtains that: The number of subcarriers of the connection is 2, the spectrum bandwidth of a single subcarrier is 50 GHz, the overlap range of spectrum resources between neighboring subcarriers is 1/2 of the spectrum bandwidths, and the intersection of the sets of available center frequencies of all links (including link A-B and link B-C) traversed by the connection is $\{f_{-4}, f_{-3}\}$.

In the intersection $\{f_{-4}, f_{-3}\}$ of the sets of available center frequencies of all links, node C selects an available center frequency as the continuous center frequency of the subcarriers of the connection. This embodiment does not restrict the policy of selecting. For example, a random center frequency, a minimum center frequency, or a maximum center frequency may be selected.

In this example in the intersection $\{f_{-4}, f_{-3}\}$ of the sets of available center frequencies of all links, node C selects an available center frequency $f_{-3}$ as the continuous center frequency of the subcarriers of the connection.

Based on the overlap range of spectrum resources between neighboring subcarriers, the number of subcarriers, the spectrum bandwidth of a single subcarrier, and the continuous center frequency of the subcarriers, the center frequency of the subcarriers of the connection can be calculated through the following formula (3):

$$f_y = f_{con-min} + y \times B_s \times (1-r) = f_{con} - B_{all}/2 + y \times B_s \times (1-r)$$

$$= f_{con} - (B_s + (k-1) \times B_s \times (1-r))/2 + y \times B_s \times (1-r) \qquad (3)$$

Based on the overlap range of spectrum resources between neighboring subcarriers of the connection which is 1/2 of the spectrum bandwidths, the number of subcarriers 2, the spectrum bandwidth of a single subcarrier 50 GHz, and the continuous center frequency of the subcarriers $f_{-3}$, node C calculates the center frequency of two subcarriers as 193.06875 THz ($f_{-5}$) and 193.09375 THz ($f_{-1}$), and obtains $\{f_{-5}, f_{-1}$ as the set of center frequencies of the subcarriers of the connection. According to the set of center frequencies of subcarriers $\{f_{-5}, f_{-1}\}$, node C sets the center frequencies of subcarriers of interface 6: f-5 = 193.1 + (-5 x 6.25/1000) = 193.06875 THz, and $f_{-1}$ = 193.1 + (-1 x 6.25/1000) = 193.09375 THz.

Node C obtains the continuous center frequency $f_{-3}$ of the subcarriers of the connection, the minimum center frequency $f_{-5}$ of the subcarriers, and the maximum center frequency $f_{-1}$ of the subcarriers.

Based on the overlap range of spectrum resources between neighboring subcarriers which is 1/2 of the spectrum bandwidths, the number of subcarriers 2, the spectrum bandwidth of a single subcarrier 50 GHz, and the maximum center frequency of the subcarriers $f_{-1}$, node C determines the spectrum range occupied by two subcarriers of the connection through the following formula (7):

$$\text{minimum frequency} = f_{max} + B_s/2 - B_{all} = f_{max} + B_s/2 - (B_s + (k-1) \times B_s \times (1-r));$$

$$\text{maximum frequency} = f_{max} + B_s/2 \qquad (7)$$

Node C determines that the frequency range occupied by two subcarriers of the connection is 193.04375 to 193.11875 THz, and establishes an optical cross-connection for the foregoing spectrum range of interface 5 and interface 6.

Node C sends a response message to upstream (namely, in the direction from sink node C to source node A) neighboring node B, where the response message carries the information on the maximum center frequency of subcarriers $f_{-1}$.

Step S304": Node B receives the response message, extracts the information on the maximum center frequency of the subcarriers out of the response message, and obtains the maximum center frequency of the subcarriers; establishes an optical cross-connection based on a spectrum range determined according to the overlap range of spectrum resources between neighboring subcarriers, the number of subcarriers, the spectrum bandwidth of a single subcarrier, and the maximum center frequency of the subcarriers; and sends a response message to node A, where the response message carries the information on the maximum center frequency of the subcarriers.

Node B receives the response message sent by node C, extracts the information on the maximum center frequency of the subcarriers out of the response message, and obtains the maximum center frequency of the subcarriers $f_{-1}$.

In a way similar to step S303" in this example based on the overlap range of spectrum resources between neighboring subcarriers which is 1/2 of the spectrum bandwidths, the number of subcarriers 2, the spectrum bandwidth of a single subcarrier 50 GHz, and the maximum center frequency of the subcarriers $f_{-1}$, node B determines 193.04375 to 193.11875 THz as the spectrum range occupied by the two subcarriers of the connection through formula (7), and establishes an optical cross-connection for the foregoing spectrum range of interface 3 and interface 4.

Node B sends a response message to upstream (namely, in the direction from sink node C to source node A) neighboring node A, where the response message carries the information on the maximum center frequency of the subcarriers $f_{-1}$.

Step S305": Node A receives the response message, extracts the information on the maximum center frequency of subcarriers out of the response message, and obtains the maximum center frequency of the subcarriers; and establishes an optical cross-connection based on a spectrum range determined according to the overlap range of spectrum resources between neighboring subcarriers, the number of subcarriers, the spectrum bandwidth of a single subcarrier, and the maximum center frequency of the subcarriers.

Node A receives the response message sent by node B, extracts the information on the maximum center frequency of the subcarriers out of the response message, and obtains the maximum center frequency of the subcarriers $f_{-1}$.

In a way similar to step S303" in this example based on the overlap range of spectrum resources between neighboring subcarriers which is 1/2 of the spectrum bandwidths, the number of subcarriers 2, the spectrum bandwidth of a single subcarrier 50 GHz, and the maximum center frequency of the subcarriers $f_{-1}$, node A determines 193.04375 to 193.11875 THz as the spectrum range occupied by the two subcarriers of the connection through formula (7), and establishes an optical cross-connection for the foregoing spectrum range of interface 1 and interface 2.

Based on the overlap range of spectrum resources between neighboring subcarriers of the connection, the number of subcarriers, the spectrum bandwidth of a single subcarrier, and the maximum center frequency of the subcarriers, the center frequency of the subcarriers of the connection can be calculated through formula (8):

$$f_y = f_{max} - (y - 1) \text{ x } B_s \text{ x } (1 - r) \tag{8}$$

Based on the overlap range of spectrum resources between neighboring subcarriers of the connection which is 1/2 of the spectrum bandwidths, the number of subcarriers 2, the spectrum bandwidth of a single subcarrier 50 GHz, and the maximum center frequency of the subcarriers $f_{-1}$, node A calculates the center frequencies of the two subcarriers of the connection as 193.06875 THz ($f_{-5}$) and 193.09375 THz ($f_{-1}$), and obtains {$f_{-5}$, $f_{-1}$} as the set of center frequencies of the subcarriers of the connection. According to the set of center frequencies of subcarriers {$f_{-5}$, $f_{-1}$}, node A sets the center frequencies of subcarriers of interface 1: f-5 = 193.1 + (-5 x 6.25/1000) = 193.06875 THz, and $f_{-1}$ = 193.1 + (-1 x 6.25/1000) = 193.09375 THz.

In Embodiment 2, and corresponding examples, the configuration on each node shows which of the continuous center frequency of the subcarriers, the minimum center frequency of the subcarriers, and the maximum center frequency of the subcarriers can be used to determine a spectrum range that serves as a basis for establishing an optical cross-connection. Correspondingly, the configuration on each node may also show the specific type of center frequency that needs to be carried in the response message sent by the node.

The method for establishing an optical cross-connection in this embodiment of the present invention can automatically establish a multi-carrier optical cross-connection with a variable spectrum bandwidth on the node, and is easy to implement and highly reliable.

**Embodiment 3**

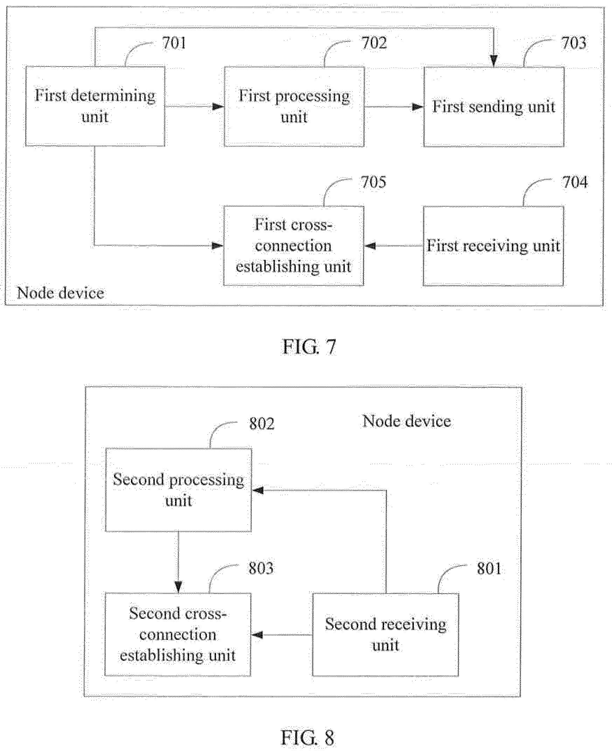

This embodiment of the present invention provides a node device. As shown in FIG. 7, the node device includes:

a first determining unit 701, configured to determine the number of subcarriers, spectrum bandwidth of a single subcarrier, and non-overlap of spectrum resources between neighboring subcarriers of a connection;

a first processing unit 702, configured to obtain a first set of available center frequencies of a first link according to the spectrum bandwidth of a single subcarrier, where the first link is a link between the node device and a neighboring node device in a direction from the node device to a second node device; determine the frequency range of each free center frequency of the first link according to the spectrum bandwidth of a single subcarrier; if all spectrum resources in the frequency range of a free center frequency are free spectrum resources, determine the free center frequency as an available center frequency, and then obtain the first set of the available center frequencies;

a first sending unit 703, configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers;

a first receiving unit 704, configured to receive a response message, extract information on a set of center frequencies of subcarriers out of the response message, and obtain a set of center frequencies of the subcarriers of the connection, where the set of center frequencies of the subcarriers is composed of available center frequencies with a non-overlap frequency range which are selected by the second node device from a second set of available center frequencies; and the second set of available center frequencies is an intersection of sets of available center frequencies of all links traversed by the connection, where the sets of available center frequencies are obtained according to the spectrum bandwidth of a single subcarrier; and

a first cross-connection establishing unit 705, configured to establish an optical cross-connection based on a spectrum range determined according to the non-overlap of spectrum resources between neighboring subcarriers, the set of center frequencies of the subcarriers, and the spectrum bandwidth of a single subcarrier.

## Embodiment 4

This embodiment of the present invention provides a node device. As shown in FIG. 8, the node device includes:

a second receiving unit 801, configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates non-overlap of spectrum resources between neighboring subcarriers which is determined by a first node device, the second set of available center frequencies is an intersection of sets of available center frequencies of all links traversed by a connection, and the sets of available center frequencies are obtained according to the spectrum bandwidth of a single subcarrier;

a second processing unit 802, configured to select available center frequencies with a non-overlap frequency range from the second set of available center frequencies to form a set of center frequencies of subcarriers of the connection; and

a second cross-connection establishing unit 803, configured to establish an optical cross-connection based on a spectrum range determined according to the non-overlap of spectrum resources between neighboring subcarriers, the set of center frequencies of the subcarriers, and the spectrum bandwidth of a single subcarrier.

Optionally, the node device may further include a second sending unit 804, which is configured to send a response message to a neighboring node device in a direction from the node device to the first node device, where the response message carries information on the set of center frequencies of the subcarriers.

## Embodiment 5

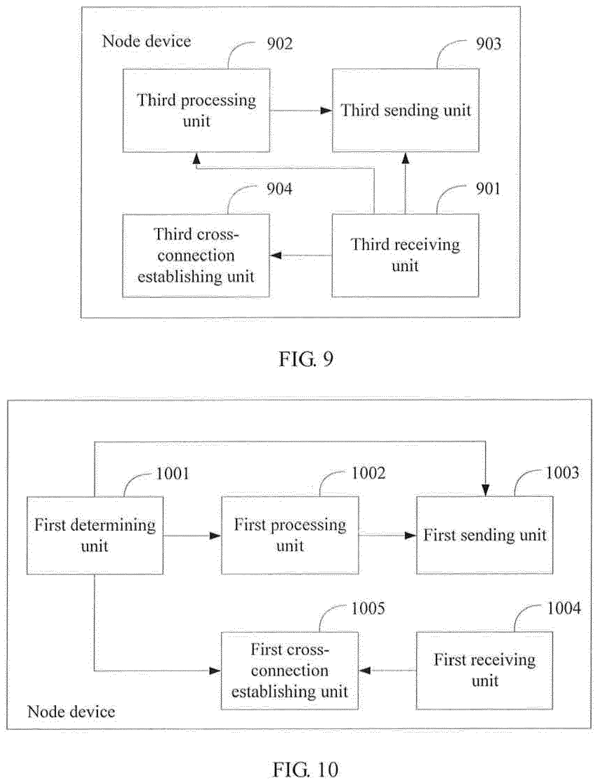

This embodiment of the present invention provides a node device. As shown in FIG. 9, the node device includes:

a third receiving unit 901, configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates non-overlap of spectrum resources between neighboring subcarriers which is determined by a first node device, the third set of available center frequencies is an intersection of sets of available center frequencies of all links traversed by a connection between the first node device and the node device, and the sets of available center frequencies are obtained according to the spectrum bandwidth of a single subcarrier; and further configured to receive a response message, extract information on a set of center frequencies of subcarriers out of the response message, and obtain a set of center frequencies of the subcarriers of the connection, where the set of center frequencies of the subcarriers is composed of available center frequencies with a non-overlap frequency range which are selected by a second node device from a second set of available center frequencies, the second set of available center frequencies is an intersection of sets of available center frequencies of all links traversed by the connection, and the sets of available center frequencies are obtained according to the spectrum bandwidth of a single subcarrier;

a third processing unit 902, configured to obtain a set of available center frequencies of a second link according to the spectrum bandwidth of a single subcarrier, and calculate an intersection of the set of available center frequencies of the second link and the third set of available center frequencies to serve as a fourth set of available center frequencies, where the second link is a link between the node device and a neighboring node device in a direction from the first node device to the second node device;

determine the frequency range of each free center frequency of the second link according to the spectrum bandwidth of a single subcarrier; if all spectrum resources in the frequency range of a free center frequency are free spectrum resources, determine the free center frequency as an available center frequency, and then obtain the set of available center frequencies of the second link;

a third sending unit 903, configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

a third cross-connection establishing unit 904, configured to establish an optical cross-connection based on a spectrum range determined according to the non-overlap of spectrum resources between neighboring subcarriers, the set of center frequencies of the subcarriers, and the spectrum bandwidth of a single subcarrier.

Optionally, the third sending unit 903 is further configured to send a response message to a neighboring node device in a direction from the second node device to the first node device, where the response message carries the information on the set of center frequencies of the subcarriers.

**Embodiment 6**

This embodiment of the present invention provides a node device. As shown in FIG. 10, the node device includes:

a first determining unit 1001, configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

a first processing unit 1002, configured to obtain a first set of available center frequencies of a first link according to the continuous spectrum bandwidth occupied by all subcarriers, where the first link is a link between the node device and a neighboring node device in a direction from the node device to a second node device;

determine a frequency range of each free center frequency of the first link according to the continuous spectrum bandwidth occupied by all subcarriers; if all spectrum resources in the frequency range of a free center frequency are free spectrum resources, determine the free center frequency as an available center frequency, and then obtain the first set of the available center frequencies;

a first sending unit 1003, configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

a first receiving unit 1004, configured to receive a response message, extract information on a continuous center frequency of the subcarriers out of the response message, and obtain the continuous center frequency of the subcarriers, where the continuous center frequency of the subcarriers is an available center frequency selected by the second node device from a second set of available center frequencies, the second set of available center frequencies is an intersection of sets of available center frequencies of all links traversed by the connection, and the sets of available center frequencies are obtained according to the continuous spectrum bandwidth occupied by all subcarriers; and

a first cross-connection establishing unit 1005, configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

## Embodiment 7

This embodiment of the present invention provides a node device. As shown in FIG. 11, the node device includes:

a second receiving unit 1101, configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;
a second processing unit 1102, configured to select an available center frequency from the second set of available center frequencies to serve as a continuous center frequency of subcarriers of the connection; and
a second cross-connection establishing unit 1103, configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

Optionally, the node device may further include a second sending unit 1104, which is configured to send a response message to a neighboring node device in a direction from the node device to the first node device, where the response message carries information on the continuous center frequency of the subcarriers.

## Embodiment 8

This embodiment of the present invention provides a node device. As shown in FIG. 12, the node device includes:

a third receiving unit 1201, configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a continuous center frequency of the subcarriers out of the response message, and obtain the continuous center frequency of the subcarriers, where the continuous center frequency of the subcarriers is an available center frequency selected by a second node device from a second set of available center frequencies, the second set of available center frequencies is an intersection of sets of available center frequencies of all links traversed by the connection, and the sets of available center frequencies are obtained according to the continuous spectrum bandwidth occupied by all subcarriers;
a third determining unit 1202, configured to determine the continuous spectrum bandwidth occupied by all subcarriers according to the number of subcarriers, the spectrum bandwidth of a single subcarrier, and the overlap range of spectrum resources between neighboring subcarriers;
a third processing unit 1203, configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, where the second link is a link between the node device and a neighboring node device in a direction from the first node device to the second node device;
determine a frequency range of each free center frequency of the second link according to the continuous spectrum bandwidth occupied by the subcarriers; if all spectrum resources in the frequency range of a free center frequency are free spectrum resources, determine the free center frequency as an available center frequency, and then obtain the set of available center frequencies of the second link;
a third sending unit 1204, configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

a third cross-connection establishing unit 1205, configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

Optionally, the third sending unit 1204 is further configured to send a response message to a neighboring node device in a direction from the second node device to the first node device, where the response message carries the information on the continuous center frequency of the subcarriers.

Embodiment 9

This embodiment provides a node device. As shown in FIG. 10, the node device includes:

a first determining unit 1001, configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

a first processing unit 1002, configured to obtain a first set of available center frequencies of a first link according to the continuous spectrum bandwidth occupied by all subcarriers, where the first link is a link between the node device and a neighboring node device in a direction from the node device to a second node device; determine a frequency range of each free center frequency of the first link according to the continuous spectrum bandwidth occupied by all subcarriers; if all spectrum resources in the frequency range of a free center frequency are free spectrum resources, determine the free center frequency as an available center frequency, and then obtain the first set of the available center frequencies;

a first sending unit 1003, configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

a first receiving unit 1004, configured to receive a response message, extract information on a minimum center frequency of the subcarriers out of the response message, and obtain the continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; and the second set of available center frequencies is an intersection of sets of available center frequencies of all links traversed by the connection, and the sets of available center frequencies are obtained according to the continuous spectrum bandwidth occupied by all subcarriers; and

a first cross-connection establishing unit 1005, configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

Embodiment 10

This embodiment provides a node device. As shown in FIG. 11, the node device includes:

a second receiving unit 1101, configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;

a second processing unit 1102, configured to select an available center frequency from the second set of available center frequencies to serve as a continuous center frequency of subcarriers of the connection, and obtain the continuous center frequency of the subcarriers, the number of subcarriers, the spectrum bandwidth of a single subcarrier, and the overlap range of spectrum resources between neighboring subcarriers; and

a second cross-connection establishing unit 1103, configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

Optionally, the node device may further include a second sending unit 1104, which is configured to send a response message to a neighboring node device in a direction from the node device to the first node device, where the response message carries information on the minimum center frequency of the subcarriers.

Embodiment 11

This embodiment provides a node device. As shown in FIG. 12, the node device includes:

a third receiving unit 1201, configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates a non-zero overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a continuous center frequency of the subcarriers out of the response message, and obtain the continuous center frequency of the subcarriers, where the continuous center frequency of the subcarriers is an available center frequency selected by the second node device from a second set of available center frequencies; the second set of available center frequencies is an intersection of sets of available center frequencies of all links traversed by the connection, and the sets of available center frequencies are obtained according to the continuous spectrum bandwidth occupied by all subcarriers;

a third determining unit 1202, configured to determine the continuous spectrum bandwidth occupied by all subcarriers according to the number of subcarriers, the spectrum bandwidth of a single subcarrier, and the overlap range of spectrum resources between neighboring subcarriers;

a third processing unit 1203, configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, where the second link is a link between the node device and a neighboring node device in a direction from the first node device to the second node device;

optionally, it may determine a frequency range of each free center frequency of the second link according to the continuous spectrum bandwidth occupied by the subcarriers; if all spectrum resources in the frequency range of a free center frequency are free spectrum resources, determine the free center frequency as an available center frequency, and then obtain the set of available center frequencies of the second link;

a third sending unit 1204, configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

a third cross-connection establishing unit 1205, configured to establish an optical cross-connection based on a spectrum range determined according to the overlap range of spectrum resources between neighboring subcarriers, the number of subcarriers, the spectrum bandwidth of a single subcarrier, and the minimum center frequency of the subcarriers.

Optionally, the third sending unit 1204 is further configured to send a response message to a neighboring node device in a direction from the second node device to the first node device, where the response message carries the information on the minimum center frequency of the subcarriers.

**Example 12**

This example provides a node device. As shown in FIG. 10, the node device includes:

a first determining unit 1001, configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

a first processing unit 1002, configured to obtain a first set of available center frequencies of a first link according to the continuous spectrum bandwidth occupied by all subcarriers, where the first link is a link between the node device and a neighboring node device in a direction from the node device to a second node device;

determine a frequency range of each free center frequency of the first link according to the continuous spectrum bandwidth occupied by all subcarriers; if all spectrum resources in the frequency range of a free center frequency are free spectrum resources, determine the free center frequency as an available center frequency, and then obtain the first set of the available center frequencies;

a first sending unit 1003, configured to send a request message to the neighboring node device in the direction from the node device to the second node device, where the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

a first receiving unit 1004, configured to receive a response message, extract information on a maximum center frequency of the subcarriers out of the response message, and obtain the maximum center frequency of the subcarriers, where the maximum center frequency of the subcarriers is obtained by the second node device according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; and the second set of available center frequencies is an intersection of sets of available center frequencies of all links traversed by the connection, and the sets of available center frequencies are obtained according to the continuous spectrum bandwidth occupied by all subcarriers; and

a first cross-connection establishing unit 1005, configured to establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

## Example 13

This example provides a node device. As shown in FIG. 11, the node device includes:

a second receiving unit 1101, configured to receive a request message, and extract the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;

a second processing unit 1102, configured to select an available center frequency from the second set of available center frequencies to serve as a continuous center frequency of subcarriers of the connection, and obtain a maximum center frequency of subcarriers according to the continuous center frequency of the subcarriers, the number of subcarriers, the spectrum bandwidth of a single subcarrier, and the overlap range of spectrum resources between neighboring subcarriers; and

a second cross-connection establishing unit 1103, configured to establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

Optionally, the node device may further include a second sending unit 1104, which is configured to send a response message to a neighboring node device in a direction from the node device to the first node device, where the response message carries information on the maximum center frequency of the subcarriers.

**Example 14**

This example provides a node device. As shown in FIG. 12, the node device includes:

a third receiving unit 1201, configured to receive a request message, and extract the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a maximum center frequency of the subcarriers out of the response message, and obtain the maximum center frequency of the subcarriers, where the maximum center frequency of the subcarriers is obtained by a second node device according to a continuous center frequency of the subcarriers, the number of subcarriers, the spectrum bandwidth of a single subcarrier, and the overlap range of spectrum resources between neighboring subcarriers; the continuous center frequency of the subcarriers is an available center frequency selected by the second node device from a second set of available center frequencies; the second set of available center frequencies is an intersection of sets of available center frequencies of all links traversed by the connection, and the sets of available center frequencies are obtained according to the continuous spectrum bandwidth occupied by all subcarriers;

a third determining unit 1202, configured to determine the continuous spectrum bandwidth occupied by all subcarriers according to the number of subcarriers, the spectrum bandwidth of a single subcarrier, and the overlap range of spectrum resources between neighboring subcarriers;

a third processing unit 1203, configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, where the second link is a link between the node device and a neighboring node device in a direction from the first node device to the second node device;

determine a frequency range of each free center frequency of the second link according to the continuous spectrum bandwidth occupied by the subcarriers; if all spectrum resources in the frequency range of a free center frequency are free spectrum resources, determine the free center frequency as an available center frequency, and then obtain the set of available center frequencies of the second link;

a third sending unit 1204, configured to send a request message to the neighboring node device in the direction from the first node device to the second node device, where the request message carries at least the number of subcarriers, the information on the spectrum bandwidth of a single subcarrier, the subcarrier overlap attribute information, and information on the fourth set of available center frequencies; and

a third cross-connection establishing unit 1205, configured to establish an optical cross-connection based on a spectrum range determined according to the overlap range of spectrum resources between neighboring subcarriers, the number of subcarriers, the spectrum bandwidth of a single subcarrier, and the maximum center frequency of the subcarriers.

Optionally, the third sending unit 1204 is further configured to send a response message to a neighboring node device in a direction from the second node device to the first node device, where the response message carries the information on the maximum center frequency of the subcarriers.

The detailed implementation processes of the units in the node devices disclosed in Embodiment 3 to Example 14 above, the information exchange between the units, and so on, are based on the same conception as the method embodiments of the present invention and the example methods useful for understanding the present invention. For details, refer to the description in the method embodiments of the present invention and the example methods useful for understanding the present invention. which will not be described herein again.

The node device for establishing an optical cross-connection in this embodiment of the present invention can automatically establish a multi-carrier optical cross-connection with a variable spectrum bandwidth on the node, and is easy to implement and highly reliable.

Example 5

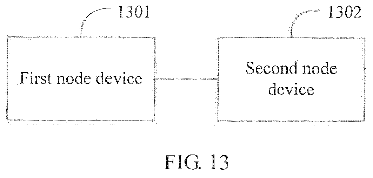

This example useful for understanding the present invention provides a system for establishing an optical cross-connection. As shown in FIG. 13, the system includes at least a first node device 1301 and a second node device 1302:

The first node device 1301 includes: a first determining unit, a first processing unit, a first sending unit, a first receiving unit, and a first cross-connection establishing unit. For details, refer to the first determining unit 701, the first processing unit 702, the first sending unit 703, the first receiving unit 704, and the first cross-connection establishing unit 705 in Embodiment 3, which will not be described herein again.

The second node device 1302 includes: a second receiving unit, a second processing unit, and a second cross-connection establishing unit, and an optional second sending unit. For details, refer to the second receiving unit 801, the second processing unit 802, the second cross-connection establishing unit 803, and the optional second sending unit 804 in Embodiment 4, which will not be described herein again.

Further, a third node device 1303 may exist between the first node device 1301 and the second node device 1302.

The third node device 1303 includes: a third receiving unit, a third processing unit, a third sending unit, and a third cross-connection establishing unit. For details, refer to the third receiving unit 901, the third processing unit 902, the third sending unit 903, and the third cross-connection establishing unit 904 in Embodiment 5, which will not be described herein again.

Example 16

This example useful for understanding the present invention provides a system for establishing an optical cross-connection. As shown in FIG. 13, the system includes at least a first node device 1301 and a second node device 1302:

The first node device 1301 includes: a first determining unit, a first processing unit, a first sending unit, a first receiving unit, and a first cross-connection establishing unit. For details, refer to the first determining unit 1001, the first processing unit 1002, the first sending unit 1003, the first receiving unit 1004, and the first cross-connection establishing unit 1005 in Embodiment 6, which will not be described herein again.

The second node device 1302 includes: a second receiving unit, a second processing unit, and a second cross-connection establishing unit, and an optional second sending unit. For details, refer to the second receiving unit 1101, the second processing unit 1102, the second cross-connection establishing unit 1103, and the optional second sending unit 1104 in Embodiment 7, which will not be described herein again.

Further, a third node device 1303 may exist between the first node device 1301 and the second node device 1302.

The third node device 1303 includes: a third receiving unit, a third determining unit, a third processing unit, a third sending unit, and a third cross-connection establishing unit. For details, refer to the third receiving unit 1201, the third determining unit 1202, the third processing unit 1203, the third sending unit 1204, and the third cross-connection establishing unit 1205 in Embodiment 8, which will not be described herein again.

This example provides a system for establishing an optical cross-connection. As shown in FIG. 13, the system includes at least a first node device 1301 and a second node device 1302:

The first node device 1301 includes: a first determining unit, a first processing unit, a first sending unit, a first receiving unit, and a first cross-connection establishing unit. For details, refer to the first determining unit 1001, the first processing unit 1002, the first sending unit 1003, the first receiving unit 1004, and the first cross-connection establishing unit 1005 in Embodiment 9, which will not be described herein again.

The second node device 1302 includes: a second receiving unit, a second processing unit, and a second cross-connection establishing unit, and an optional second sending unit. For details, refer to the second receiving unit 1101, the second processing unit 1102, the second cross-connection establishing unit 1103, and the optional second sending unit 1104 in Embodiment 10, which will not be described herein again.

Further, a third node device 1303 may exist between the first node device 1301 and the second node device 1302.

The third node device 1303 includes: a third receiving unit, a third determining unit, a third processing unit, a third sending unit, and a third cross-connection establishing unit. For details, refer to the third receiving unit 1201, the third determining unit 1202, the third processing unit 1203, the third sending unit 1204, and the third cross-connection establishing unit 1205 in Embodiment 11, which will not be described herein again.

**Example 18**

This example provides a system for establishing an optical cross-connection. As shown in FIG. 13, the system includes at least a first node device 1301 and a second node device 1302:

The first node device 1301 includes: a first determining unit, a first processing unit, a first sending unit, a first receiving unit, and a first cross-connection establishing unit. For details, refer to the first determining unit 1001, the first processing unit 1002, the first sending unit 1003, the first receiving unit 1004, and the first cross-connection establishing unit 1005 in Embodiment 12, which will not be described herein again.

The second node device 1302 includes: a second receiving unit, a second processing unit, and a second cross-connection establishing unit, and an optional second sending unit. For details, refer to the second receiving unit 1101, the second processing unit 1102, the second cross-connection establishing unit 1103, and the optional second sending unit 1104 in Embodiment 13, which will not be described herein again.

Further, a third node device 1303 may exist between the first node device 1301 and the second node device 1302.

The third node device 1303 includes: a third receiving unit, a third determining unit, a third processing unit, a third sending unit, and a third cross-connection establishing unit. For details, refer to the third receiving unit 1201, the third determining unit 1202, the third processing unit 1203, the third sending unit 1204, and the third cross-connection establishing unit 1205 in Embodiment 14, which will not be described herein again.

The detailed implementation processes of the units in the systems for establishing an optical cross-connection in Examples 15 to 18 above, the information exchange between the units, and so on, are based on the same conception as the method embodiments of the present invention. For details, refer to the description in the method embodiments, which will not be described herein again.

The foregoing embodiments enable automatic configuration of a unidirectional optical cross-connection or bidirectional optical cross-connection. When a bidirectional optical cross-connection is configured, the subcarrier center frequency in the foregoing embodiments is a bidirectional subcarrier center frequency, and the spectrum bandwidth is a bidirectional spectrum bandwidth; when a unidirectional optical cross-connection is configured, the subcarrier center frequency in the foregoing embodiments is a unidirectional subcarrier center frequency, and the spectrum bandwidth is a unidirectional spectrum bandwidth.

A modulation scheme decides whether the spectrum resources between neighboring subcarriers overlap, and decides the overlap range. Therefore, the subcarrier overlap attribute information carried in the request message in the foregoing embodiments may be replaced with modulation scheme information, and, according to the modulation scheme, each node on the connection obtains whether the spectrum resources between neighboring subcarriers overlap, or obtains the overlap range, and performs subsequent steps.

The response message in the foregoing embodiments may carry, or may not carry, the number of subcarriers, the information on the spectrum bandwidth of a single subcarrier, and the subcarrier overlap attribute information. If the received response message carries such information, the information needs to be checked against the corresponding information carried in the request message, and the subsequent steps will not be performed unless the information is consistent.

The route of the connection may include a source node and a sink node only, without any intermediate node; or may include a source node, a sink node, and one or more intermediate nodes. The foregoing embodiments describe a scenario where the route of the connection includes one intermediate node. In a scenario where multiple intermediate nodes exist between the source node and the sink node, the working of each intermediate node is similar to the working of the intermediate node described in this embodiment, which will not be described herein again.

The foregoing embodiments may be implemented by extending protocols of the GMPLS (Generalized Multiprotocol Label Switching, Generalized Multiprotocol Label Switching) RSVP-TE (Resource Reservation Protocol with TE, Resource Reservation Protocol with TE); a Path message serves as a request message, and a Resv message serves as a response message; new signaling may be added or existing GMPLS RSVP-TE signaling may be extended to carry the number of subcarriers, information on the spectrum bandwidth of a single subcarrier, subcarrier overlap attribute information, information on the minimum center frequency of subcarriers, information on the maximum center frequency of subcarriers, information on the continuous center frequency of subcarriers, information on the set of center frequencies of subcarriers, and information on the set of available center frequencies.

When the Path message carries the number of subcarriers, the information on the spectrum bandwidth of a single subcarrier, and the subcarrier overlap attribute information, such information may be carried in a newly added traffic parameter object or an extended label request object in the message; when a Resv message carries such information, the information may be carried in a newly added traffic parameter object in the message.

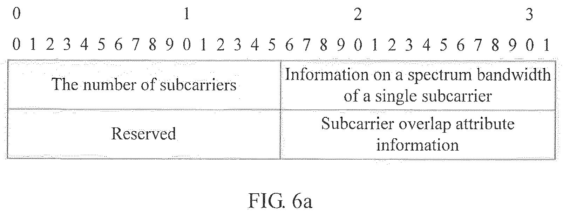

FIG. 6a shows the encapsulation format of the payload of the traffic parameter object newly added in the Path message and the Resv message, where 64 bits may be used to represent the number of subcarriers, the information on the spectrum bandwidth of a single subcarrier, and the subcarrier overlap attribute information. The meanings of the fields are as follows:

The number of subcarriers: It represents the number of subcarriers included in a connection. Its value is a positive integer.

Information on spectrum bandwidth of a single subcarrier: It represents spectrum bandwidth coefficient of each subcarrier. Its value is a positive integer, namely, spectrum bandwidth of a single subcarrier = 12.5 x information on spectrum bandwidth of a single subcarrier (GHz); for example, when the value of this field is 4, the spectrum bandwidth of the subcarrier = 12.5 x 4 = 50 GHz; the information on spectrum bandwidth of a single subcarrier may also represent the spectrum bandwidth value of a single subcarrier directly, such as 50 GHz.

Subcarrier overlap attribute information: It indicates the attribute of overlap of spectrum resources between neighboring subcarriers. For example, when the value of this field is 0, the spectrum resources between neighboring subcarriers do not overlap; when the value of this field is 1, the overlap range of spectrum resources between neighboring subcarriers is 1/2 of the spectrum resources; when the value of this field is 2, the overlap range of spectrum resources between neighboring subcarriers is 1/3 of the spectrum resources, and so on.

When the label request object in the Path message is extended, 64 bits are added in the label request object to represent the number of subcarriers, the information on the spectrum bandwidth of a single subcarrier, and the subcarrier overlap attribute information, in which the fields have the same meanings as the fields in the newly added traffic parameter object described above.

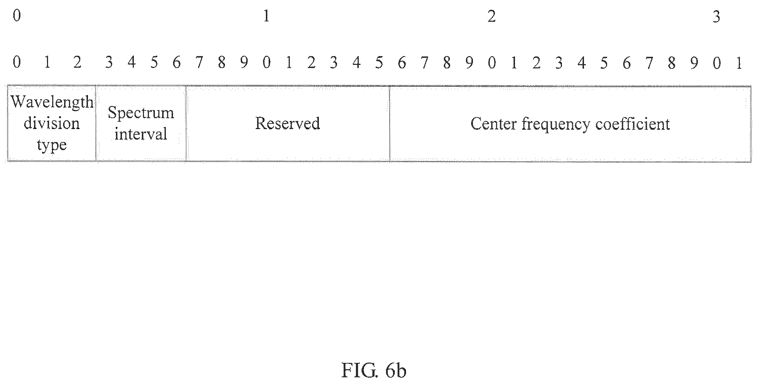

When a Resv message carries the information on the minimum center frequency of subcarriers, the information on the maximum center frequency of subcarriers, and the information on the continuous center frequency of subcarriers, such information may be carried in an extended Generalized Label object (Generalized Label object) of the Resv message. FIG. 6b shows the encapsulation format of the label in the generalized label object of the Resv message, and the parameter values of the extended labels. The meanings of the fields are as follows:

Wavelength division type (Grid): The value "1" of this field indicates DWDM.

Spectrum interval (C.S.): A new value is assigned to this field. For example, the newly assigned C.S. = 5 indicates a spectrum interval of 6.25 GHz.

Center frequency coefficient (n): The center frequency value can be obtained according to the spectrum interval (C.S.) and the center frequency coefficient (n), and the center frequency is $f_n$ = 193.1 + (n x C.S. x /1000)(THz).

According to the foregoing definitions, the center frequency 193.05 THz may be represented by the following parameters of the label in the label object in the Resv message: Grid = 1, C.S. = 5, and n = -8.

When a Resv message carries the information on the set of center frequencies of subcarriers, the information may also be carried in an extended generalized label object (Generalized Label object) in the message. Each label in the generalized label object carries a center frequency of the subcarrier, the encapsulation format of each label is shown in FIG. 6b, and the meanings of the fields in the label are the same as the fields of the label in the generalized label object described above.

When a Path message carries the information on the set of available center frequencies, the information may also be carried in an extended generalized label object (Generalized Label object) in the message. Each label in the generalized label object carries an available center frequency, the encapsulation format of each label is shown in FIG. 6b, and the meanings of the fields in the label are the same as the fields of the label in the generalized label object described above.

The technical solutions provided by the embodiments of the present invention can automatically establish a multi-carrier optical cross-connection with a variable spectrum bandwidth on the node, and is easy to implement and highly reliable.

Persons of ordinary skill in the art should understand that all or a part of the steps of the methods in the embodiments may be implemented by a computer program instructing relevant hardware. The program may be stored in a computer readable storage medium. When the program runs, the processes of the methods in the embodiments are performed. The storage medium may be a magnetic disk, an optical disk, a Read-Only Memory (Read-Only Memory, ROM), a Random Access Memory (Read-Only Memory, RAM), and the like.

The foregoing descriptions are merely exemplary embodiments of the present invention, but not intended to limit the protection scope of the present invention. Any variation or replacement made by persons skilled in the art without departing from the ideas of the present invention shall fall within the protection scope of the present invention as defined by the appended claims.

## Claims

1. A method for establishing a multi-carrier optical cross-connection, comprising:

   determining (S101a), by a first node, the number of subcarriers, spectrum bandwidth of a single subcarrier, and non-overlap of spectrum resources between neighboring subcarriers of a connection;
   obtaining (S102a), by the first node, a first set of available center frequencies of a first link according to the spectrum bandwidth of a single subcarrier, wherein the first link is a link between the first node and a neighboring node in a direction from the first node to a second node;

sending (S103a), by the first node, a request message to the neighboring node in the direction from the first node to the second node, wherein the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers; and

receiving (S104a), by the first node, a response message, extracting information on a set of center frequencies of subcarriers out of the response message, and obtaining the set of center frequencies of subcarriers of the connection; and establishing (S105a) an optical cross-connection based on a spectrum range determined according to the non-overlap of spectrum resources between neighboring subcarriers, the set of center frequencies of the subcarriers, and the spectrum bandwidth of a single subcarrier, wherein,

the set of center frequencies of the subcarriers is composed of available center frequencies with a non-overlap frequency range which are selected by the second node from a second set of available center frequencies; and the second set of available center frequencies is an intersection of sets of available center frequencies of all links traversed by the connection, wherein the sets of available center frequencies are obtained according to the spectrum bandwidth of a single subcarrier.

2. The method according to claim 1, wherein the obtaining, by the first node, a first set of available center frequencies of a first link according to the spectrum bandwidth of a single subcarrier specifically comprises:

determining, by the first node, a frequency range of each free center frequency of the first link according to the spectrum bandwidth of a single subcarrier; and, if all spectrum resources in the frequency range of a free center frequency are free spectrum resources, determining the free center frequency as an available center frequency, and then obtaining the first set of the available center frequencies.

3. A method for establishing a multi-carrier optical cross-connection, comprising:

receiving (S101b), by a second node, a request message, and extracting the number of subcarriers, information on spectrum bandwidth of a single subcarrier, subcarrier overlap attribute information, and information on a second set of available center frequencies out of the request message, wherein the subcarrier overlap attribute information indicates non-overlap of spectrum resources between neighboring subcarriers which is determined by a first node, the second set of available center frequencies is an intersection of sets of available center frequencies of all links traversed by a connection, and the sets of available center frequencies are obtained according to the spectrum bandwidth of a single subcarrier; and

selecting (S102b), by the second node, available center frequencies with a non-overlap frequency range from the second set of available center frequencies to form a set of center frequencies of subcarriers of the connection; and establishing (S103b) an optical cross-connection based on a spectrum range determined according to the non-overlap of spectrum resources between neighboring subcarriers, the set of center frequencies of the subcarriers, and the spectrum bandwidth of a single subcarrier.

4. A method for establishing a multi-carrier optical cross-connection, comprising:

receiving (S101c), by a third node, a request message, and extracting the number of subcarriers, information on spectrum bandwidth of a single subcarrier, subcarrier overlap attribute information, and information on a third set of available center frequencies out of the request message, wherein the subcarrier overlap attribute information indicates non-overlap of spectrum resources between neighboring subcarriers which is determined by a first node, the third set of available center frequencies is an intersection of sets of available center frequencies of all links traversed by a connection between the first node and the third node, and the sets of available center frequencies are obtained according to the spectrum bandwidth of a single subcarrier;

obtaining (S102c), by the third node, a set of available center frequencies of a second link according to the spectrum bandwidth of a single subcarrier, and calculating an intersection of the set of available center frequencies of the second link and the third set of available center frequencies to serve as a fourth set of available center frequencies, wherein the second link is a link between the third node and a neighboring node in a direction from the first node to a second node;

sending (S103c), by the third node, a request message to the neighboring node in the direction from the first node to the second node, wherein the request message carries at least the number of subcarriers, the information on the spectrum bandwidth of a single subcarrier, the subcarrier overlap attribute information, and information on the fourth set of available center frequencies; and

receiving (S104c), by the third node, a response message, extracting information on a set of center frequencies of subcarriers out of the response message, and obtaining the set of center frequencies of subcarriers of the connection; and establishing (S105c) an optical cross-connection based on a spectrum range determined according to the non-overlap of spectrum resources between neighboring subcarriers, the set of center frequencies of the subcarriers, and the spectrum bandwidth of a single subcarrier, wherein,
the set of center frequencies of the subcarriers is composed of available center frequencies with a non-overlap frequency range which are selected by the second node from a second set of available center frequencies; and the second set of available center frequencies is an intersection of sets of available center frequencies of all links traversed by the connection, wherein the sets of available center frequencies are obtained according to the spectrum bandwidth of a single subcarrier.

5. The method according to claim 4, wherein the obtaining, by the third node, a set of available center frequencies of a second link according to the spectrum bandwidth of a single subcarrier specifically comprises:

determining, by the third node, a frequency range of each free center frequency of the second link according to the spectrum bandwidth of a single subcarrier; and, if all spectrum resources in the frequency range of a free center frequency are free spectrum resources, determining the free center frequency as an available center frequency, and then obtaining the set of the available center frequencies of the second link.

6. A method for establishing a multi-carrier optical cross-connection, comprising:

determining (S101d), by a first node, the number of subcarriers, spectrum bandwidth of a single subcarrier, and an overlap range of spectrum resources between neighboring subcarriers of a connection; and determining a continuous spectrum bandwidth occupied by all subcarriers according to the number of subcarriers, the spectrum bandwidth of a single subcarrier, and the overlap range of spectrum resources between neighboring subcarriers; obtaining (S102d), by the first node, a first set of available center frequencies of a first link according to the continuous spectrum bandwidth occupied by all subcarriers, wherein the first link is a link between the first node and a neighboring node in a direction from the first node to a second node;
sending (S103d), by the first node, a request message to the neighboring node in the direction from the first node to the second node, wherein the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers; and
receiving (S104d), by the first node, a response message, extracting information on a continuous center frequency of subcarriers out of the response message, and obtaining the continuous center frequency of the subcarriers; and establishing (S105d) an optical cross-connection based on a spectrum range determined according to the overlap range of spectrum resources between neighboring subcarriers, the number of subcarriers, the spectrum bandwidth of a single subcarrier, and the continuous center frequency of the subcarriers, wherein,
the continuous center frequency of the subcarriers is an available center frequency selected by the second node from a second set of available center frequencies; and the second set of available center frequencies is an intersection of sets of available center frequencies of all links traversed by the connection, wherein the sets of available center frequencies are obtained according to the continuous spectrum bandwidth occupied by all subcarriers.

7. The method according to claim 6, wherein the obtaining, by the first node, a first set of available center frequencies of a first link according to the continuous spectrum bandwidth occupied by all subcarriers specifically comprises:

determining, by the first node, a frequency range of each free center frequency of the first link according to the continuous spectrum bandwidth occupied by all subcarriers; and, if all spectrum resources in the frequency range of a free center frequency are free spectrum resources, determining the free center frequency as an available center frequency, and then obtaining the first set of the available center frequencies.

8. A method for establishing a multi-carrier optical cross-connection, comprising:

receiving (S101e), by a second node, a request message, and extracting the number of subcarriers, information on spectrum bandwidth of a single subcarrier, subcarrier overlap attribute information, and information on a second set of available center frequencies out of the request message, wherein the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers; and selecting (S102e), by the second node, an available center frequency from the second set of available center frequencies to serve as a continuous center frequency of subcarriers of the connection; and establishing (S103e) an optical cross-connection based on a spectrum range determined according to the overlap range of spectrum resources between neighboring subcarriers, the number of subcarriers, the spectrum bandwidth of a single subcarrier, and the continuous center frequency of the subcarriers.

9.  A method for establishing a multi-carrier optical cross-connection, comprising:

receiving (S101f), by a third node, a request message, and extracting the number of subcarriers, information on spectrum bandwidth of a single subcarrier, subcarrier overlap attribute information, and information on a third set of available center frequencies out of the request message, wherein the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers;

determining (S102f), by the third node, the continuous spectrum bandwidth occupied by all subcarriers according to the number of subcarriers, the spectrum bandwidth of a single subcarrier, and the overlap range of spectrum resources between neighboring subcarriers;

obtaining (S103f), by the third node, a set of available center frequencies of a second link according to the continuous spectrum bandwidth occupied by all subcarriers, and calculating an intersection of the set of available center frequencies of the second link and the third set of available center frequencies to serve as a fourth set of available center frequencies, wherein the second link is a link between the third node and a neighboring node in a direction from the first node to a second node;

sending (S104f), by the third node, a request message to the neighboring node in the direction from the first node to the second node, wherein the request message carries at least the number of subcarriers, the information on the spectrum bandwidth of a single subcarrier, the subcarrier overlap attribute information, and information on the fourth set of available center frequencies; and

receiving (S105f), by the third node, a response message, extracting information on a continuous center frequency of subcarriers out of the response message, and obtaining the continuous center frequency of the subcarriers; and establishing (S106f) an optical cross-connection based on a spectrum range determined according to the overlap range of spectrum resources between neighboring subcarriers, the number of subcarriers, the spectrum bandwidth of a single subcarrier, and the continuous center frequency of the subcarriers, wherein, the continuous center frequency of the subcarriers is an available center frequency selected by the second node from a second set of available center frequencies; and the second set of available center frequencies is an intersection of sets of available center frequencies of all links traversed by the connection, wherein the sets of available center frequencies are obtained according to the continuous spectrum bandwidth occupied by all subcarriers.

10. The method according to claim 9, wherein the obtaining, by the third node, a set of available center frequencies of a second link according to the continuous spectrum bandwidth occupied by all subcarriers specifically comprises:

determining, by the third node, a frequency range of each free center frequency of the second link according to the continuous spectrum bandwidth occupied by all subcarriers; and, if all spectrum resources in the frequency range of a free center frequency are free spectrum resources, determining the free center frequency as an available center frequency, and then obtaining the set of the available center frequencies of the second link.

11. A node device, comprising a first determining unit (701), a first processing unit (702), a first sending unit (703), a first receiving unit (704), and a first cross-connection establishing unit (705), wherein, the first determining unit (701) is configured to determine the number of subcarriers, spectrum bandwidth of a single subcarrier, and non-overlap of spectrum resources between neighboring subcarriers of a connection; the first processing unit (702) is configured to obtain a first set of available center frequencies of a first link according to the spectrum bandwidth of a single subcarrier, wherein the first link is a link between the node device and a neighboring node device in a direction from the node device to a second node device;

the first sending unit (703) is configured to send a request message to the neighboring node device in the direction from the node device to the second node device, wherein the request message carries at least the number of subcarriers, information on the spectrum bandwidth of a single subcarrier, subcarrier overlap attribute information, and information on the first set of available center frequencies, and the subcarrier overlap attribute information indicates the non-overlap of spectrum resources between neighboring subcarriers;

the first receiving unit (704) is configured to receive a response message, extract information on a set of center frequencies of subcarriers out of the response message, and obtain a set of center frequencies of the subcarriers of the connection, wherein the set of center frequencies of the subcarriers is composed of available center frequencies with a non-overlap frequency range which are selected by the second node device from a second set of available center frequencies; and the second set of available center frequencies is an intersection of sets of available center frequencies of all links traversed by the connection, wherein the sets of available center frequencies are obtained according to the spectrum bandwidth of a single subcarrier; and

the first cross-connection establishing unit (705) is configured to establish an optical cross-connection based on a spectrum range determined according to the non-overlap of spectrum resources between neighboring subcarriers, the set of center frequencies of the subcarriers, and the spectrum bandwidth of a single subcarrier.

12. A node device, comprising a second receiving unit (801), a second processing unit (802), and a second cross-connection establishing unit (803), wherein,

the second receiving unit (801) is configured to receive a request message, and extract the number of subcarriers, information on spectrum bandwidth of a single subcarrier, subcarrier overlap attribute information, and information on a second set of available center frequencies out of the request message, wherein the subcarrier overlap attribute information indicates non-overlap of spectrum resources between neighboring subcarriers which is determined by a first node device, the second set of available center frequencies is an intersection of sets of available center frequencies of all links traversed by a connection, and the sets of available center frequencies are obtained according to the spectrum bandwidth of a single subcarrier;

the second processing unit (802) is configured to select available center frequencies with a non-overlap frequency range from the second set of available center frequencies to form a set of center frequencies of subcarriers of the connection; and

the second cross-connection establishing unit (803) is configured to establish an optical cross-connection based on a spectrum range determined according to the non-overlap of spectrum resources between neighboring subcarriers, the set of center frequencies of the subcarriers, and the spectrum bandwidth of a single subcarrier.

13. A node device, comprising a third receiving unit (901), a third processing unit (902), a third sending unit (903), and a third cross-connection establishing unit (904), wherein,

the third receiving unit (901) is configured to receive a request message, and extract the number of subcarriers, information on spectrum bandwidth of a single subcarrier, subcarrier overlap attribute information, and information on a third set of available center frequencies out of the request message, wherein the subcarrier overlap attribute information indicates non-overlap of spectrum resources between neighboring subcarriers which is determined by a first node device, the third set of available center frequencies is an intersection of sets of available center frequencies of all links traversed by a connection between the first node device and the node device, and the sets of available center frequencies are obtained according to the spectrum bandwidth of a single subcarrier; and further configured to receive a response message, extract information on a set of center frequencies of subcarriers out of the response message, and obtain a set of center frequencies of the subcarriers of the connection, wherein the set of center frequencies of the subcarriers is composed of available center frequencies with a non-overlap frequency range which are selected by a second node device from a second set of available center frequencies, the second set of available center frequencies is an intersection of sets of available center frequencies of all links traversed by the connection, and the sets of available center frequencies are obtained according to the spectrum bandwidth of a single subcarrier;

the third processing unit (902) is configured to obtain a set of available center frequencies of a second link according to the spectrum bandwidth of a single subcarrier, and calculate an intersection of the set of available center frequencies of the second link and the third set of available center frequencies to serve as a fourth set of available center frequencies, wherein the second link is a link between the node device and a neighboring node device in a direction from the first node device to the second node device;

the third sending unit (903) is configured to send a request message to the neighboring node device in the direction from the first node device to the second node device, wherein the request message carries at least the number of subcarriers, the information on the spectrum bandwidth of a single subcarrier, the subcarrier overlap attribute information, and information on the fourth set of available center frequencies; and

the third cross-connection establishing unit (904) is configured to establish an optical cross-connection based on a spectrum range determined according to the non-overlap of spectrum resources between neighboring subcarriers, the set of center frequencies of the subcarriers, and the spectrum bandwidth of a single subcarrier.

14. A node device, comprising a first determining unit (1001), a first processing unit (1002), a first sending unit (1003), a first receiving unit (1004), and a first cross-connection establishing unit (1005), wherein,

the first determining unit (1001) is configured to determine the number of subcarriers, spectrum bandwidth of a single subcarrier, and an overlap range of spectrum resources between neighboring subcarriers of a connection, and determine a continuous spectrum bandwidth occupied by all subcarriers according to the number of subcarriers, the spectrum bandwidth of a single subcarrier, and the overlap range of spectrum resources between neighboring subcarriers;

the first processing unit (1002) is configured to obtain a first set of available center frequencies of a first link according to the continuous spectrum bandwidth occupied by all subcarriers, wherein the first link is a link between the node device and a neighboring node device in a direction from the node device to a second node device;

the first sending unit (1003) is configured to send a request message to the neighboring node device in the direction from the node device to the second node device, wherein the request message carries at least the number of subcarriers, information on the spectrum bandwidth of a single subcarrier, subcarrier overlap attribute information, and information on the first set of available center frequencies, and the subcarrier overlap attribute information indicates the overlap range of spectrum resources between neighboring subcarriers;

the first receiving unit (1004) is configured to receive a response message, extract information on a continuous center frequency of the subcarriers out of the response message, and obtain the continuous center frequency of the subcarriers, wherein the continuous center frequency of the subcarriers is an available center frequency selected by the second node device from a second set of available center frequencies, the second set of available center frequencies is an intersection of sets of available center frequencies of all links traversed by the connection, and the sets of available center frequencies are obtained according to the continuous spectrum bandwidth occupied by all subcarriers; and

the first cross-connection establishing unit (1005) is configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

15. Anode device, comprising a second receiving unit (1101), a second processing unit (1102), and a second cross-connection establishing unit (1103), wherein,

the second receiving unit (1101) is configured to receive a request message, and extract the number of subcarriers, information on spectrum bandwidth of a single subcarrier, subcarrier overlap attribute information, and information on a second set of available center frequencies out of the request message, wherein the subcarrier overlap attribute information indicates an overlap range of spectrum resources between neighboring subcarriers which is determined by a first node device, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers;

the second processing unit (1102) is configured to select an available center frequency from the second set of available center frequencies to serve as a continuous center frequency of subcarriers of the connection; and

the second cross-connection establishing unit (1103) is configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

16. A node device, comprising a third receiving unit (1201), a third determining unit (1202), a third processing unit (1203), a third sending unit (1204), and a third cross-connection establishing unit (1205), wherein,

the third receiving unit (1201) is configured to receive a request message, and extract the number of subcarriers, information on spectrum bandwidth of a single subcarrier, subcarrier overlap attribute information, and information on a third set of available center frequencies out of the request message, wherein the subcarrier overlap attribute information indicates an overlap range of spectrum resources between neighboring subcarriers which is determined by a first node device, the third set of available center frequencies is an intersection of sets of available center frequencies of all links traversed by a connection between the first node device and the node device, and the sets of available center frequencies are obtained according to a continuous spectrum bandwidth occupied by all subcarriers; and further configured to receive a response message, extract information on a continuous center frequency of the subcarriers out of the response message, and obtain the continuous center frequency of the subcarriers, wherein the continuous center frequency of the subcarriers is an available center frequency selected by a second node device from a second set of available center frequencies, the second set of available center frequencies is an intersection of sets of available center frequencies of all links traversed by the connection, and the sets of available center frequencies are obtained according to the continuous spectrum bandwidth occupied by all subcarriers;

the third determining unit (1202) is configured to determine the continuous spectrum bandwidth occupied by all subcarriers according to the number of subcarriers, the spectrum bandwidth of a single subcarrier, and the overlap range of spectrum resources between neighboring subcarriers;

the third processing unit (1203) is configured to obtain a set of available center frequencies of a second link according to the continuous spectrum bandwidth occupied by all subcarriers, and calculate an intersection of the set of available center frequencies of the second link and the third set of available center frequencies to serve as a fourth set of available center frequencies, wherein the second link is a link between the node device and a neighboring node device in a direction from the first node device to the second node device;

the third sending unit (1204) is configured to send a request message to the neighboring node device in the direction from the first node device to the second node device, wherein the request message carries at least the number of subcarriers, the information on the spectrum bandwidth of a single subcarrier, the subcarrier overlap attribute information, and information on the fourth set of available center frequencies; and

the third cross-connection establishing unit (1205) is configured to establish an optical cross-connection based on a spectrum range determined according to the overlap range of spectrum resources between neighboring subcarriers, the number of subcarriers, the spectrum bandwidth of a single subcarrier, and the continuous center frequency of the subcarriers.

**Patentansprüche**

1. Verfahren zum Herstellen einer optischen Querverbindung eines Mehrfachträgers, Folgendes umfassend:

   Bestimmen (S101a), durch einen ersten Knoten, der Anzahl an Teilträgern, Spektrumsbandbreite eines einzelnen Teilträgers, und Nicht-Überlappung von Spektrumsressourcen zwischen benachbarten Teilträgern einer Verbindung;

   Erhalten (S102a), durch den ersten Knoten, eines ersten Satzes verfügbarer Mittenfrequenzen einer ersten Verknüpfung gemäß der Spektrumsbandbreite eines einzelnen Teilträgers, wobei die erste Verknüpfung eine Verknüpfung zwischen dem ersten Knoten und einem benachbarten Knoten in eine Richtung von dem ersten Knoten zu einem zweiten Knoten ist;

   Senden (S103a), durch den ersten Knoten, einer Anforderungsmitteilung an den benachbarten Knoten in die Richtung von dem ersten Knoten zu dem zweiten Knoten, wobei die Anforderungsmitteilung mindestens die Anzahl an Teilträgern, Informationen über die Spektrumsbandbreite eines einzelnen Teilträgers, Teilträger-Überlappungsattributsinformationen und Informationen über den ersten Satz verfügbarer Mittenfrequenzen trägt, und die Teilträger-Überlappungsattributsinformationen die Nicht-Überlappung von Spektrumsressourcen zwischen benachbarten Teilträgern anzeigen; und

   Empfangen (S104a), durch den ersten Knoten, einer Antwortmitteilung, mit der Informationen über einen Satz Mittenfrequenzen von Teilträgern aus der Antwortmitteilung extrahiert werden, und Erhalten des Satzes Mittenfrequenzen von Teilträgern der Verbindung; und Herstellen (S105a) einer optischen Querverbindung auf der Basis eines Spektrumsbereiches, der gemäß der Nicht-Überlappung von Spektrumsressourcen zwischen benachbarten Teilträgern, dem Satz Mittenfrequenzen der Teilträger und der Spektrumsbandbreite eines einzelnen Teilträgers bestimmt wird, wobei

   der Satz Mittenfrequenzen der Teilträger aus verfügbaren Mittenfrequenzen mit einem nichtüberlappenden Frequenzbereich erstellt wird, die durch den zweiten Knoten aus einem zweiten Satz verfügbarer Mittenfrequenzen ausgewählt werden; und der zweite Satz verfügbarer Mittenfrequenzen eine Schnittmenge von Sätzen verfügbarer Mittenfrequenzen aller Verknüpfungen ist, die von der Verbindung durchquert werden, wobei die Sätze verfügbarer Mittenfrequenzen gemäß der Spektrumsbandbreite eines einzelnen Teilträgers erhalten werden.

2. Verfahren nach Anspruch 1, wobei das Erhalten durch den ersten Knoten eines ersten Satzes verfügbarer Mittenfrequenzen einer ersten Verknüpfung gemäß der Spektrumsbandbreite eines einzelnen Teilträgers speziell umfasst:

Bestimmen, durch den ersten Knoten, eines Frequenzbereiches von jeder freien Mittenfrequenz der ersten Verknüpfung gemäß der Spektrumsbandbreite eines einzelnen Teilträgers; und, wenn alle Spektrumsressourcen in dem Frequenzbereich einer freien Mittenfrequenz freie Spektrumsressourcen sind, Bestimmen der freien Mittenfrequenz als eine verfügbare Mittenfrequenz, und danach Erhalten des ersten Satzes verfügbarer Mittenfrequenzen.

3. Verfahren zum Herstellen einer optischen Querverbindung eines Mehrfachträgers, Folgendes umfassend:

Empfangen (S101b), durch einen zweiten Knoten, einer Anforderungsmitteilung, und Extrahieren der Anzahl an Teilträgern, Informationen über Spektrumsbandbreite eines einzelnen Teilträgers, Teilträger-Überlappungsattributsinformationen, und Informationen über einen zweiten Satz verfügbarer Mittenfrequenzen aus der Anforderungsmitteilung, wobei die Teilträger-Überlappungsattributsinformationen Nicht-Überlappung von Spektrumsressourcen zwischen benachbarten Teilträgern anzeigen, die durch den ersten Knoten bestimmt wird, der zweite Satz verfügbarer Mittenfrequenzen eine Schnittmenge von Sätzen verfügbarer Mittenfrequenzen aller Verknüpfungen ist, die von einer Verbindung durchquert werden, und die Sätze verfügbarer Mittenfrequenzen gemäß der Spektrumsbandbreite eines einzelnen Teilträgers erhalten werden; und
Auswählen (S102b), durch den zweiten Knoten, verfügbarer Mittenfrequenzen mit einem Nicht-Überlappungsfrequenzbereich aus dem zweiten Satz verfügbarer Mittenfrequenzen, um einen Satz Mittenfrequenzen von Teilträgern der Verbindung zu bilden; und Herstellen (S103b) einer optischen Querverbindung auf der Basis eines Spektrumsbereiches, der gemäß der Nicht-Überlappung von Spektrumsressourcen zwischen benachbarten Teilträgern, dem Satz Mittenfrequenzen der Teilträger und der Spektrumsbandbreite eines einzelnen Teilträgers bestimmt wird.

4. Verfahren zum Herstellen einer optischen Querverbindung eines Mehrfachträgers, Folgendes umfassend:

Empfangen (S101c), durch einen dritten Knoten, einer Anforderungsmitteilung und Extrahieren der Anzahl an Teilträgern, Informationen über Spektrumsbandbreite eines einzelnen Teilträgers, Teilträger-Überlappungsattributsinformationen, und Informationen über einen dritten Satz verfügbarer Mittenfrequenzen aus der Anforderungsmitteilung, wobei die Teilträger-Überlappungsattributsinformationen Nicht-Überlappung von Spektrumsressourcen zwischen benachbarten Teilträgern anzeigen, die durch einen ersten Knoten bestimmt wird, der dritte Satz verfügbarer Mittenfrequenzen eine Schnittmenge von Sätzen verfügbarer Mittenfrequenzen aller Verknüpfungen ist, die von einer Verbindung zwischen dem ersten Knoten und dem dritten Knoten durchquert werden, und die Sätze verfügbarer Mittenfrequenzen gemäß der Spektrumsbandbreite eines einzelnen Teilträgers erhalten werden;
Erhalten (S102c,) durch den dritten Knoten, eines Satzes verfügbarer Mittenfrequenzen einer zweiten Verknüpfung gemäß der Spektrumsbandbreite eines einzelnen Teilträgers, und Berechnen einer Schnittmenge des Satzes verfügbarer Mittenfrequenzen der zweiten Verknüpfung und des dritten Satzes verfügbarer Mittenfrequenzen, um als vierter Satz verfügbarer Mittenfrequenzen zu dienen, wobei die zweite Verknüpfung eine Verknüpfung zwischen dem dritten Knoten und einem benachbarten Knoten in eine Richtung von dem ersten Knoten zu einem zweiten Knoten ist;
Senden (S103c), durch den dritten Knoten, einer Anforderungsmitteilung an den benachbarten Knoten in die Richtung von dem ersten Knoten zu dem zweiten Knoten, wobei die Anforderungsmitteilung mindestens die Anzahl an Teilträgern, die Informationen über die Spektrumsbandbreite eines einzelnen Teilträgers, die Teilträger-Überlappungsattributsinformationen und Informationen über den vierten Satz verfügbarer Mittenfrequenzen trägt; und
Empfangen (S104c), durch den dritten Knoten, einer Antwortmitteilung, Extrahieren von Informationen über einen Satz Mittenfrequenzen von Teilträgern aus der Antwortmitteilung, und Erhalten des Satzes Mittenfrequenzen von Teilträgern der Verbindung; und Herstellen (S105c) einer optischen Querverbindung auf der Basis eines Spektrumsbereiches, der gemäß der Nicht-Überlappung von Spektrumsressourcen zwischen benachbarten Teilträgern, dem Satz Mittenfrequenzen der Teilträger und der Spektrumsbandbreite eines einzelnen Teilträgers bestimmt wird, wobei
der Satz Mittenfrequenzen der Teilträger aus verfügbaren Mittenfrequenzen mit einem nichtüberlappenden Frequenzbereich erstellt wird, die durch den zweiten Knoten aus einem zweiten Satz verfügbarer Mittenfrequenzen ausgewählt werden; und der zweite Satz verfügbarer Mittenfrequenzen eine Schnittmenge von Sätzen verfügbarer Mittenfrequenzen aller Verknüpfungen ist, die von der Verbindung durchquert werden, wobei die Sätze verfügbarer Mittenfrequenzen gemäß der Spektrumsbandbreite eines einzelnen Teilträgers erhalten werden.

5. Verfahren nach Anspruch 4, wobei das Erhalten durch den dritten Knoten eines Satzes verfügbarer Mittenfrequenzen einer zweiten Verknüpfung gemäß der Spektrumsbandbreite eines einzelnen Teilträgers speziell umfasst:

Bestimmen, durch den dritten Knoten, eines Frequenzbereiches von jeder freien Mittenfrequenz der zweiten Verknüpfung gemäß der Spektrumsbandbreite eines einzelnen Teilträgers; und, wenn alle Spektrumsressourcen in dem Frequenzbereich einer freien Mittenfrequenz freie Spektrumsressourcen sind, Bestimmen der freien Mittenfrequenz als eine verfügbare Mittenfrequenz, und danach Erhalten des Satzes verfügbarer Mittenfrequenzen der zweiten Verknüpfung.

6. Verfahren zum Herstellen einer optischen Querverbindung eines Mehrfachträgers, Folgendes umfassend:

Bestimmen (S101d), durch einen ersten Knoten, der Anzahl an Teilträgern, der Spektrumsbandbreite eines einzelnen Teilträgers, und eines Überlappungsbereiches von Spektrumsressourcen zwischen benachbarten Teilträgern einer Verbindung; und Bestimmen einer kontinuierlichen Spektrumsbandbreite, die von allen Teilträgern gemäß der Anzahl an Teilträgern, der Spektrumsbandbreite eines einzelnen Teilträgers und dem Überlappungsbereich von Spektrumsressourcen zwischen benachbarten Teilträgern belegt wird;
Erhalten (S102d), durch den ersten Knoten, eines ersten Satzes verfügbarer Mittenfrequenzen einer ersten Verknüpfung gemäß der kontinuierlichen Spektrumsbandbreite, die von allen Teilträgern belegt wird, wobei die erste Verknüpfung eine Verknüpfung zwischen dem ersten Knoten und einem benachbarten Knoten in eine Richtung von dem ersten Knoten zu einem zweiten Knoten ist;
Senden (S103d), durch den ersten Knoten, einer Anforderungsmitteilung an den benachbarten Knoten in die Richtung von dem ersten Knoten zu dem zweiten Knoten, wobei die Anforderungsmitteilung mindestens die Anzahl an Teilträgern, Informationen über die Spektrumsbandbreite eines einzelnen Teilträgers, Teilträger-Überlappungsattributsinformationen und Informationen über den ersten Satz verfügbarer Mittenfrequenzen trägt, und die Teilträger-Überlappungsattributsinformationen den Überlappungsbereich von Spektrumsressourcen zwischen benachbarten Teilträgern anzeigen; und
Empfangen (S104d), durch den ersten Knoten, einer Antwortmitteilung, Extrahieren der Informationen über eine kontinuierliche Mittenfrequenz von Teilträgern aus der Antwortmitteilung, und Erhalten der kontinuierlichen Mittenfrequenz der Teilträger; und Herstellen (S105d) einer optischen Querverbindung auf der Basis eines Spektrumsbereiches, der gemäß dem Überlappungsbereich von Spektrumsressourcen zwischen benachbarten Teilträgern, der Anzahl an Teilträgern, der Spektrumsbandbreite eines einzelnen Teilträgers und der kontinuierlichen Mittenfrequenz der Teilträger bestimmt wird, wobei
die kontinuierliche Mittenfrequenz der Teilträger eine verfügbare Mittenfrequenz ist, die durch den zweiten Knoten aus einem zweiten Satz verfügbarer Mittenfrequenzen ausgewählt wird; und der zweite Satz verfügbarer Mittenfrequenzen eine Schnittmenge von Sätzen verfügbarer Mittenfrequenzen aller Verknüpfungen ist, die von der Verbindung durchquert werden, wobei die Sätze verfügbarer Mittenfrequenzen gemäß der kontinuierlichen Spektrumsbandbreite erhalten werden, die von allen Teilträger belegt wird.

7. Verfahren nach Anspruch 6, wobei das Erhalten durch den ersten Knoten eines ersten Satzes verfügbarer Mittenfrequenzen einer ersten Verknüpfung gemäß der kontinuierlichen Spektrumsbandbreite, die von allen Teilträgern belegt wird, speziell umfasst:

Bestimmen, durch den ersten Knoten, eines Frequenzbereiches von jeder freien Mittenfrequenz der ersten Verknüpfung gemäß der kontinuierlichen Spektrumsbandbreite, die von allen Teilträgern belegt wird; und, wenn alle Spektrumsressourcen in dem Frequenzbereich einer freien Mittenfrequenz freie Spektrumsressourcen sind, Bestimmen der freien Mittenfrequenz als eine verfügbare Mittenfrequenz, und danach Erhalten des ersten Satzes der verfügbaren Mittenfrequenzen.

8. Verfahren zum Herstellen einer optischen Querverbindung eines Mehrfachträgers, Folgendes umfassend:

Empfangen (S101e), durch einen zweiten Knoten, einer Anforderungsmitteilung, und Extrahieren der Anzahl an Teilträgern, Informationen über Spektrumsbandbreite eines einzelnen Teilträgers, Teilträger-Überlappungsattributsinformationen, und Informationen über einen zweiten Satz verfügbarer Mittenfrequenzen aus der Anforderungsmitteilung, wobei die Teilträger-Überlappungsattributsinformationen einen Überlappungsbereich von Spektrumsressourcen zwischen benachbarten Teilträgern anzeigen, der durch den ersten Knoten bestimmt wird, der zweite Satz verfügbarer Mittenfrequenzen eine Schnittmenge von Sätzen verfügbarer Mittenfrequenzen aller Verknüpfungen ist, die von einer Verbindung durchquert werden, die Sätze verfügbarer Mittenfrequenzen gemäß einer kontinuierlichen Spektrumsbandbreite erhalten werden, die von allen Teilträgern belegt wird, und die kontinuierliche Spektrumsbandbreite, die von allen Teilträgern belegt wird, gemäß der Anzahl an Teilträgern, der Spektrumsbandbreite eines einzelnen Teilträgers, und dem Überlappungsbereich von Spektrumsressourcen zwischen benachbarten Teilträgern bestimmt wird; und

Auswählen (S102e), durch den zweiten Knoten, verfügbarer Mittenfrequenzen aus dem zweiten Satz verfügbarer Mittenfrequenzen, um als eine kontinuierliche Mittenfrequenz von Teilträgern der Verbindung zu dienen; und Herstellen (S103e) einer optischen Querverbindung auf der Basis eines Spektrumsbereiches, der gemäß dem Überlappungsbereich von Spektrumsressourcen zwischen benachbarten Teilträgern, der Anzahl an Teilträgern, der Spektrumsbandbreite eines einzelnen Teilträgers und der kontinuierlichen Mittenfrequenzen der Teilträger bestimmt wird.

9. Verfahren zum Herstellen einer optischen Querverbindung eines Mehrfachträgers, Folgendes umfassend:

Empfangen (S101f), durch einen dritten Knoten, einer Anforderungsmitteilung, und Extrahieren der Anzahl an Teilträgern, Informationen über Spektrumsbandbreite eines einzelnen Teilträgers, Teilträger-Überlappungsattributsinformationen, und Informationen über einen dritten Satz verfügbarer Mittenfrequenzen aus der Anforderungsmitteilung, wobei die Teilträger-Überlappungsattributsinformationen einen Überlappungsbereich von Spektrumsressourcen zwischen benachbarten Teilträgern anzeigen, der durch einen ersten Knoten bestimmt wird, der dritte Satz verfügbarer Mittenfrequenzen eine Schnittmenge von Sätzen verfügbarer Mittenfrequenzen aller Verknüpfungen ist, die von einer Verbindung zwischen dem ersten Knoten und dem dritten Knoten durchquert werden, und die Sätze verfügbarer Mittenfrequenzen gemäß einer kontinuierlichen Spektrumsbandbreite erhalten werden, die von allen Teilträgern belegt wird;

Bestimmen (S102f), durch den dritten Knoten, der kontinuierlichen Spektrumsbandbreite, die von allen Teilträgern belegt wird, gemäß der Anzahl an Teilträgern, der Spektrumsbandbreite eines einzelnen Teilträgers, und dem Überlappungsbereich von Spektrumsressourcen zwischen benachbarten Teilträgern; Erhalten (S103f), durch den dritten Knoten, eines Satzes verfügbarer Mittenfrequenzen einer zweiten Verknüpfung gemäß der kontinuierlichen Spektrumsbandbreite, die von allen Teilträgern belegt wird, und Berechnen einer Schnittmenge des Satzes verfügbarer Mittenfrequenzen der zweiten Verknüpfung und des dritten Satzes verfügbarer Mittenfrequenzen, um als ein vierter Satz verfügbarer Mittenfrequenzen zu dienen, wobei die zweite Verknüpfung eine Verknüpfung zwischen dem dritten Knoten und einem benachbarten Knoten in eine Richtung von dem ersten Knoten zu einem zweiten Knoten ist; Senden (S104f), durch den dritten Knoten, einer Anforderungsmitteilung an den benachbarten Knoten in die Richtung von dem ersten Knoten zu dem zweiten Knoten, wobei die Anforderungsmitteilung mindestens die Anzahl an Teilträgern, die Informationen über die Spektrumsbandbreite eines einzelnen Teilträgers, die Teilträger-Überlappungsattributsinformationen und Informationen über den vierten Satz verfügbarer Mittenfrequenzen trägt; und

Empfangen (S105f), durch den dritten Knoten, einer Antwortmitteilung, Extrahieren der Informationen über eine kontinuierliche Mittenfrequenz von Teilträgern aus der Antwortmitteilung, und Erhalten der kontinuierlichen Mittenfrequenz der Teilträger; und Herstellen (S106f) einer optischen Querverbindung auf der Basis eines Spektrumsbereiches, der gemäß dem Überlappungsbereich von Spektrumsressourcen zwischen benachbarten Teilträgern, der Anzahl an Teilträgern, der Spektrumsbandbreite eines einzelnen Teilträgers und der kontinuierlichen Mittenfrequenz der Teilträger bestimmt wird, wobei

die kontinuierliche Mittenfrequenz der Teilträger eine verfügbare Mittenfrequenz ist, die durch den zweiten Knoten aus einem zweiten Satz verfügbarer Mittenfrequenzen ausgewählt wird; und der zweite Satz verfügbarer Mittenfrequenzen eine Schnittmenge von Sätzen verfügbarer Mittenfrequenzen aller Verknüpfungen ist, die von der Verbindung durchquert werden, wobei die Sätze verfügbarer Mittenfrequenzen gemäß der kontinuierlichen Spektrumsbandbreite erhalten werden, die von allen Teilträger belegt wird.

10. Verfahren nach Anspruch 9, wobei das Erhalten durch den dritten Knoten eines Satzes verfügbarer Mittenfrequenzen einer zweiten Verknüpfung gemäß der kontinuierlichen Spektrumsbandbreite, die von allen Teilträgern belegt wird, speziell umfasst:

Bestimmen, durch den dritten Knoten, eines Frequenzbereiches jeder freien Mittenfrequenz der zweiten Verknüpfung gemäß der kontinuierlichen Spektrumsbandbreite, die von allen Teilträgern belegt wird; und, wenn alle Spektrumsressourcen in dem Frequenzbereich einer freien Mittenfrequenz freie Spektrumsressourcen sind, Bestimmen der freien Mittenfrequenz als eine verfügbare Mittenfrequenz, und danach Erhalten des Satzes verfügbarer Mittenfrequenzen der zweiten Verknüpfung.

11. Knotenvorrichtung, umfassend eine erste Bestimmungseinheit (701), eine erste Verarbeitungseinheit (702), eine erste Sendeeinheit (703), eine erste Empfangseinheit (704) und eine erste Querverbindungsherstellungseinheit (705), wobei

die erste Bestimmungseinheit (701) dazu ausgestaltet ist, die Anzahl an Teilträgern, Spektrumsbandbreite eines einzelnen Teilträgers, und Nicht-Überlappung von Spektrumsressourcen zwischen benachbarten Teilträgern einer Verbindung zu bestimmen;

die erste Verarbeitungseinheit (702) dazu ausgestaltet ist, einen ersten Satz verfügbarer Mittenfrequenzen einer ersten Verknüpfung gemäß der Spektrumsbandbreite eines einzelnen Teilträgers zu erhalten, wobei die erste Verknüpfung eine Verknüpfung zwischen der Knotenvorrichtung und einer benachbarten Knotenvorrichtung in eine Richtung von der ersten Knotenvorrichtung zu einer zweiten Knotenvorrichtung ist;

die erste Sendeeinheit (703) dazu ausgestaltet ist, eine Anforderungsmitteilung an die benachbarte Knotenvorrichtung in die Richtung von der ersten Knotenvorrichtung zu der zweiten Knotenvorrichtung zu senden, wobei die Anforderungsmitteilung mindestens die Anzahl an Teilträgern, Informationen über die Spektrumsbandbreite eines einzelnen Teilträgers, Teilträger-Überlappungsattributsinformationen und Informationen über den ersten Satz verfügbarer Mittenfrequenzen trägt, und die Teilträger-Überlappungsattributsinformationen die Nicht-Überlappung von Spektrumsressourcen zwischen benachbarten Teilträgern anzeigen;

die erste Empfangseinheit (704) dazu ausgestaltet ist, eine Antwortmitteilung zu empfangen, Informationen über einen Satz Mittenfrequenzen von Teilträgern aus der Antwortmitteilung zu extrahieren, und einen Satz Mittenfrequenzen der Teilträger der Verbindung zu erhalten, wobei der Satz Mittenfrequenzen der Teilträger aus verfügbaren Mittenfrequenzen mit einem nichtüberlappenden Frequenzbereich erstellt wird, der durch die zweite Knotenvorrichtung aus einem zweiten Satz verfügbarer Mittenfrequenzen ausgewählt wird; und der zweite Satz verfügbarer Mittenfrequenzen eine Schnittmenge von Sätzen verfügbarer Mittenfrequenzen aller Verknüpfungen ist, die von der Verbindung durchquert werden, wobei die Sätze verfügbarer Mittenfrequenzen gemäß der Spektrumsbandbreite eines einzelnen Teilträgers erhalten werden; und

die erste Querverbindungsherstellungseinheit (705) dazu ausgestaltet ist, eine optische Querverbindung auf der Basis eines Spektrumsbereiches herzustellen, der gemäß der Nicht-Überlappung von Spektrumsressourcen zwischen benachbarten Teilträgern, dem Satz Mittenfrequenzen der Teilträger und der Spektrumsbandbreite eines einzelnen Teilträgers bestimmt wird.

12. Knotenvorrichtung, umfassend eine zweite Empfangseinheit (801), eine zweite Verarbeitungseinheit (802) und eine Querverbindungsherstellungseinheit (803), wobei

die zweite Empfangseinheit (801) dazu ausgestaltet ist, eine Anforderungsmitteilung zu empfangen, und die Anzahl an Teilträgern, Informationen über Spektrumsbandbreite eines einzelnen Teilträgers, Teilträger-Überlappungsattributsinformationen, und Informationen über einen zweiten Satz verfügbarer Mittenfrequenzen aus der Anforderungsmitteilung zu extrahieren, wobei die Teilträger-Überlappungsattributsinformationen Nicht-Überlappung von Spektrumsressourcen zwischen benachbarten Teilträgern anzeigen, die durch eine erste Knotenvorrichtung bestimmt wird, der zweite Satz verfügbarer Mittenfrequenzen eine Schnittmenge von Sätzen verfügbarer Mittenfrequenzen aller Verknüpfungen ist, die von einer Verbindung durchquert werden, und die Sätze verfügbarer Mittenfrequenzen gemäß der Spektrumsbandbreite eines einzelnen Teilträgers erhalten werden;

die zweite Verarbeitungseinheit (802) dazu ausgestaltet ist, verfügbare Mittenfrequenzen mit einem Nicht-Überlappungsfrequenzbereich aus dem zweiten Satz verfügbarer Mittenfrequenzen auszuwählen, um einen Satz Mittenfrequenzen von Teilträgern der Verbindung auszubilden; und

die zweite Querverbindungsherstellungseinheit (803) dazu ausgestaltet ist, eine optische Querverbindung auf der Basis eines Spektrumsbereiches herzustellen, der gemäß der Nicht-Überlappung von Spektrumsressourcen zwischen benachbarten Teilträgern, dem Satz Mittenfrequenzen der Teilträger und der Spektrumsbandbreite eines einzelnen Teilträgers bestimmt wird.

13. Knotenvorrichtung, umfassend eine dritte Empfangseinheit (901), eine dritte Verarbeitungseinheit (902), eine dritte Sendeeinheit (903) und eine dritte Querverbindungsherstellungseinheit (904), wobei

die dritte Empfangseinheit (901) dazu ausgestaltet ist, eine Anforderungsmitteilung zu empfangen, die Anzahl an Teilträgern, Informationen über Spektrumsbandbreite eines einzelnen Teilträgers, Teilträger-Überlappungsattributsinformationen und Informationen über einen dritten Satz verfügbarer Mittenfrequenzen aus der Antwortmitteilung zu extrahieren, wobei die Teilträger-Überlappungsattributsinformationen eine Nicht-Überlappung von Spektrumsressourcen zwischen benachbarten Teilträgern anzeigen, die durch eine erste Knotenvorrichtung bestimmt wird, der dritte Satz verfügbarer Mittenfrequenzen eine Schnittmenge von Sätzen verfügbarer Mittenfrequenzen aller Verknüpfungen ist, die von einer Verbindung zwischen der ersten Knotenvorrichtung und der Knotenvorrichtung durchquert werden, und die Sätze verfügbarer Mittenfrequenzen gemäß der Spektrumsbandbreite eines einzelnen Teilträgers erhalten werden; und ferner dazu ausgestaltet ist, eine Antwortmitteilung zu empfangen, die Informationen über einen Satz Mittenfrequenzen von Teilträgern aus der Antwortmitteilung zu extrahieren, und einen Satz Mittenfrequenzen der Teilträger der Verbindung zu erhalten, wobei der Satz Mittenfrequenzen der Teilträger aus verfügbarer Mittenfrequenzen mit einem Nicht-Überlappungsfrequenzbereich erstellt wird, der durch eine zweite Knotenvorrichtung aus einem zweiten Satz verfügbarer Mittenfrequenzen ausgewählt wird, wobei der zweite Satz verfügbarer Mittenfrequenzen eine Schnittmenge von Sätzen verfügbarer Mittenfrequenzen aller Verknüpfungen ist, die von der Verbindung durchquert werden, und die Sätze verfügbarer Mittenfrequenzen gemäß der Spektrumsbandbreite eines einzelnen Teilträgers erhalten werden;

die dritte Verarbeitungseinheit (902) dazu ausgestaltet ist, einen Satz verfügbarer Mittenfrequenzen einer zweiten Verknüpfung gemäß der Spektrumsbandbreite eines einzelnen Teilträgers zu erhalten, und eine Schnittmenge des Satzes verfügbarer Mittenfrequenzen der zweiten Verknüpfung und des dritten Satzes verfügbarer Mittenfrequenzen zu berechnen, um als vierter Satz verfügbarer Mittenfrequenzen zu dienen, wobei die zweite Verknüpfung eine Verknüpfung zwischen der Knotenvorrichtung und einer benachbarten Knotenvorrichtung in eine Richtung von der ersten Knotenvorrichtung zu der zweiten Knotenvorrichtung ist;

die dritte Sendeeinheit (903) dazu ausgestaltet ist, eine Anforderungsmitteilung an die benachbarte Knotenvorrichtung in die Richtung von der ersten Knotenvorrichtung zu der zweiten Knotenvorrichtung zu senden, wobei die Anforderungsmitteilung mindestens die Anzahl an Teilträgern, die Informationen über die Spektrumsbandbreite eines einzelnen Teilträgers, die Teilträger-Überlappungsattributsinformationen und Informationen über den vierten Satz verfügbarer Mittenfrequenzen trägt; und

die dritte Querverbindungsherstellungseinheit (904) dazu ausgestaltet ist, eine optische Querverbindung auf der Basis eines Spektrumsbereiches herzustellen, der gemäß der Nicht-Überlappung von Spektrumsressourcen zwischen benachbarten Teilträgern, dem Satz Mittenfrequenzen der Teilträger und der Spektrumsbandbreite eines einzelnen Teilträgers bestimmt wird.

14. Knotenvorrichtung, umfassend eine erste Bestimmungseinheit (1001), eine erste Verarbeitungseinheit (1002), eine erste Sendeeinheit (1003), eine erste Empfangseinheit (1004) und eine erste Querverbindungsherstellungseinheit (1005), wobei

die erste Bestimmungseinheit (1001) dazu ausgestaltet ist, die Anzahl an Teilträgern, die Spektrumsbandbreite eines einzelnen Teilträgers, und einen Überlappungsbereich von Spektrumsressourcen zwischen benachbarten Teilträgern einer Verbindung zu bestimmen, und eine kontinuierliche Spektrumsbandbreite zu bestimmen, die von allen Teilträgern gemäß der Anzahl an Teilträgern, der Spektrumsbandbreite eines einzelnen Teilträgers und dem Überlappungsbereich von Spektrumsressourcen zwischen benachbarten Teilträgern belegt wird;

die erste Verarbeitungseinheit (1002) dazu ausgestaltet ist, einen ersten Satz verfügbarer Mittenfrequenzen einer ersten Verknüpfung gemäß der kontinuierlichen Spektrumsbandbreite zu erhalten, die von allen Teilträgern belegt wird, wobei die erste Verknüpfung eine Verknüpfung zwischen der Knotenvorrichtung und einer benachbarten Knotenvorrichtung in eine Richtung von der Knotenvorrichtung zu einer zweiten Knotenvorrichtung ist;

die erste Sendeeinheit (1003) dazu ausgestaltet ist, eine Anforderungsmitteilung an die benachbarte Knotenvorrichtung in die Richtung von der Knotenvorrichtung an die zweite Knotenvorrichtung zu senden, wobei die Anforderungsmitteilung mindestens die Anzahl an Teilträgern, Informationen über die Spektrumsbandbreite eines einzelnen Teilträgers, Teilträger-Überlappungsattributsinformationen und Informationen über den ersten Satz verfügbarer Mittenfrequenzen trägt, und die Teilträger-Überlappungsattributsinformationen den Überlappungsbereich von Spektrumsressourcen zwischen benachbarten Teilträgern anzeigen;

die erste Empfangseinheit (1004) dazu ausgestaltet ist, eine Antwortmitteilung zu empfangen, Informationen über eine kontinuierliche Mittenfrequenz der Teilträger aus der Antwortmitteilung zu extrahieren, und die kontinuierliche Mittenfrequenz der Teilträger zu erhalten, wobei die kontinuierliche Mittenfrequenz der Teilträger eine verfügbare Mittenfrequenz ist, die durch die zweite Knotenvorrichtung aus einem zweiten Satz verfügbarer Mittenfrequenzen ausgewählt wird, der zweite Satz verfügbarer Mittenfrequenzen eine Schnittmenge von Sätzen verfügbarer Mittenfrequenzen aller Verknüpfungen ist, die von der Verbindung durchquert werden, und die Sätze verfügbarer Mittenfrequenzen gemäß der kontinuierlichen Spektrumsbandbreite erhalten werden, die von allen Teilträgern belegt wird; und

die erste Querverbindungsherstellungseinheit (1005) dazu ausgestaltet ist, eine optische Querverbindung auf der Basis eines Spektrumsbereiches herzustellen, der gemäß dem Überlappungsbereich von Spektrumsressourcen zwischen benachbarten Teilträgern, der Anzahl an Teilträgern, der Spektrumsbandbreite eines einzelnen Teilträgers und der kontinuierlichen Mittenfrequenz der Teilträger bestimmt wird.

15. Knotenvorrichtung, umfassend eine zweite Empfangseinheit (1101), eine zweite Verarbeitungseinheit (1102) und eine zweite Querverbindungsherstellungseinheit (1103), wobei

die zweite Empfangseinheit (1101) dazu ausgestaltet ist, eine Anforderungsmitteilung zu empfangen, und die Anzahl an Teilträgern, Informationen über Spektrumsbandbreite eines einzelnen Teilträgers, Teilträger-Überlappungsattributsinformationen, und Informationen über einen zweiten Satz verfügbarer Mittenfrequenzen aus der Anforderungsmitteilung zu extrahieren, wobei die Teilträger-Überlappungsattributsinformationen einen Überlappungsbereich von Spektrumsressourcen zwischen benachbarten Teilträgern anzeigen, der durch eine erste Knotenvorrichtung bestimmt wird, der zweite Satz verfügbarer Mittenfrequenzen eine Schnittmenge von Sätzen verfügbarer Mittenfrequenzen aller Verknüpfungen ist, die von einer Verbindung durchquert werden, die Sätze verfügbarer Mittenfrequenzen gemäß einer kontinuierlichen Spektrumsbandbreite erhalten werden, die von allen Teilträgern belegt wird, und die kontinuierliche Spektrumsbandbreite, die von allen Teilträgern belegt wird, gemäß der Anzahl an Teilträgern, der Spektrumsbandbreite eines einzelnen Teilträgers, und dem Überlappungsbereich von Spektrumsressourcen zwischen benachbarten Teilträgern bestimmt wird;

die zweite Verarbeitungseinheit (1102) dazu ausgestaltet ist, eine verfügbare Mittenfrequenz aus dem zweiten Satz verfügbarer Mittenfrequenzen auszuwählen, um als eine kontinuierlichen Mittenfrequenz von Teilträgern der Verbindung zu dienen; und

die zweite Querverbindungsherstellungseinheit (1103) dazu ausgestaltet ist, eine optische Querverbindung auf der Basis eines Spektrumsbereiches herzustellen, der gemäß dem Überlappungsbereich von Spektrumsressourcen zwischen benachbarten Teilträgern, der Anzahl an Teilträgern, der Spektrumsbandbreite eines einzelnen Teilträgers und der kontinuierlichen Mittenfrequenz der Teilträger bestimmt wird.

16. Knotenvorrichtung, umfassend eine dritte Empfangseinheit (1201) eine dritte Bestimmungseinheit (1202), eine dritte Verarbeitungseinheit (1203), eine Sendeeinheit (1204) und eine dritte Querverbindungsherstellungseinheit (1205), wobei

die dritte Empfangseinheit (1201) dazu ausgestaltet ist, eine Anforderungsmitteilung zu empfangen, und die Anzahl an Teilträgern, Informationen über Spektrumsbandbreite eines einzelnen Teilträgers, Teilträger-Überlappungsattributsinformationen und Informationen über einen dritten Satz verfügbarer Mittenfrequenzen aus der Antwortmitteilung zu extrahieren, wobei die Teilträger-Überlappungsattributsinformationen einen Überlappungsbereich von Spektrumsressourcen zwischen benachbarten Teilträgern anzeigen, der durch eine erste Knotenvorrichtung bestimmt wird, der dritte Satz verfügbarer Mittenfrequenzen eine Schnittmenge von Sätzen verfügbarer Mittenfrequenzen aller Verknüpfungen ist, die von einer Verbindung zwischen der ersten Knotenvorrichtung und der Knotenvorrichtung durchquert werden, und die Sätze verfügbarer Mittenfrequenzen gemäß der kontinuierlichen Spektrumsbandbreite erhalten werden, die von allen Teilträgern belegt wird; und ferner dazu ausgestaltet ist, eine Antwortmitteilung zu empfangen, die Informationen einer kontinuierlichen Mittenfrequenz der Teilträger aus der Antwortmitteilung zu extrahieren, und die kontinuierliche Mittenfrequenz der Teilträger zu erhalten, wobei die kontinuierliche Mittenfrequenz der Teilträger eine verfügbare Mittenfrequenz ist, die durch eine zweite Knotenvorrichtung aus einem zweiten Satz verfügbarer Mittenfrequenzen ausgewählt wird, der zweite Satz verfügbarer Mittenfrequenzen eine Schnittmenge von Sätzen verfügbarer Mittenfrequenzen aller Verknüpfungen ist, die von der Verbindung durchquert werden, und die Sätze verfügbarer Mittenfrequenzen gemäß der kontinuierlichen Spektrumsbandbreite erhalten werden, die von aller Teilträgern belegt wird;

die dritte Bestimmungseinheit (1202) dazu ausgestaltet ist, die kontinuierliche Spektrumsbandbreite, die von allen Teilträgern belegt wird, gemäß der Anzahl an Teilträgern, der Spektrumsbandbreite eines einzelnen Teilträgers und dem Überlappungsbereich von Spektrumsressourcen zwischen benachbarten Teilträgern zu bestimmen;

die dritte Verarbeitungseinheit (1203) dazu ausgestaltet ist, einen Satz verfügbarer Mittenfrequenzen einer zweiten Verknüpfung gemäß der kontinuierlichen Spektrumsbandbreite zu erhalten, die von allen Teilträgern belegt wird, und eine Schnittmenge des Satzes verfügbarer Mittenfrequenzen der zweiten Verknüpfung und des dritten Satzes verfügbarer Mittenfrequenzen zu berechnen, um als vierter Satz verfügbarer Mittenfrequenzen zu dienen, wobei die zweite Verknüpfung eine Verknüpfung zwischen der Knotenvorrichtung und einer benachbarten Knotenvorrichtung in eine Richtung von der ersten Knotenvorrichtung zu der zweiten Knotenvorrichtung ist;

die dritte Sendeeinheit (1204) dazu ausgestaltet ist, eine Anforderungsmitteilung an die benachbarte Knotenvorrichtung in die Richtung von der ersten Knotenvorrichtung zu der zweiten Knotenvorrichtung zu senden, wobei die Anforderungsmitteilung mindestens die Anzahl an Teilträgern, die Informationen über die Spektrumsbandbreite eines einzelnen Teilträgers, die Teilträger-Überlappungsattributsinformationen und Informationen über den vierten Satz verfügbarer Mittenfrequenzen trägt; und

die dritte Querverbindungsherstellungseinheit (1205) dazu ausgestaltet ist, eine optische Querverbindung auf der Basis eines Spektrumsbereiches herzustellen, der gemäß dem Überlappungsbereich von Spektrumsressourcen zwischen benachbarten Teilträgern, der Anzahl an Teilträgern, der Spektrumsbandbreite eines einzelnen Teilträgers und der kontinuierlichen Mittenfrequenz der Teilträger bestimmt wird.

## Revendications

1. Procédé pour établir une interconnexion optique multi-porteuse, comprenant :

la détermination (S101a), par un premier noeud, du nombre de sous-porteuses, de la largeur de bande spectrale d'une sous-porteuse unique, et du non-chevauchement de ressources spectrales entre des sous-porteuses voisines d'une connexion ;

l'obtention (S102a), par le premier noeud, d'un premier ensemble de fréquences centrales disponibles d'une première liaison selon la largeur de bande spectrale d'une sous-porteuse unique, dans lequel la première liaison est une liaison entre le premier noeud et un noeud voisin dans une direction allant du premier noeud à un deuxième noeud ;

l'envoi (S103a), par le premier noeud, d'un message de demande au noeud voisin dans la direction allant du premier noeud au deuxième noeud, dans lequel le message de demande achemine au moins le nombre de sous-porteuses, des informations concernant la largeur de bande spectrale d'une sous-porteuse unique, des informations d'attributs de chevauchement de sous-porteuses, et des informations concernant le premier ensemble de fréquences centrales disponibles, et les informations d'attributs de chevauchement de sous-porteuses indiquent le non-chevauchement de ressources spectrales entre des sous-porteuses voisines ; et

la réception (S104a), par le premier noeud, d'un message de réponse, l'extraction d'informations concernant un ensemble de fréquences centrales de sous-porteuses à partir du message de réponse, et l'obtention de l'ensemble de fréquences centrales de sous-porteuses de la connexion; et l'établissement (S105a) d'une interconnexion optique sur la base d'une gamme spectrale déterminée selon le non-chevauchement de ressources spectrales entre des sous-porteuses voisines, l'ensemble de fréquences centrales des sous-porteuses, et la largeur de bande spectrale d'une sous-porteuse unique, dans lequel

l'ensemble de fréquences centrales des sous-porteuses est composé de fréquences centrales disponibles ayant une gamme de fréquences de non-chevauchement qui sont sélectionnées par le deuxième noeud dans un deuxième ensemble de fréquences centrales disponibles ; et le deuxième ensemble de fréquences centrales disponibles est une intersection d'ensembles de fréquences centrales disponibles de toutes les liaisons parcourues par la connexion, dans lequel les ensembles de fréquences centrales disponibles sont obtenus selon la largeur de bande spectrale d'une sous-porteuse unique.

2. Procédé selon la revendication 1, dans lequel l'obtention, par le premier noeud, d'un premier ensemble de fréquences centrales disponibles d'une première liaison selon la largeur de bande spectrale d'une sous-porteuse unique comprend plus précisément :

la détermination, par le premier noeud, d'une gamme de fréquences de chaque fréquence centrale libre de la première liaison selon la largeur de bande spectrale d'une sous-porteuse unique ; et, si toutes les ressources spectrales dans la gamme de fréquences d'une fréquence centrale libre sont des ressources spectrales libres, la détermination de la fréquence centrale libre comme étant une fréquence centrale disponible, puis l'obtention du premier ensemble des fréquences centrales disponibles.

3. Procédé pour établir une interconnexion optique multi-porteuse, comprenant :

la réception (S101b), par un deuxième noeud, d'un message de demande, et l'extraction du nombre de sous-porteuses, d'informations concernant la largeur de bande spectrale d'une sous-porteuse unique, d'informations d'attributs de chevauchement de sous-porteuses, et d'informations concernant un deuxième ensemble de fréquences centrales disponibles à partir du message de demande, dans lequel les informations d'attributs de chevauchement de sous-porteuses indiquent un non-chevauchement de ressources spectrales entre des sous-porteuses voisines, qui est déterminé par un premier noeud, le deuxième ensemble de fréquences centrales disponibles est une intersection d'ensembles de fréquences centrales disponibles de toutes les liaisons parcourues par une connexion, et les ensembles de fréquences centrales disponibles sont obtenus selon la largeur de bande spectrale d'une sous-porteuse unique ; et

la sélection (S102b), par le deuxième noeud, de fréquences centrales disponibles ayant une gamme de fréquences de non-chevauchement dans le deuxième ensemble de fréquences centrales disponibles afin de former un ensemble de fréquences centrales de sous-porteuses de la connexion; et l'établissement (S103b) d'une interconnexion optique sur la base d'une gamme spectrale déterminée selon le non-chevauchement de ressources spectrales entre des sous-porteuses voisines, l'ensemble de fréquences centrales des sous-porteuses, et la largeur de bande spectrale d'une sous-porteuse unique.

4. Procédé pour établir une interconnexion optique multi-porteuse, comprenant :

la réception (S101c), par un troisième noeud, d'un message de demande, et l'extraction du nombre de sous-porteuses, d'informations concernant la largeur de bande spectrale d'une sous-porteuse unique, d'informations d'attributs de chevauchement de sous-porteuses, et d'informations concernant un troisième ensemble de fréquences centrales disponibles à partir du message de demande, dans lequel les informations d'attributs de chevauchement de sous-porteuses indiquent un non-chevauchement de ressources spectrales entre des sous-porteuses voisines, qui est déterminé par un premier noeud, le troisième ensemble de fréquences centrales disponibles est une intersection d'ensembles de fréquences centrales disponibles de toutes les liaisons parcourues par une connexion entre le premier noeud et le troisième noeud, et les ensembles de fréquences centrales disponibles sont obtenus selon la largeur de bande spectrale d'une sous-porteuse unique ;

l'obtention (S102c), par le troisième noeud, d'un ensemble de fréquences centrales disponibles d'une deuxième liaison selon la largeur de bande spectrale d'une sous-porteuse unique, et le calcul d'une intersection de l'ensemble de fréquences centrales disponibles de la deuxième liaison et du troisième ensemble de fréquences centrales disponibles en tant que quatrième ensemble de fréquences centrales disponibles, dans lequel la deuxième liaison est une liaison entre le troisième noeud et un noeud voisin dans une direction allant du premier noeud à un deuxième noeud ;

l'envoi (S103c), par le troisième noeud, d'un message de demande au noeud voisin dans la direction allant du premier noeud au deuxième noeud, dans lequel le message de demande achemine au moins le nombre de sous-porteuses, les informations concernant la largeur de bande spectrale d'une sous-porteuse unique, les informations d'attributs de chevauchement de sous-porteuses, et des informations concernant le quatrième ensemble de fréquences centrales disponibles ; et

la réception (S104c), par le troisième noeud, d'un message de réponse, l'extraction d'informations concernant un ensemble de fréquences centrales de sous-porteuses à partir du message de réponse, et l'obtention de l'ensemble de fréquences centrales de sous-porteuses de la connexion; et l'établissement (S105c) d'une interconnexion optique sur la base d'une gamme spectrale déterminée selon le non-chevauchement de ressources spectrales entre des sous-porteuses voisines, l'ensemble de fréquences centrales des sous-porteuses, et la largeur de bande spectrale d'une sous-porteuse unique, dans lequel

l'ensemble de fréquences centrales des sous-porteuses est composé de fréquences centrales disponibles ayant une gamme de fréquences de non-chevauchement qui sont sélectionnées par le deuxième noeud dans un deuxième ensemble de fréquences centrales disponibles ; et le deuxième ensemble de fréquences centrales disponibles est une intersection d'ensembles de fréquences centrales disponibles de toutes les liaisons parcourues par la connexion, dans lequel les ensembles de fréquences centrales disponibles sont obtenus selon la largeur de bande spectrale d'une sous-porteuse unique.

5. Procédé selon la revendication 4, dans lequel l'obtention, par le troisième noeud, d'un ensemble de fréquences centrales disponibles d'une deuxième liaison selon la largeur de bande spectrale d'une sous-porteuse unique comprend plus précisément :

la détermination, par le troisième noeud, d'une gamme de fréquences de chaque fréquence centrale libre de la deuxième liaison selon la largeur de bande spectrale d'une sous-porteuse unique ; et, si toutes les ressources spectrales dans la gamme de fréquences d'une fréquence centrale libre sont des ressources spectrales libres, la détermination de la fréquence centrale libre comme étant une fréquence centrale disponible, puis l'obtention de l'ensemble des fréquences centrales disponibles de la deuxième liaison.

6. Procédé pour établir une interconnexion optique multi-porteuse, comprenant :

la détermination (S101d), par un premier noeud, du nombre de sous-porteuses, de la largeur de bande spectrale d'une sous-porteuse unique, et d'une gamme de chevauchement de ressources spectrales entre des sous-porteuses voisines d'une connexion ; et la détermination d'une largeur de bande spectrale continue occupée par toutes les sous-porteuses selon le nombre de sous-porteuses, la largeur de bande spectrale d'une sous-porteuse unique, et la gamme de chevauchement de ressources spectrales entre des sous-porteuses voisines ;

l'obtention (S102d), par le premier noeud, d'un premier ensemble de fréquences centrales disponibles d'une première liaison selon la largeur de bande spectrale continue occupée par toutes les sous-porteuses, dans lequel la première liaison est une liaison entre le premier noeud et un noeud voisin dans une direction allant du premier noeud à un deuxième noeud ;

l'envoi (S103d), par le premier noeud, d'un message de demande au noeud voisin dans la direction allant du premier noeud au deuxième noeud, dans lequel le message de demande achemine au moins le nombre de sous-porteuses, des informations concernant la largeur de bande spectrale d'une sous-porteuse unique, des informations d'attributs de chevauchement de sous-porteuses, et des informations concernant le premier ensemble de fréquences centrales disponibles, et les informations d'attributs de chevauchement de sous-porteuses indiquent la gamme de chevauchement de ressources spectrales entre des sous-porteuses voisines ; et

la réception (S104d), par le premier noeud, d'un message de réponse, l'extraction d'informations concernant une fréquence centrale continue de sous-porteuses à partir du message de réponse, et l'obtention de la fréquence centrale continue des sous-porteuses ; et l'établissement (S105d) d'une interconnexion optique sur la base d'une gamme spectrale déterminée selon la gamme de chevauchement de ressources spectrales entre des sous-porteuses voisines, le nombre de sous-porteuses, la largeur de bande spectrale d'une sous-porteuse unique, et la fréquence centrale continue des sous-porteuses, dans lequel

la fréquence centrale continue des sous-porteuses est une fréquence centrale disponible sélectionnée par le deuxième noeud dans un deuxième ensemble de fréquences centrales disponibles ; et le deuxième ensemble de fréquences centrales disponibles est une intersection d'ensembles de fréquences centrales disponibles de toutes les liaisons parcourues par la connexion, dans lequel les ensembles de fréquences centrales disponibles sont obtenus selon la largeur de bande spectrale continue occupée par toutes les sous-porteuses.

7. Procédé selon la revendication 6, dans lequel l'obtention, par le premier noeud, d'un premier ensemble de fréquences centrales disponibles d'une première liaison selon la largeur de bande spectrale continue occupée par toutes les sous-porteuses comprend plus précisément :

la détermination, par le premier noeud, d'une gamme de fréquences de chaque fréquence centrale libre de la première liaison selon la largeur de bande spectrale continue occupée par toutes les sous-porteuses ; et, si toutes les ressources spectrales dans la gamme de fréquences d'une fréquence centrale libre sont des ressources spectrales libres, la détermination de la fréquence centrale libre comme étant une fréquence centrale disponible, puis l'obtention du premier ensemble des fréquences centrales disponibles.

8. Procédé pour établir une interconnexion optique multi-porteuse, comprenant :

la réception (S101e), par un deuxième noeud, d'un message de demande, et l'extraction du nombre de sous-porteuses, d'informations concernant la largeur de bande spectrale d'une sous-porteuse unique, d'informations d'attributs de chevauchement de sous-porteuses, et d'informations concernant un deuxième ensemble de fréquences centrales disponibles à partir du message de demande, dans lequel les informations d'attributs de chevauchement de sous-porteuses indiquent une gamme de chevauchement de ressources spectrales entre des sous-porteuses voisines, qui est déterminée par un premier noeud, le deuxième ensemble de fréquences centrales disponibles est une intersection d'ensembles de fréquences centrales disponibles de toutes les liaisons parcourues par une connexion, les ensembles de fréquences centrales disponibles sont obtenus selon une largeur de bande spectrale continue occupée par toutes les sous-porteuses, et la largeur de bande spectrale continue occupée par toutes les sous-porteuses est déterminée selon le nombre de sous-porteuses, la largeur de bande spectrale d'une sous-porteuse unique, et la gamme de chevauchement de ressources spectrales entre des sous-porteuses voisines ; et

la sélection (S 102e), par le deuxième noeud, d'une fréquence centrale disponible dans le deuxième ensemble de fréquences centrales disponibles en tant que fréquence centrale continue de sous-porteuses de la connexion ; et l'établissement (S103e) d'une interconnexion optique sur la base d'une gamme spectrale déterminée selon la gamme de chevauchement de ressources spectrales entre des sous-porteuses voisines, le nombre de sous-porteuses, la largeur de bande spectrale d'une sous-porteuse unique, et la fréquence centrale continue des sous-porteuses.

9. Procédé pour établir une interconnexion optique multi-porteuse, comprenant :

la réception (S101f), par un troisième noeud, d'un message de demande, et l'extraction du nombre de sous-porteuses, d'informations concernant la largeur de bande spectrale d'une sous-porteuse unique, d'informations d'attributs de chevauchement de sous-porteuses, et d'informations concernant un troisième ensemble de fréquences centrales disponibles à partir du message de demande, dans lequel les informations d'attributs de chevauchement de sous-porteuses indiquent une gamme de chevauchement de ressources spectrales entre des sous-porteuses voisines, qui est déterminée par un premier noeud, le troisième ensemble de fréquences centrales disponibles est une intersection d'ensembles de fréquences centrales disponibles de toutes les liaisons parcourues par une connexion entre le premier noeud et le troisième noeud, et les ensembles de fréquences centrales disponibles sont obtenus selon une largeur de bande spectrale continue occupée par toutes les sous-porteuses ;

la détermination (S102f), par le troisième noeud, de la largeur de bande spectrale continue occupée par toutes les sous-porteuses selon le nombre de sous-porteuses, la largeur de bande spectrale d'une sous-porteuse unique, et la gamme de chevauchement de ressources spectrales entre des sous-porteuses voisines ;

l'obtention (S103f), par le troisième noeud, d'un ensemble de fréquences centrales disponibles d'une deuxième liaison selon la largeur de bande spectrale continue occupée par toutes les sous-porteuses, et le calcul d'une intersection de l'ensemble de fréquences centrales disponibles de la deuxième liaison et du troisième ensemble de fréquences centrales disponibles en tant que quatrième ensemble de fréquences centrales disponibles, dans lequel la deuxième liaison est une liaison entre le troisième noeud et un noeud voisin dans une direction allant du premier noeud à un deuxième noeud ;

l'envoi (S104f), par le troisième noeud, d'un message de demande au noeud voisin dans la direction allant du premier noeud au deuxième noeud, dans lequel le message de demande achemine au moins le nombre de sous-porteuses, les informations concernant la largeur de bande spectrale d'une sous-porteuse unique, les informations d'attributs de chevauchement de sous-porteuses, et des informations concernant le quatrième ensemble de fréquences centrales disponibles ; et

la réception (S105f), par le troisième noeud, d'un message de réponse, l'extraction d'informations concernant une fréquence centrale continue de sous-porteuses à partir du message de réponse, et l'obtention de la fréquence centrale continue des sous-porteuses ; et l'établissement (S106f) d'une interconnexion optique sur la base d'une gamme spectrale déterminée selon la gamme de chevauchement de ressources spectrales entre des sous-porteuses voisines, le nombre de sous-porteuses, la largeur de bande spectrale d'une sous-porteuse unique, et la fréquence centrale continue des sous-porteuses, dans lequel

la fréquence centrale continue des sous-porteuses est une fréquence centrale disponible sélectionnée par le deuxième noeud dans un deuxième ensemble de fréquences centrales disponibles ; et le deuxième ensemble de fréquences centrales disponibles est une intersection d'ensembles de fréquences centrales disponibles de toutes les liaisons parcourues par la connexion, dans lequel les ensembles de fréquences centrales disponibles sont obtenus selon la largeur de bande spectrale continue occupée par toutes les sous-porteuses.

**10.** Procédé selon la revendication 9, dans lequel l'obtention, par le troisième noeud, d'un ensemble de fréquences centrales disponibles d'une deuxième liaison selon la largeur de bande spectrale continue occupée par toutes les sous-porteuses comprend plus précisément :

la détermination, par le troisième noeud, d'une gamme de fréquences de chaque fréquence centrale libre de la deuxième liaison selon la largeur de bande spectrale continue occupée par toutes les sous-porteuses ; et, si toutes les ressources spectrales dans la gamme de fréquences d'une fréquence centrale libre sont des ressources spectrales libres, la détermination de la fréquence centrale libre comme étant une fréquence centrale disponible, puis l'obtention de l'ensemble des fréquences centrales disponibles de la deuxième liaison.

**11.** Dispositif de noeud, comprenant une première unité de détermination (701), une première unité de traitement (702), une première unité d'envoi (703), une première unité de réception (704), et une première unité d'établissement d'interconnexion (705), dans lequel

la première unité de détermination (701) est configurée pour déterminer le nombre de sous-porteuses, la largeur de bande spectrale d'une sous-porteuse unique, et le non-chevauchement de ressources spectrales entre des sous-porteuses voisines d'une connexion ;

la première unité de traitement (702) est configurée pour obtenir un premier ensemble de fréquences centrales disponibles d'une première liaison selon la largeur de bande spectrale d'une sous-porteuse unique, dans lequel la première liaison est une liaison entre le dispositif de noeud et un dispositif de noeud voisin dans une direction allant du dispositif de noeud à un deuxième dispositif de noeud ;

la première unité d'envoi (703) est configurée pour envoyer un message de demande au dispositif de noeud voisin dans la direction allant du dispositif de noeud au deuxième dispositif de noeud, dans lequel le message de demande achemine au moins le nombre de sous-porteuses, des informations concernant la largeur de bande spectrale d'une sous-porteuse unique, des informations d'attributs de chevauchement de sous-porteuses, et des informations concernant le premier ensemble de fréquences centrales disponibles, et les informations d'attributs de chevauchement de sous-porteuses indiquent un non-chevauchement de ressources spectrales entre des sous-porteuses voisines ;

la première unité de réception (704) est configurée pour recevoir un message de réponse, extraire des informations concernant un ensemble de fréquences centrales de sous-porteuses à partir du message de réponse, et obtenir un ensemble de fréquences centrales des sous-porteuses de la connexion, dans lequel l'ensemble de fréquences centrales des sous-porteuses est composé de fréquences centrales disponibles ayant une gamme de fréquences de non-chevauchement qui sont sélectionnées par le deuxième dispositif de noeud dans un deuxième ensemble de fréquences centrales disponibles ; et le deuxième ensemble de fréquences centrales disponibles est une intersection d'ensembles de fréquences centrales disponibles de toutes les liaisons parcourues par la connexion, dans lequel les ensembles de fréquences centrales disponibles sont obtenus selon la largeur de bande spectrale d'une sous-porteuse unique ; et

la première unité d'établissement d'interconnexion (705) est configurée pour établir une interconnexion optique sur la base d'une gamme spectrale déterminée selon le non-chevauchement de ressources spectrales entre des sous-porteuses voisines, l'ensemble de fréquences centrales des sous-porteuses, et la largeur de bande spectrale d'une sous-porteuse unique.

12. Dispositif de noeud, comprenant une deuxième unité de réception (801), une deuxième unité de traitement (802), et une deuxième unité d'établissement d'interconnexion (803), dans lequel

la deuxième unité de réception (801) est configurée pour recevoir un message de demande, et extraire le nombre de sous-porteuses, des informations concernant la largeur de bande spectrale d'une sous-porteuse unique, des informations d'attributs de chevauchement de sous-porteuses, et des informations concernant un deuxième ensemble de fréquences centrales disponibles à partir du message de demande, dans lequel les informations d'attributs de chevauchement de sous-porteuses indiquent un non-chevauchement de ressources spectrales entre des sous-porteuses voisines, qui est déterminé par un premier dispositif de noeud, le deuxième ensemble de fréquences centrales disponibles est une intersection d'ensembles de fréquences centrales disponibles de toutes les liaisons parcourues par une connexion, et les ensembles de fréquences centrales disponibles sont obtenus selon la largeur de bande spectrale d'une sous-porteuse unique ;

la deuxième unité de traitement (802) est configurée pour sélectionner des fréquences centrales disponibles ayant une gamme de fréquences de non-chevauchement dans le deuxième ensemble de fréquences centrales disponibles afin de former un ensemble de fréquences centrales de sous-porteuses de la connexion ; et

la deuxième unité d'établissement d'interconnexion (803) est configurée pour établir une interconnexion optique sur la base d'une gamme spectrale déterminée selon le non-chevauchement de ressources spectrales entre des sous-porteuses voisines, l'ensemble de fréquences centrales des sous-porteuses, et la largeur de bande spectrale d'une sous-porteuse unique.

13. Dispositif de noeud, comprenant une troisième unité de réception (901), une troisième unité de traitement (902), une troisième unité d'envoi (903), et une troisième unité d'établissement d'interconnexion (904), dans lequel

la troisième unité de réception (901) est configurée pour recevoir un message de demande, et extraire le nombre de sous-porteuses, des informations concernant la largeur de bande spectrale d'une sous-porteuse unique, des informations d'attributs de chevauchement de sous-porteuses, et des informations concernant un troisième ensemble de fréquences centrales disponibles à partir du message de demande, dans lequel les informations d'attributs de chevauchement de sous-porteuses indiquent un non-chevauchement de ressources spectrales entre des sous-porteuses voisines, qui est déterminé par un premier dispositif de noeud, le troisième ensemble de fréquences centrales disponibles est une intersection d'ensembles de fréquences centrales disponibles de toutes les liaisons parcourues par une connexion entre le premier dispositif de noeud et le dispositif de noeud, et les ensembles de fréquences centrales disponibles sont obtenus selon la largeur de bande spectrale d'une sous-porteuse unique ; et configuré en outre pour recevoir un message de réponse, extraire des informations concernant un ensemble de fréquences centrales de sous-porteuses à partir du message de réponse, et obtenir un ensemble de fréquences centrales des sous-porteuses de la connexion, dans lequel l'ensemble de fréquences centrales des sous-porteuses est composé de fréquences centrales disponibles ayant une gamme de fréquences de non-chevauchement qui sont sélectionnées par un deuxième dispositif de noeud dans un deuxième ensemble de fréquences centrales disponibles, le deuxième ensemble de fréquences centrales disponibles est une intersection d'ensembles de fréquences centrales disponibles de toutes les liaisons parcourues par la connexion, et les ensembles de fréquences centrales disponibles sont obtenus selon la largeur de bande spectrale d'une sous-porteuse unique ;

la troisième unité de traitement (902) est configurée pour obtenir un ensemble de fréquences centrales disponibles d'une deuxième liaison selon la largeur de bande spectrale d'une sous-porteuse unique, et calculer une intersection de l'ensemble de fréquences centrales disponibles de la deuxième liaison et du troisième ensemble de fréquences centrales disponibles en tant que quatrième ensemble de fréquences centrales disponibles, dans lequel la deuxième liaison est une liaison entre le dispositif de noeud et un dispositif de noeud voisin dans une direction allant du premier dispositif de noeud au deuxième dispositif de noeud ;

la troisième unité d'envoi (903) est configurée pour envoyer un message de demande au dispositif de noeud voisin dans la direction allant du premier dispositif de noeud au deuxième dispositif de noeud, dans lequel le message de demande achemine au moins le nombre de sous-porteuses, les informations concernant la largeur de bande spectrale d'une sous-porteuse unique, les informations d'attributs de chevauchement de sous-porteuses, et des informations concernant le quatrième ensemble de fréquences centrales disponibles ; et

la troisième unité d'établissement d'interconnexion (904) est configurée pour établir une interconnexion optique sur la base d'une gamme spectrale déterminée selon le non-chevauchement de ressources spectrales entre des sous-porteuses voisines, l'ensemble de fréquences centrales des sous-porteuses, et la largeur de bande spectrale d'une sous-porteuse unique.

**14.** Dispositif de noeud, comprenant une première unité de détermination (1001), une première unité de traitement (1002), une première unité d'envoi (1003), une première unité de réception (1004), et une première unité d'établissement d'interconnexion (1005), dans lequel

la première unité de détermination (1001) est configurée pour déterminer le nombre de sous-porteuses, la largeur de bande spectrale d'une sous-porteuse unique, et une gamme de chevauchement de ressources spectrales entre des sous-porteuses voisines d'une connexion, et déterminer une largeur de bande spectrale continue occupée par toutes les sous-porteuses selon le nombre de sous-porteuses, la largeur de bande spectrale d'une sous-porteuse unique, et la gamme de chevauchement de ressources spectrales entre des sous-porteuses voisines ;

la première unité de traitement (1002) est configurée pour obtenir un premier ensemble de fréquences centrales disponibles d'une première liaison selon la largeur de bande spectrale continue occupée par toutes les sous-porteuses, dans lequel la première liaison est une liaison entre le dispositif de noeud et un dispositif de noeud voisin dans une direction allant du dispositif de noeud à un deuxième dispositif de noeud ;

la première unité d'envoi (1003) est configurée pour envoyer un message de demande au dispositif de noeud voisin dans la direction allant du dispositif de noeud au deuxième dispositif de noeud, dans lequel le message de demande achemine au moins le nombre de sous-porteuses, des informations concernant la largeur de bande spectrale d'une sous-porteuse unique, des informations d'attributs de chevauchement de sous-porteuses, et des informations concernant le premier ensemble de fréquences centrales disponibles, et les informations d'attributs de chevauchement de sous-porteuses indiquent la gamme de chevauchement de ressources spectrales entre des sous-porteuses voisines ;

la première unité de réception (1004) est configurée pour recevoir un message de réponse, extraire des informations concernant une fréquence centrale continue des sous-porteuses à partir du message de réponse, et obtenir la fréquence centrale continue des sous-porteuses, dans lequel la fréquence centrale continue des sous-porteuses est une fréquence centrale disponible sélectionnée par le deuxième dispositif de noeud dans un deuxième ensemble de fréquences centrales disponibles, le deuxième ensemble de fréquences centrales disponibles est une intersection d'ensembles de fréquences centrales disponibles de toutes les liaisons parcourues par la connexion, et les ensembles de fréquences centrales disponibles sont obtenus selon la largeur de bande spectrale continue occupée par toutes les sous-porteuses ; et

la première unité d'établissement d'interconnexion (1005) est configurée pour établir une interconnexion optique sur la base d'une gamme spectrale déterminée selon la gamme de chevauchement de ressources spectrales entre des sous-porteuses voisines, le nombre de sous-porteuses, la largeur de bande spectrale d'une sous-porteuse unique, et la fréquence centrale continue des sous-porteuses.

**15.** Dispositif de noeud, comprenant une deuxième unité de réception (1101), une deuxième unité de traitement (1102), et une deuxième unité d'établissement d'interconnexion (1103), dans lequel

la deuxième unité de réception (1101) est configurée pour recevoir un message de demande, et extraire le nombre de sous-porteuses, des informations concernant la largeur de bande spectrale d'une sous-porteuse unique, des informations d'attributs de chevauchement de sous-porteuses, et des informations concernant un deuxième ensemble de fréquences centrales disponibles à partir du message de demande, dans lequel les informations d'attributs de chevauchement de sous-porteuses indiquent une gamme de chevauchement de ressources spectrales entre des sous-porteuses voisines, qui est déterminée par un premier dispositif de noeud, le deuxième ensemble de fréquences centrales disponibles est une intersection d'ensembles de fréquences centrales disponibles de toutes les liaisons parcourues par une connexion, les ensembles de fréquences centrales disponibles sont obtenus selon une largeur de bande spectrale continue occupée par toutes les sous-porteuses, et la largeur de bande spectrale continue occupée par toutes les sous-porteuses est déterminée selon le nombre de sous-porteuses, la largeur de bande spectrale d'une sous-porteuse unique, et la gamme de chevauchement de ressources spectrales entre des sous-porteuses voisines ;

la deuxième unité de traitement (1102) est configurée pour sélectionner une fréquence centrale disponible dans le deuxième ensemble de fréquences centrales disponibles en tant que fréquence centrale continue de sous-porteuses de la connexion ; et

la deuxième unité d'établissement d'interconnexion (1103) est configurée pour établir une interconnexion optique sur la base d'une gamme spectrale déterminée selon la gamme de chevauchement de ressources spectrales entre des sous-porteuses voisines, le nombre de sous-porteuses, la largeur de bande spectrale d'une sous-porteuse unique, et la fréquence centrale continue des sous-porteuses.

**16.** Dispositif de noeud, comprenant une troisième unité de réception (1201), une troisième unité de détermination (1202), une troisième unité de traitement (1203), une troisième unité d'envoi (1204), et une troisième unité d'établissement d'interconnexion (1205), dans lequel

la troisième unité de réception (1201) est configurée pour recevoir un message de demande, et extraire le nombre de sous-porteuses, des informations concernant la largeur de bande spectrale d'une sous-porteuse unique, des informations d'attributs de chevauchement de sous-porteuses, et des informations concernant un troisième ensemble de fréquences centrales disponibles à partir du message de demande, dans lequel les informations d'attributs de chevauchement de sous-porteuses indiquent une gamme de chevauchement de ressources spectrales entre des sous-porteuses voisines, qui est déterminée par un premier dispositif de noeud, le troisième ensemble de fréquences centrales disponibles est une intersection d'ensembles de fréquences centrales disponibles de toutes les liaisons parcourues par une connexion entre le premier dispositif de noeud et le dispositif de noeud, et les ensembles de fréquences centrales disponibles sont obtenus selon une largeur de bande spectrale continue occupée par toutes les sous-porteuses ; et configuré en outre pour recevoir un message de réponse, extraire des informations concernant une fréquence centrale continue des sous-porteuses à partir du message de réponse, et obtenir la fréquence centrale continue des sous-porteuses, dans lequel la fréquence centrale continue des sous-porteuses est une fréquence centrale disponible sélectionnée par un deuxième dispositif de noeud dans un deuxième ensemble de fréquences centrales disponibles, le deuxième ensemble de fréquences centrales disponibles est une intersection d'ensembles de fréquences centrales disponibles de toutes les liaisons parcourues par la connexion, et les ensembles de fréquences centrales disponibles sont obtenus selon la largeur de bande spectrale continue occupée par toutes les sous-porteuses ;

la troisième unité de détermination (1202) est configurée pour déterminer la largeur de bande spectrale continue occupée par toutes les sous-porteuses selon le nombre de sous-porteuses, la largeur de bande spectrale d'une sous-porteuse unique, et la gamme de chevauchement de ressources spectrales entre des sous-porteuses voisines ;

la troisième unité de traitement (1203) est configurée pour obtenir un ensemble de fréquences centrales disponibles d'une deuxième liaison selon la largeur de bande spectrale continue occupée par toutes les sous-porteuses, et calculer une intersection de l'ensemble de fréquences centrales disponibles de la deuxième liaison et du troisième ensemble de fréquences centrales disponibles en tant que quatrième ensemble de fréquences centrales disponibles, dans lequel la deuxième liaison est une liaison entre le dispositif de noeud et un dispositif de noeud voisin dans une direction allant du premier dispositif de noeud au deuxième dispositif de noeud ;

la troisième unité d'envoi (1204) est configurée pour envoyer un message de demande au dispositif de noeud voisin dans la direction allant du premier dispositif de noeud au deuxième dispositif de noeud, dans lequel le message de demande achemine au moins le nombre de sous-porteuses, les informations concernant la largeur de bande spectrale d'une sous-porteuse unique, les informations d'attributs de chevauchement de sous-porteuses, et des informations concernant le quatrième ensemble de fréquences centrales disponibles ; et

la troisième unité d'établissement d'interconnexion (1205) est configurée pour établir une interconnexion optique sur la base d'une gamme spectrale déterminée selon la gamme de chevauchement de ressources spectrales entre des sous-porteuses voisines, le nombre de sous-porteuses, la largeur de bande spectrale d'une sous-porteuse unique, et la fréquence centrale continue des sous-porteuses.

A first node determines the number of subcarriers, spectrum bandwidth of a single subcarrier, and non-overlap of spectrum resources between neighboring subcarriers of a connection

S101a

The first node obtains a first set of available center frequencies of a first link according to the spectrum bandwidth of a single subcarrier

S102a

The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies

S103a

The first node receives a response message, extracts information on a set of center frequencies of subcarriers out of the response message, and obtains a set of center frequencies of subcarriers of the connection

S104a

Establish an optical cross-connection based on a spectrum range determined according to the non-overlap of spectrum resources between neighboring subcarriers, the set of frequencies of the subcarriers, and the spectrum bandwidth of a single subcarrier

S105a

FIG. 1a

A second node receives a request message, and extracts the number of subcarriers, information on spectrum bandwidth of a single subcarrier, subcarrier overlap attribute information, and information on a second set of available center frequencies out of the request message ⟋ S101b

The second node selects available center frequencies with a non-overlap frequency range from the second set of available center frequencies to form a set of center frequencies of subcarriers of the connection ⟋ S102b

Establish an optical cross-connection based on a spectrum range determined according to the non-overlap of spectrum resources between neighboring subcarriers, the set of center frequencies of the subcarriers, the spectrum bandwidth of a single subcarrier ⟋ S103b

FIG. 1b

A third node receives a request message, and extracts the number of subcarriers, information on spectrum bandwidth of a single subcarrier, subcarrier overlap attribute information, and information on a third set of available center frequencies out of the request message — S101c

The third node obtains a set of available center frequencies of a second link according to the spectrum bandwidth of a single subcarrier, and calculates an intersection of the set of available center frequencies of the second link and the third set of available center frequencies to serve as a fourth set of available center frequencies — S102c

The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies — S103c

The third node receives a response message, extracts information on a set of center frequencies of subcarriers out of the response message, and obtains a set of center frequencies of subcarriers of the connection — S104c

Establish an optical cross-connection based on a spectrum range determined according to the non-overlap of spectrum resources between neighboring subcarriers, the set of center frequencies of the subcarriers, and the spectrum bandwidth of a single subcarrier — S105c

FIG. 1c

A first node determines the number of subcarriers, spectrum bandwidth of a single subcarrier, and an overlap range of spectrum resources between neighboring subcarriers of a connection; and determines a continuous spectrum bandwidth occupied by all subcarriers according to the number of subcarriers, the spectrum bandwidth of a single subcarrier, and the overlap range of spectrum resources between neighboring subcarriers — S101d

The first node obtains a first set of available center frequencies of a first link according to the continuous spectrum bandwidth occupied by all subcarriers — S102d

The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies — S103d

The first node receives a response message, extracts information on a continuous center frequency of subcarriers out of the response message, and obtains the continuous center frequency of the subcarriers — S104d

Establish an optical cross-connection based on a spectrum range determined according to the overlap range of spectrum resources between neighboring subcarriers, the number of subcarriers, the spectrum bandwidth of a single subcarrier, and the continuous center frequency of the subcarriers — S105d

FIG. 1d

A second node receives a request message, and extracts the number of subcarriers, information on spectrum bandwidth of a single subcarrier, subcarrier overlap attribute information, and information on a second set of available center frequencies out of the request message, where the subcarrier overlap attribute information indicates an overlap range of spectrum resources between neighboring subcarriers which is determined by a first node, the second set of available center frequencies is an intersection of sets of available center frequencies of all links traversed by a connection, the sets of available center frequencies are obtained according to a continuous spectrum bandwidth occupied by all subcarriers, and the continuous spectrum bandwidth occupied by all subcarriers is determined according to the number of subcarriers, the spectrum bandwidth of a single subcarrier, and the overlap range of spectrum resources between neighboring subcarriers — S101e

The second node selects an available center frequency from the second set of available center frequencies to serve as a continuous center frequency of subcarriers of the connection — S102e

The third node sends a request message to the neighboring node in the direction from the first node to the second node, where the request message carries at least the number of subcarriers, information on the spectrum bandwidth of a single subcarrier, subcarrier overlap attribute information, and information on the fourth set of available center frequencies — S103e

The third node receives a response message, extracts information on a set of center frequencies of subcarriers out of the response message, and obtains a set of center frequencies of subcarriers of the connection — S104e

Establish an optical cross-connection based on a spectrum range determined according to non-overlap of spectrum resources between neighboring subcarriers, the set of center frequencies of the subcarriers, and the spectrum bandwidth of a single subcarrier — S105e

FIG. 1e

A third node receives a request message, and extracts the number of subcarriers, information on spectrum bandwidth of a single subcarrier, subcarrier overlap attribute information, and information on a third set of available center frequencies out of the request message, where the subcarrier overlap attribute information indicates an overlap range of spectrum resources between neighboring subcarriers which is determined by a first node, the third set of available center frequencies is an intersection of sets of available center frequencies of all links traversed by a connection between the first node and the third node, and the sets of available center frequencies are obtained according to a continuous spectrum bandwidth occupied by all subcarriers — S101f

The third node determines the continuous spectrum bandwidth occupied by all subcarriers according to the number of subcarriers, the spectrum bandwidth of a single subcarrier, and the overlap range of spectrum resources between neighboring subcarriers — S102f

The third node obtains a set of available center frequencies of a second link according to the continuous spectrum bandwidth occupied by all subcarriers, and calculates an intersection of the set of available center frequencies of the second link and the third set of available center frequencies to serve as a fourth set of available center frequencies, where the second link is a link between the third node and a neighboring node in a direction from the first node to a second node — S103f

The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies — S104f

The third node receives a response message, extracts information on a continuous center frequency of subcarriers out of the response message, and obtains the continuous center frequency of the subcarriers — S105f

Establish an optical cross-connection based on a spectrum range determined according to the overlap range of spectrum resources between neighboring subcarriers, the number of subcarriers, the spectrum bandwidth of a single subcarrier, and the continuous center frequency of the subcarriers — S106f

FIG. 1f

A first node determines the number of subcarriers, spectrum bandwidth of a single subcarrier, and an overlap range of spectrum resources between neighboring subcarriers of a connection; and determines a continuous spectrum bandwidth occupied by all subcarriers according to the number of subcarriers, the spectrum bandwidth of a single subcarrier, and the overlap range — S101g

The first node obtains a first set of available center frequencies of a first link according to the continuous spectrum bandwidth occupied by all subcarriers — S102g

The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies — S103g

The first node receives a response message, extracts information on a minimum center frequency of subcarriers out of the response message, and obtains the minimum center frequency of the subcarriers — S104g

Establish an optical cross-connection based on a spectrum range determined according to the overlap range of spectrum resources between neighboring subcarriers, the number of subcarriers, the spectrum bandwidth of a single subcarrier, and the minimum center frequency of the subcarriers — S105g

FIG. 1g

A second node receives a request message, and extracts the number of subcarriers, information on spectrum bandwidth of a single subcarrier, subcarrier overlap attribute information, and information on a second set of available center frequencies out of the request message — S101h

The second node selects an available center frequency from the second set of available center frequencies to serve as a continuous center frequency of subcarriers of the connection; and obtains a minimum center frequency of subcarriers according to the continuous center frequency of the subcarriers, the number of subcarriers, the spectrum bandwidth of a single subcarrier, and the overlap range of spectrum resources between neighboring subcarriers — S102h

Establish an optical cross-connection based on a spectrum range determined according to the overlap range of spectrum resources between neighboring subcarriers, the number of subcarriers, the spectrum bandwidth of a single subcarrier, and the minimum center frequency of the subcarriers — S103h

FIG. 1h

A third node receives a request message, and extracts the number of subcarriers, information on spectrum bandwidth of a single subcarrier, subcarrier overlap attribute information, and information on a third set of available center frequencies out of the request message — S101i

The third node determines the continuous spectrum bandwidth occupied by all subcarriers according to the number of subcarriers, the spectrum bandwidth of a single subcarrier, and the overlap range of spectrum resources between neighboring subcarriers — S102i

The third node obtains a set of available center frequencies of a second link according to the continuous spectrum bandwidth occupied by all subcarriers, and calculates an intersection of the set of available center frequencies of the second link and the third set of available center frequencies to serve as a fourth set of available center frequencies — S103i

The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies — S104i

The third node receives a response message, extracts information on a minimum center frequency of subcarriers out of the response message, and obtains the minimum center frequency of the subcarriers — S105i

Establish an optical cross-connection based on a spectrum range determined according to the overlap range of spectrum resources between neighboring subcarriers, the number of subcarriers, the spectrum bandwidth of a single subcarrier, and the minimum center frequency of the subcarriers — S106i

FIG. 1i

A first node determines the number of subcarriers, spectrum bandwidth of a single subcarrier, and an overlap range of spectrum resources between neighboring subcarriers of a connection; and determines a continuous spectrum bandwidth occupied by all subcarriers according to the number of subcarriers, the spectrum bandwidth of a single subcarrier, and the overlap range ⟿ S101j

The first node obtains a first set of available center frequencies of a first link according to the continuous spectrum bandwidth occupied by all subcarriers ⟿ S102j

The first node sends a request message to the neighboring node in the direction from the first node to the second node, where the request message carries at least the number of subcarriers, information on the spectrum bandwidth of a single subcarrier, subcarrier overlap attribute information, and information on the first set of available center frequencies ⟿ S103j

The first node receives a response message, extracts information on a maximum center frequency of subcarriers out of the response message, and obtains the maximum center frequency of the subcarriers ⟿ S104j

Establish an optical cross-connection based on a spectrum range determined according to the overlap range of spectrum resources between neighboring subcarriers, the number of subcarriers, the spectrum bandwidth of a single subcarrier, and the maximum center frequency of the subcarriers ⟿ S105j

FIG. 1j

A second node receives a request message, and extracts the number of subcarriers, information on spectrum bandwidth of a single subcarrier, subcarrier overlap attribute information, and information on a second set of available center frequencies out of the request message — S101k

The second node selects an available center frequency from the second set of available center frequencies to serve as a continuous center frequency of subcarriers of the connection; and obtains a maximum center frequency of subcarriers according to the continuous center frequency of the subcarriers, the number of subcarriers, the spectrum bandwidth of a single subcarrier, and the overlap range of spectrum resources between neighboring subcarriers — S102k

Establish an optical cross-connection based on a spectrum range determined according to the overlap range of spectrum resources between neighboring subcarriers, the number of subcarriers, the spectrum bandwidth of a single subcarrier, and the maximum center frequency of the subcarriers — S103k

FIG. 1k

A third node receives a request message, and extracts the number of subcarriers, information on spectrum bandwidth of a single subcarrier, subcarrier overlap attribute information, and information on a third set of available center frequencies out of the request message — S1011

The third node determines the continuous spectrum bandwidth occupied by all subcarriers according to the number of subcarriers, the spectrum bandwidth of a single subcarrier, and the overlap range of spectrum resources between neighboring subcarriers — S1021

The third node obtains a set of available center frequencies of a second link according to the continuous spectrum bandwidth occupied by all subcarriers, and calculates an intersection of the set of available center frequencies of the second link and the third set of available center frequencies to serve as a fourth set of available center frequencies — S1031

The third node sends a request message to the neighboring node in the direction from the first node to the second node, where the request message carries at least the number of subcarriers, the information on the spectrum bandwidth of a single subcarrier, the subcarrier overlap attribute information, and information on the fourth set of available center frequencies — S1041

The third node receives a response message, extracts information on a maximum center frequency of subcarriers out of the response message, and obtains the maximum center frequency of the subcarriers — S1051

Establish an optical cross-connection based on a spectrum range determined according to the overlap range of spectrum resources between neighboring subcarriers, the number of subcarriers, the spectrum bandwidth of a single subcarrier, and the maximum center frequency of the subcarriers — S1061

FIG. 11

$$f_{-8} = 193.05\text{THz} \quad f_0 = 193.1\text{THz} \quad f_7 = 193.14375\text{THz}$$
$$n = -8 \qquad\qquad n = 0 \qquad\qquad n = 7$$

FIG. 2

FIG. 3

$f_0 = 193.1$THz

$f_n$ (n = -14  -13 -12 -11 -10  -9  -8  -7  -6  -5  -4  -3  -2  -1   0   1   2   3   4   5   6   7   8   9  10  11  12  13  14  15  16)

Idle spectrum resource

$f_{-10} = 193.0375$THz

$f_1 = 193.10625$THz

Idle spectrum resource

$f_5 = 193.13125$THz

$f_{13} = 193.18125$THz

FIG. 4a

EP 2 640 086 B1

FIG. 4b

EP 2 640 086 B1

$f_0 = 193.1$THz

$f_n$ (n = -14 -13 -12 -11 -10 -9 -8 -7 -6 -5 -4 -3 -2 -1  0  1  2  3  4  5  6  7  8  9  10  11  12  13  14  15  16)

Idle spectrum resource

Idle spectrum resource

$f_{10} = 193.0375$THz

$f_3 = 193.11875$THz

$f_7 = 193.14375$THz

$f_{13} = 193.18125$THz

FIG. 5a

EP 2 640 086 B1

FIG. 5b

| 0 | 1 | 2 | 3 |
|---|---|---|---|

0 1 2 3 4 5 6 7 8 9 0 1 2 3 4 5 6 7 8 9 0 1 2 3 4 5 6 7 8 9 0 1

| The number of subcarriers | Information on a spectrum bandwidth of a single subcarrier |
|---|---|
| Reserved | Subcarrier overlap attribute information |

FIG. 6a

| 0 | | | | | | | | | | 1 | | | | | | | | | | 2 | | | | | | | | | | 3 |
|---|---|---|---|---|---|---|---|---|---|---|---|---|---|---|---|---|---|---|---|---|---|---|---|---|---|---|---|---|---|---|

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 |
|---|---|---|---|---|---|---|---|---|---|---|---|---|---|---|---|---|---|---|---|---|---|---|---|---|---|---|---|---|---|---|---|

| Wavelength division type | Spectrum interval | Reserved | Center frequency coefficient |
|---|---|---|---|

FIG. 6b

FIG. 7

FIG. 8

FIG. 9

FIG. 10

FIG. 11

FIG. 12

1301

1302

First node device

Second node
device

FIG. 13